# EUROPEAN PATENT APPLICATION

(11) **EP 1 940 084 A1**
(43) Date of publication of application: **02.07.2008**
(21) Application number: 06790955.6
(22) Date of filing: 08.09.2006
(51) Int. Cl.: H04L 12/46

(54) **A SYSTEM FOR INTERCONNECTING THE BROADBAND WIRELESS NETWORK AND THE WIRED NETWORK**

(30) Priority: 09.09.2005 CN 200510098387; 09.09.2005 CN 200510099302; 09.09.2005 CN 200510099306; 09.09.2005 CN 200510099799; 23.09.2005 CN 200510105508; 26.09.2005 CN 200510105023
(71) Applicant: Huawei Technologies Co., Ltd., Longgang District Shenzhen Guangdong 518129 (CN)
(72) Inventor: ZHENG, Ruobin, Guangdong 518129 (CN)
(74) Representative: Pfenning, Meinig & Partner GbR
(86) International application number: PCT/CN2006/002320
(87) International publication number: WO 2007/028338

(57) **Abstract**

A system for interconnecting a broadband wireless network with a wired network comprises: as for a broadband wireless network required to be interconnected with a wired network, at an equipment selected in the corresponding broadband wireless access (BWA) network, setting an interface communicating with at least one kind of wired network; through communicating with an equipment of the at least one kind of wired network by the interface, transmitting information required to be transferred between the BWA network and the wired network; and then implementing the interconnection between the broadband wireless network and the wired network. For example, it can implement the interconnection between the worldwide interoperability for microwave access (WiMAX) network and the multi-service operator (MSO) network and/or the digital subscriber line (DSL) network as the wired network. Therefore, the implementation of the present invention enables subscribers of the broadband wireless network and subscribers of the wired network to inter-utilize the corresponding access network and to acquire the corresponding access services, and thus the services are developed for the subscribers more smartly and conveniently.

## Description

### Field of the Invention

The present invention relates to the field of network communication technology, and more particularly, to a technology for interconnecting a broadband wireless network with a wired network.

### Background of the Invention

With the rapid development of the communication technologies, the broadband wireless network has been widely used, which includes a broadband access network for providing network access services, and the broadband access network includes a broadband wireless access (BWA) equipment for offering broadband access services to subscribers conveniently.

Currently, there are proprietary protocol-based BWA equipments and standard protocol-based BWA equipments, for example, the BWA equipments defined by the Institute of Electrical and Electronics Engineers (IEEE) 802.16 Standard as a subset of a series of BWA technology standards. The BWA equipments include a Worldwide Interoperability for Microwave Access (WiMAX) equipment.

IEEE 802.16 is the first BWA standard, which includes two versions, namely, "802.16-2004", i.e., a broadband fixed wireless access version of the 802.16 standard; and "802.16e", i.e., a broadband mobile wireless access version of the 802.16 standard. In 802.16-2004, merely two network elements are defined, that is, a base station (BS) and a subscriber station (SS) interconnected with each other through the broadband fixed wireless access technology. In 802.16e, merely two network elements are defined as well, that is, BS and a mobile subscriber station (MS) interconnected with each other through the broadband mobile wireless access technology.

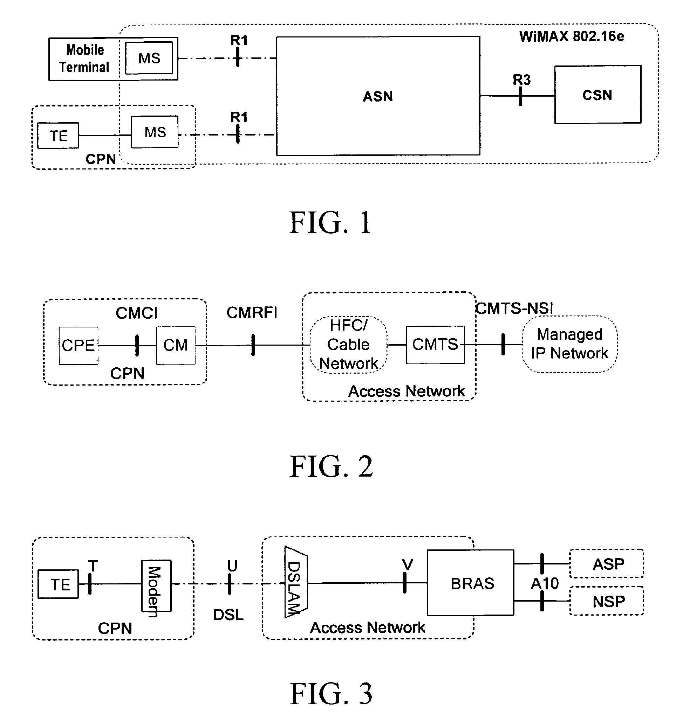

WiMAX Forum defines the access service network (ASN) and connection service network (CSN) on the basis of 802.16, which constitute the broadband WiMAX network for supporting fixed, nomadic, portable, simple IP mobile or full mobile access. Taking 802.16e as an example, FIG. 1 is a schematic view of the reference architecture of the WiMAX network.

In FIG. 1, R1 is a reference point between the MS/SS and the ASN, R3 is a reference point between the ASN and the CSN, and T is a reference point between the terminal equipment (TE) and the MS/SS in the CPN network. MS may be simply a mobile terminal, or may also be an MS attached with TE.

802.16e-based WiMAX mobile network employs a two-layer mobile management architecture, that is, employing the 802.16 security sub-layer Private Key Management version 2 (PKMv2) and Dynamic Host Configuration Protocol (DHCP), so as to provide terminal configuration, link control and management capability. In mobile applications, 802.16e-based WiMAX mobile network employs a mobile IP (MIP)-based Layer-3 mobile management between the ASN and the CSN.

The IP routing technology is employed between ASN outlet node and MS, which supports an IP Convergence Sub-layer (IP CS) at the airlink. The Layer 2 network bridging technology may also be employed between the ASN outlet node and the MS, for example, Ethernet bridging, which supports an Ethernet Convergence Sub-layer (ETH CS) at the airlink.

Currently, the widely applied wired network mainly includes a multi-service operator (MSO) network and a digital subscriber line (DSL) network, which are respectively illustrated below.

### I. MSO Network

In the prior art, along with the rapid development of digital technology, three main types of service networks, namely, computer network, public telecommunication network, and cable TV network begin to penetrate into each other. The hybrid fiber coaxial (HFC) network has become one of the important carriers for the three main networks in this field because of its excellent bandwidth resources, wide coverage, and desirable service integrating capability. The DOCSIS (HFC access network) is a bi-directional interactive broadband network built on the basis of cable TV coaxial network, which maintains the conventional analog transmission manner and makes full use of the existing cable TV coaxial cable resources, and thus provides various services such as telephone, broadcasting & TV, video on demand (VOD), Internet access, videoconferencing, and data for the subscribers without rerouting the distribution network. Therefore, the DOCSIS cable network has the advantages of low cost, wide bandwidth, and multiple services, which thus becomes an optimal solution in solving the last-mile access. PacketCable is an MSO broadband network standard on the basis of the DOCSIS.

The PacketCable is classified into an HFC access network, a customer premises network (CPN), and a Managed IP Network. FIG. 2 is a schematic view of the reference architecture of the DOCSIS-based PacketCable, in which network elements in the Managed IP Network are omitted. The main network elements of the HFC access network and the CPN include a cable modem termination system (CMTS), a HFC/Cable Network, a Cable Modem (CM), and a Multimedia Terminal Adapter (MTA) (not shown). CMCI is a reference point between the Customer Premise Equipment (CPE) and the CM in the CPN; CMRFI is a reference point between the CM and the HFC/Cable Network; and CMTS-NSI is an Ethernet Aggregation reference point between the CMTS and the Managed IP Network.

### II. DSL Network

The DSL network architecture has been gradually evolved from the point-to-point protocol (PPP) over ATM to the Ethernet Aggregation and Connectivity-based IP quality of service (QoS) enable architecture. FIG. 3 is a schematic view of a general structure of the enable architecture.

In FIG 3, T is a reference point between the TE and a DSL Modem in the CPN; U is a reference point between the DSL Modem and an access point digital subscriber line access multiplexer (DSLAM); V is an Ethernet Aggregation reference point between the DSLAM and a broadband remote access server (BRAS) in the access network; and A 10 is a reference point between the access network and the service provider (SP), which is capable of connecting an application service provider (ASP) to a network service provider (NSP) that possesses the access network, or connecting the NSP to a visitor access network under roaming. The CPN network and the access network are interconnected through the DSL access technology.

In the prior art, the interconnection between the broadband wireless network, such as WiMAX, and the wired network, such as the MSO broadband network and the DSL network, has definitely become a developing trend for the network communication. However, currently, there are no implementation solutions proposed for implementing the interconnection between the broadband wireless network and the wired network.

### SUMMARY OF THE INVENTION

The present invention is directed to a system for interconnecting a broadband wireless network with a wired network, so as to realize interconnections and intercommunications between the widely applied broadband wireless network and the wired network, thereby providing the subscribers with more flexible and convenient communication services.

The present invention is realized through the following technical solutions.

The present invention provides a system for interconnecting a broadband wireless network with a wired network, which includes a broadband wireless network, a wired network, and an interface for intercommunicating the broadband wireless network with the wired network.

The broadband wireless network is used for providing broadband wireless services, and includes a broadband wireless access (BWA) network for providing wireless access services.

The wired network is used for providing wired services, and includes a multi-service operator (MSO) network and/or a digital subscriber line (DSL) network.

The interface for intercommunicating the broadband wireless network with the wired network is set between the BWA network and the wired network and is interconnected with a reference point or an interface selected in the wired network. The interface is used for transmitting information required to be transferred between the BWA network and the wired network, so as to implement an interconnection between the broadband wireless network and the wired network, and the interface is an interface for intercommunicating the BWA network with the MSO network and/or the DSL network.

When the wired network is the MSO network, the system includes:
the interface, provided at an equipment in the BWA network, for being interconnected with a cable modem to radio frequency interface (CMRFI), in which the interface is used for transmitting information required to be transferred between the BWA network and the wired network, and the CMRFI is an interface in the MSO network;
alternatively,
the interface, provided at an equipment in the BWA network, for being interconnected with a cable modem termination system-network side interface (CMTS-NSI), in which the interface is used for transmitting information required to be transferred between the BWA network and the wired network, and the CMTS-NSI is an interface in the MSO network.

When the interface for being interconnected with the CMRFI is provided at the equipment in the BWA network, the system includes:
a base station equipment, serving as an equipment in the BWA network, for being interconnected with the MSO network at the CMRFI through wired cables, so as to implement the access services of wireless subscribers, and for transmitting information required to be exchanged between the wireless subscribers and a cable modem termination system (CMTS); and
the CMTS, for being interconnected with the base station equipment at the reference point CMRFI through wired cables, and for transmitting information required to be exchanged between a managed IP network and the base station equipment.

The base station equipment includes a base station wireless processing unit and a base station cable modem unit, in which
the base station wireless processing unit is used for implementing the access services of wireless subscribers, transferring data packets or frames of the accessed wireless subscribers to the base station cable modem unit, and transferring data packets or frames transferred from the base station cable modem unit to the wireless subscribers; and
the base station cable modem unit is used for being interconnected with the MSO network at the reference point CMRFI through at least one pair of coaxial cables, performing DOCSIS modulation on data packets or frames transferred from the base station wireless processing unit and then transferring the modulated data packets or frames to the CMTS of the MSO network, and performing DOCSIS demodulation on data packets or frames transferred from the CMTS and then transferring the demodulated data packets or frames to the base station wireless processing unit; in which in a mode based on Layer 3 routing, the base station cable modem unit supports processing of IP layer, DOCSIS data link layer, and DOCSIS physical layer, and in a mode based on Layer 2 bridging, the base station cable modem unit supports processing of DOCSIS data link layer and DOCSIS physical layer.

The base station equipment further includes a switching unit for exchanging data packets or frames between each base station wireless processing unit and each cable modem, in which in the mode based on Layer 3 routing, the switching unit is an IP switching unit, and in the mode based on Layer 2 bridging, the switching unit is a Layer 2 switching unit.

The CMTS includes an MSO cable modem unit and a wired service processing unit, in which
the MSO cable modem unit is used for being interconnected with the base station equipment at the reference point CMRFI through wired cables, performing DOCSIS modulation on data packets or frames transferred from the wired service processing unit and then transferring the modulated data packets or frames to the base station equipment, and performing DOCSIS demodulation on data packets or frames transferred from the base station equipment and then transferring the demodulated data packets or frames to the wired service processing unit; in the mode based on Layer 3 routing, the MSO cable modem unit supports the processing of IP layer, DOCSIS data link layer, and DOCSIS physical layer, and in the mode based on Layer 2 bridging, the MSO cable modem unit supports the processing of DOCSIS data link layer and DOCSIS physical layer; and
the wired service processing unit is used for processing data packets or frames transferred from the MSO cable modem unit and then transferring the processed data packets or frames to the managed IP network in the MSO network through wired cables, and processing data packets or frames transferred from the managed IP network in the MSO network through wired cables and then transferring the processed data packets or frames to the MSO cable modem unit; in the mode based on Layer 3 routing, the wired service processing unit performs the processing of wired data link layer and provides a wired cable interface as an uplink interface to access the managed IP network, and in the mode based on Layer 2 bridging, the wired service processing unit performs the processing of wired data link layer and IP layer forwarding and provides a wired cable interface as an uplink interface to access the managed IP network.

The CMTS further includes an MSO remote power supply unit, for converting mains input or direct current (DC) input into a high-voltage DC, and then outputting the high-voltage DC to the base station equipment through wired cables including twisted pairs, so as to remotely supply power to the base station equipment.

When the interface for being interconnected with the CMTS-NSI is provided at the equipment in the BWA network, the system includes:
the base station equipment, serving as an equipment in the BWA network, for being interconnected with the MSO network at the reference point CMTS-NSI through at least one pair of wired cables to implement the access services of wireless subscribers, processing data packets or frames of the accessed wireless subscribers and then transferring the processed data packets or frames to the managed IP network in the MSO network, and processing data packets or frames transferred from the managed IP network and then transferring the processed data packets or frames to the wireless subscribers.

The base station equipment includes the base station wireless processing unit and the base station wired service processing unit, in which
the base station wireless processing unit is used for implementing the access services of wireless subscribers, transferring data packets or frames of the accessed wireless subscribers to the base station wired service processing unit, and transferring data packets or frames transferred from the base station wired service processing unit to the wireless subscribers; and
the base station wired service processing unit is used for being interconnected with the MSO network at the reference point CMTS-NSI through wired cables, and transferring information required to be exchanged between the base station wireless processing unit and the managed IP network in the MSO network; in the mode based on Layer 3 routing, the base station wired service processing unit performs the processing of wired data link layer and provides a wired cable interface as an uplink interface to access the managed IP network, and in the mode based on Layer 2 bridging, the base station wired service processing unit performs the processing of wired data link layer and IP layer forwarding and provides a wired cable interface as an uplink interface to access the managed IP network.

The base station equipment further includes a switching unit, for exchanging data packets or frames between each base station wireless processing unit and each base station wired service processing unit, in which in the mode based on Layer 3 routing, the switching unit is an IP switching unit, and in the mode based on Layer 2 bridging, the switching unit is a Layer 2 switching unit.

When the wired network is the DSL network, the system includes:
the interface, provided at an equipment in the BWA network, for communicating with a DSL access multiplexer, and used for implementing an interconnection between the BWA network and the wired network at a reference point U between a DSL modem and the DSL access multiplexer in the DSL network, and used for transmitting information required to be transferred between the BWA network and the wired network through the reference point U;
alternatively,
the interface, provided at an equipment in the BWA network, used for communicating with the DSL access multiplexer in the DSL network and used for implementing an interconnection between the BWA network and the wired network at a reference point V between the DSL access multiplexer and a broadband access edge equipment in the DSL network, and used for transmitting information required to be transferred between the BWA network and the wired network through the reference point V.

When the interface for communicating with the DSL modem is provided at the equipment in the BWA network, the system includes the base station equipment and a digital subscriber line access multiplexer (DSLAM) equipment interconnected with each other, in which:
the base station equipment is used for being interconnected with the DSL network at the reference point U through wired cables to implement the access services of wireless subscribers, and transferring information required to be exchanged between the accessed wireless subscribers and the DSLAM equipment in the DSL network; and
the DSLAM equipment is used for being interconnected with the base station equipment at the reference point U through wired cables, and transmitting information required to be exchanged between the base station equipment and the broadband access edge equipment in the DSL network.

The base station equipment includes the base station wireless processing unit and a base station equipment DSL modem unit, in which
the base station wireless processing unit is used for implementing the access services of wireless subscribers, transferring data packets or frames of the accessed wireless subscribers to the base station equipment DSL modem unit, and transferring data packets or frames transferred from the base station equipment DSL modem unit to the wireless subscribers; and
the base station equipment DSL modem unit is used for being interconnected with the DSL network at the reference point U through at least one pair of twisted pairs, performing modulation on data packets or frames transferred from the base station wireless processing unit and then transferring the modulated data packets or frames to the DSLAM equipment in the DSL network, and performing demodulation on data packets or frames transferred from the DSLAM equipment and then transferring the demodulated data packets or frames to the base station wireless processing unit; in an IP-based mode in a path from terminal equipment (TE) to service provider (SP), the base station equipment DSL modem unit supports the processing of IP layer, Ethernet medium access control (MAC) layer, and DSL physical layer, and in a Point-to-Point Protocol over Ethernet (PPPoETH) mode and an Internet Protocol over Ethernet (IPoETH) mode, the base station equipment DSL modem unit supports the processing of Ethernet MAC layer and DSL physical layer.

The base station equipment further includes a switching unit, for exchanging data packets or frames between each base station wireless processing unit and each DSL modem, in which in the IP-based mode in the TE to SP path, the switching unit is an IP switching unit, and in the PPPoETH mode and the IPoETH mode, the switching unit is an Ethernet switching unit.

The DSLAM equipment includes a DSL modem unit and an Ethernet service processing unit, in which
the DSL modem unit is used for being interconnected with the base station equipment at the reference point U through at least one pair of twisted pairs, performing modulation on data packets or frames transferred from the Ethernet service processing unit and then transferring the modulated data packets or frames to the base station equipment, and performing demodulation on data packets or frames transferred from the base station equipment and then transferring the demodulated data packets or frames to the Ethernet service processing unit; in the IP-based mode in the TE to SP path, the DSL modem unit supports the processing of IP layer, Ethernet MAC layer, and DLS physical layer, and in the PPPoETH mode and IPoETH mode, the DSL modem unit supports the processing of Ethernet MAC layer and DSL physical layer; and
the Ethernet service processing unit is used for processing data packets or frames transferred from the DSL modem unit and then transferring the processed data packets or frames to the broadband access edge equipment in the DSL network, and processing data packets or frames transferred from the broadband access edge equipment in the DSL network and then transferring the processed data packets or frames to the DSL modem unit; in the IP-based mode in the TE to SP path, the Ethernet service processing unit performs the processing of Ethernet MAC layer and provides an Ethernet cable interface as an uplink interface/cascade interface to connect with the broadband access edge equipment, and in the PPPoETH mode and IPoETH mode, the Ethernet service processing unit performs the processing of Ethernet MAC layer and IP layer forwarding and provides an Ethernet cable interface as an uplink interface/cascade interface to connect with the broadband access edge equipment.

When the interface for communicating with the DSL access multiplexer in the DSL network is provided at the equipment in the BWA network, the system includes a base station transceiver equipment and the DSLAM equipment, in which
the base station transceiver equipment is used for being interconnected with the DSL network at the reference point U through wired cables to implement the access services of wireless subscribers, and transferring information required to be exchanged between the accessed wireless subscribers and the DSLAM equipment; and
the DSLAM equipment is used for being interconnected with the base station transceiver equipment at the reference point U through wired cables, and transferring information required to be exchanged between the base station transceiver equipment and an access network edge equipment in the DSL network.

The base station transceiver equipment includes the base station wireless processing unit and a base station transceiver DSL modem unit, in which:
the base station wireless processing unit is used for implementing the access services of wireless subscribers, transferring data packets or frames of the accessed wireless subscribers to the base station transceiver DSL modem unit, and transferring data packets or frames transferred from the base station transceiver DSL modem unit to the wireless subscribers; and
the base station transceiver DSL modem unit is used for being interconnected with the DSL network at the reference point U through at least one pair of twisted pairs, performing modulation on data packets or frames transferred from the base station wireless processing unit and then transferring the modulated data packets or frames to the DSLAM equipment in the DSL network, and performing demodulation on data packets or frames transferred from the DSLAM equipment and then transferring the demodulated data packets or frames to the base station wireless processing unit; in the IP-based mode in the TE to SP path, the base station transceiver DSL modem unit supports the processing of IP layer, Ethernet MAC layer, and DSL physical layer, and in the PPPoETH mode and IPoETH mode, the base station transceiver DSL modem unit supports the processing of Ethernet MAC layer and DSL physical layer.

The base station transceiver equipment further includes a switching unit for exchanging data packets or frames between each base station wireless processing unit and each DSL modem, in which in the IP-based mode in the TE to SP path, the switching unit is an IP switching unit, and in the PPPoETH mode and IPoETH mode, the switching unit is an Ethernet switching unit.

The DSLAM equipment includes the DSL modem unit and the Ethernet service processing unit, in which
the DSL modem unit is used for being interconnected with the base station transceiver equipment at the reference point U through at least one pair of twisted pairs, performing modulation on data packets or frames transferred from the Ethernet service processing unit and then transferring the modulated data packets or frames to the base station transceiver equipment, and performing demodulation on data packets or frames transferred from the base station transceiver equipment and then transferring the demodulated data packets or frames to the Ethernet service processing unit; in the IP-based mode in the TE to SP path, the DSL modem unit supports the processing of IP layer, Ethernet MAC layer, and DSL physical layer, and in the PPPoETH mode and IPoETH mode, the DSL modem unit supports the processing of Ethernet MAC layer and DSL physical layer; and
the Ethernet service processing unit is used for processing data packets or frames transferred from the DSL modem unit and then transferring the processed data packets or frames to a network element formed by the broadband access edge equipment in the DSL network and a base station controller (BSC), and processing data packets or frames transferred from the network element formed by the broadband access edge equipment in the DSL network and the BSC and then transferring the processed data packets or frames to the DSL modem unit; in the IP-based mode in the TE to SP path, the Ethernet service processing unit performs the processing of Ethernet MAC layer and provides an Ethernet cable interface as an uplink interface/cascade interface to connect with the network element formed by the broadband access edge equipment and the BSC, and in the PPPoETH mode and IPoETH mode, the Ethernet service processing unit performs the processing of Ethernet MAC layer and IP layer forwarding and provides an Ethernet cable interface as an uplink interface/cascade interface to connect with the network element formed by the broadband access edge equipment and the BSC.

The system further includes a remote power supply equipment, for converting mains input or DC input into a high-voltage DC, and then outputting the high-voltage DC to a base station equipment through wired cables including twisted pairs, so as to remotely supply power to the base station equipment.

The base station transceiver equipment further includes a base station remote power supply unit or a base station transceiver remote power supply unit, for converting the high-voltage DC transferred from the remote power supply equipment or the DSL remote power supply unit of the DSLAM equipment into a low-voltage DC, so as to locally supply power to the base station or the base station transceiver equipment, or relaying the received high-voltage DC to remotely supply power to remote base stations or base station transceiver equipments in the next tier through wired cables; alternatively, when the wired network is the DSL network, the DSLAM equipment further includes the DSL remote power supply unit for converting mains input or DC input into a high-voltage DC, and then outputting the high-voltage DC to the base station or the base station transceiver equipment through wired cables including twisted pairs, so as to remotely supply power to the base station or the base station transceiver equipment.

The base station transceiver equipment is communicated with the BSC, and the BSC is set in the broadband access edge equipment in the DSL network.

When the wired network includes the MSO network and the DSL network, the system includes:
the interface, provided at the BWA network, used for communicating with a cable modem of the MSO network and used for being interconnected with the MSO network through the CMRFI, in which an interconnection between the MSO network and the DSL network is implemented at the reference point V through the CMTS;
alternatively,
the interface, provided at the BWA network, used for communicating with the reference point V in the DSL network and used for being interconnected with the DSL network at the reference point V, in which an interconnection between the MSO network and the DSL network is also implemented at the reference point V, so as to transmit information required to be transferred between the BWA network and each wired network through the reference point V.

When the interface for communicating with the cable modem of the MSO network is provided at the BWA network, the system includes the base station equipment and a cable modem equipment interconnected with each other, in which
the base station equipment is used for being connected with the cable modem equipment through wired cables to implement the access services of wireless subscribers, transferring data packets or frames of the accessed wireless subscribers to the cable modem equipment, and transferring data packets or frames transferred from the cable modem equipment to the wireless subscribers; and
the cable modem equipment is used for being connected with the base station equipment through wired cables and connected with the CMTS of the MSO network at the reference point CMRFI through wired cables, so as to transfer information required to be exchanged between the base station equipment and the CMTS.

The base station equipment includes the base station wireless processing unit and the base station wired service processing unit, in which:
the base station wireless processing unit is used for implementing the access services of wireless subscribers, transferring data packets or frames of the accessed wireless subscribers to the base station wired service processing unit, and transferring data packets or frames transferred from the base station wired service processing unit to the wireless subscribers, in which the base station wireless processing unit includes one or more processing units; and
the base station wired service processing unit is used for being connected with the cable modem equipment through at least one pair of wired cables, processing data packets or frames transferred from the base station wireless processing unit and then transferring the processed data packets or frames to the cable modem equipment, and processing data packets or frames transferred from the cable modem equipment and then transferring the processed data packets or frames to the base station wireless processing unit; in the mode based on Layer 3 routing, the base station wired service processing unit supports the processing of IP layer, data link layer, and physical layer, and in the mode based on Layer 2 bridging, the base station wired service processing unit supports the processing of data link layer and physical layer.

The base station wired service processing unit includes:
a base station Ethernet service processing unit, for being connected with the cable modem equipment through at least one pair of Ethernet wired cables, processing data packets or frames transferred from the base station wireless processing unit and then transferring the processed data packets or frames to the cable modem equipment, and processing data packets or frames transferred from the cable modem equipment and then transferring the processed data packets or frames to the base station wireless processing unit; in which in the mode based on Layer 3 routing, the base station Ethernet service processing unit supports the processing of IP layer, Ethernet data link layer, and Ethernet physical layer, and in the mode based on Layer 2 bridging, the base station Ethernet service processing unit supports the processing of Ethernet data link layer and Ethernet physical layer.

The system further includes the remote power supply equipment, for converting mains input or DC input into a high-voltage DC, and then outputting the high-voltage DC to the cable modem equipment and/or base station equipment through wired cables including twisted pairs, so as to remotely supply power to the cable modem equipment and/or base station equipment.

The base station equipment further includes the base station remote power supply unit, and when the base station equipment does not receive the power supplied from the remote power supply equipment, the base station remote power supply unit is used for converting mains input or DC input into a high-voltage DC and then outputting the high-voltage DC to the cable modem equipment through wired cables including twisted pairs to remotely supply power to the cable modem equipment; and
when the base station equipment receives the power supplied from the remote power supply equipment, the base station remote power supply unit is used for converting the high-voltage DC transferred from the remote power supply equipment into a low-voltage DC to locally supply power to the base station equipment, or relaying the received high-voltage DC to remotely supply power to remote base station equipments in the next tier through wired cables.

The cable modem equipment includes a cable modem wired service processing unit and a cable modem unit, in which:
the cable modem wired service processing unit is used for being connected with the base station equipment through at least one pair of wired cables, processing data packets or frames transferred from the base station equipment and then transferring the processed data packets or frames to the cable modem unit, and processing data packets or frames transferred from the cable modem unit and then transferring the processed data packets or frames to the base station equipment; in the mode based on Layer 3 routing, the cable modem wired service processing unit supports the processing of IP layer, data link layer, and physical layer, and in the mode based on Layer 2 bridging, the cable modem wired service processing unit supports the processing of data link layer and physical layer; and
the cable modem unit includes at least one cable modem, and is used for being interconnected with the CMTS of the MSO network at the reference point CMRFI through at least one pair of coaxial cables, performing DOCSIS modulation on data packets or frames transferred from the cable modem wired service processing unit and then transferring the modulated data packets or frames to the CMTS, and performing DOCSIS demodulation on data packets or frames transferred from the CMTS and then transferring the demodulated data packets or frames to the cable modem wired service processing unit.

The cable modem wired service processing unit includes:
a cable modem Ethernet service processing unit, for being connected with the base station equipment through at least one pair of Ethernet wired cables, processing data packets or frames transferred from the base station equipment and then transferring the processed data packets or frames to the cable modem unit, and processing data packets or frames transferred from the cable modem unit and then transferring the processed data packets or frames to the base station equipment; in which in the mode based on Layer 3 routing, the cable modem Ethernet service processing unit supports the processing of IP layer, Ethernet data link layer, and Ethernet physical layer, and in the mode based on Layer 2 bridging, the cable modem Ethernet service processing unit supports the processing of Ethernet data link layer and Ethernet physical layer.

The cable modem equipment further includes:
a cable modem remote power supply unit, for converting the high-voltage DC transferred from the remote power supply equipment or the high-voltage DC simultaneously transferred from both the remote power supply equipment and the base station remote power supply unit of the base station equipment into a low-voltage DC, so as to locally supply power to a power supply unit of the cable modem equipment, or relaying the received high-voltage DC, so as to remotely supply power to remote cable modem equipments in the next tier through wired cables.

When transmitting information required to be transferred between the BWA network and each wired network through the reference point V, the system includes:
the BWA network, for being interconnected with the DSL network at the reference point V through the base station, in which the MSO network is interconnected with the DSL network at the reference point V through the CMTS; and
a broadband remote access server (BRAS) of the DSL network, further provided with a switching function unit for supporting intercommunications among subscribers of the BWA network, DSL network, and CMTS broadband network.

If the mode based on Layer 2 bridging is adopted at the reference point V, in the TE to SP path, a Layer 2 bridging is employed between the BRAS and the TE, 802.16-2004 Layer 2 wireless access is employed between a base station and a subscriber station, and 802.16 security sub-layer Private Key Management (PKM) security architecture is employed between the base station and the subscriber station in terms of security of the mode;
alternatively,
if the mode based on Layer 2 bridging is adopted at the reference point V, in the TE to SP path, the Layer 2 bridging is employed between the broadband access edge equipment and the TE, the 802.16-2004 Layer 2 wireless access is employed between the base station and the subscriber station, PPP over Ethernet is supported between the broadband access edge equipment and the TE as a link protocol and as a mechanism for address allocation and authentification, and for controlling and managing the terminal configuration and connection;
alternatively,
if the mode based on Layer 2 bridging is adopted at the reference point V, in a customer premises equipment (CPE) to SP path, the Layer 2 bridging is employed between the broadband access edge equipment and the CPE, a DOCSIS (HFC access network) Layer 2 wired access is employed between the CMTS and the cable modem, and a DOCSIS security sub-layer security architecture is employed between the CMTS and the cable modem in terms of security of the mode;
alternatively,
if the mode based on Layer 2 bridging is adopted at the reference point V, in the CPE to SP path, the Layer 2 bridging is employed between the broadband access edge equipment and the CPE, the DOCSIS Layer 2 wired access is employed between the CMTS and the cable modem, the PPP over Ethernet is supported between the broadband access edge equipment and the CPE as a link protocol and as a mechanism for address allocation and authentification, and for controlling and managing the terminal configuration and connection;
alternatively,
if the mode based on Layer 3 routing is adopted at the reference point V, in the TE to SP path, a Layer 3 routing is employed between the broadband access edge equipment and the TE, an accessing manner over the 802.16-2004 Layer 2 wireless access is employed on the IP layer between the base station and the subscriber station, and the 802.16 security sub-layer PKM security architecture is employed between the base station and the subscriber station in terms of security of the mode;
alternatively,
if the mode based on Layer 3 routing is adopted at the reference point V, in the CPE to SP path, the Layer 3 routing is employed between the broadband access edge equipment and the CPE, the accessing manner over the DOCSIS Layer 2 wired access is employed on the IP layer between the CMTS and the cable modem, and the DOCSIS security sub-layer security architecture is employed between the CMTS and the cable modem in terms of security of the mode.

The system includes:
the broadband access edge equipment of the DSL network, provided with a switching function unit for supporting intercommunications among subscribers of 802.16e-based WiMAX network, DSL network, and MSO network; and
the 802.16e-based WiMAX network, interconnected with the DSL network at the reference point V through an access service network, in which the MSO network is interconnected with the DSL network at the reference point V through the CMTS.

If the mode based on Layer 2 bridging is adopted at the reference point V, in the TE to SP path, the Layer 2 bridging is employed between the broadband access edge equipment and the TE, the 802.16e Layer 2 wireless access is employed between an access service network (ASN) and a mobile subscriber station (MS), and the DOCSIS (HFC access network) security sub-layer security architecture is employed between the ASN and the CMTS in terms of security of the mode;
alternatively,
if the mode based on Layer 2 bridging is adopted at the reference point V, in the TE to SP path, the Layer 2 bridging is employed between the broadband access edge equipment and the TE, the 802.16e Layer 2 wireless access is employed between the base station and the subscriber station, the PPP over Ethernet is supported between the broadband access edge equipment and the TE as a link protocol and as a mechanism for address allocation and authentification, and for controlling and managing the terminal configuration and connection, and the mode employs radio resource management, load balance, and security attribute of 802.16e;
alternatively,
if the mode based on Layer 2 bridging is adopted at the reference point V, in the CPE to SP path, the Layer 2 bridging is employed between the broadband access edge equipment and the CPE, the DOCSIS Layer 2 wired access is employed between the CMTS and the cable modem, and the PPP over Ethernet is supported between the broadband access edge equipment and the CPE as a link protocol and as a mechanism for address allocation and authentification, and for controlling and managing the terminal configuration and connection;
alternatively,
if the mode based on Layer 3 routing is adopted at the reference point V, in the TE to SP path, the Layer 3 routing is employed between the broadband access edge equipment and the TE, an accessing manner over 802.16e Layer 2 wireless access is employed on the IP layer between the ASN and the MS, and the DOCSIS security sub-layer security architecture is employed between the ASN and the CMTS in terms of security of the mode;
alternatively,
if the mode based on Layer 3 routing is adopted at the reference point V, in an MS to SP path, the Layer 3 routing is employed between the broadband access edge equipment and the MS, the accessing manner over 802.16e Layer 2 wireless access is employed on the IP layer between the ASN and the MS, and the DOCSIS security sub-layer security architecture is employed between the ASN and the CMTS in terms of security of the mode;
alternatively,
if the mode based on Layer 3 routing is adopted at the reference point V, in the CPE to SP path, the Layer 3 routing is employed between the broadband access edge equipment and the CPE, the accessing manner over the DOCSIS Layer 2 wired access is employed on the IP layer between the CMTS and the cable modem, and the DOCSIS security sub-layer security architecture is employed between the CMTS and the cable modem in terms of security of the mode.

In the mode based on Layer 2 bridging, in the CPE to SP path, the Layer 2 bridging is employed between the broadband access edge equipment and the CPE, the DOCSIS Layer 2 wired access is employed between the CMTS and the cable modem, and the DOCSIS security sub-layer security architecture is employed between the CMTS and the cable modem in terms of security of the mode.

The 802.16e or 802.16-2004 Layer 2 wireless access supports an Ethernet Convergence Sub-layer (ETH CS) at an airlink.

In the mode based on Layer 2 bridging, a tunneling protocol is employed between the broadband access edge equipment and the SP, which includes Layer 2 Tunneling Protocol (L2TP) or Multi-Protocol Label Switching (MPLS) Tunneling Protocol.

The present invention further provides a method for interconnecting a broadband wireless network with a wired network, which is applicable for a system including a broadband wireless network and a wired network. The broadband wireless network is 802.16-2004-based Worldwide Interoperability for Microwave Access (WiMAX) network or 802.16e-based WiMAX network; the wired network is a multi-service operator (MSO) network and/or a digital subscriber line (DSL) network. The method for interconnecting a broadband wireless network with a wired network includes:
transmitting information required to be transferred between a broadband wireless access (BWA) network and the wired network via a reference point or an interface selected in the wired network through an interface for intercommunicating the broadband wireless network and the wired network, so as to exchange information between the broadband wireless network and the wired network, in which the interface for intercommunicating the broadband wireless network with the wired network is an interface for implementing an intercommunication between the BWA network and the MSO network and/or DSL network.

The method includes:
transmitting information required to be transferred between the BWA network and the MSO network by the BWA network through a reference point CMRFI or CMTS-NSI in the MSO network.

When the BWA network is interconnected through the reference point CMRFI, the method includes:
transferring information required to be exchanged between a wireless network and a wired network through a base station equipment and a CMTS interconnected thereto.

The operations in the base station equipment include:
transferring data packets or frames of the accessed wireless subscribers to a base station cable modem unit by the base station wireless processing unit, and transferring data packets or frames transferred from the base station cable modem unit to the wireless subscribers; and
performing DOCSIS modulation on data packets or frames transferred from the base station wireless processing unit by the base station cable modem unit and then transferring the modulated data packets or frames to the CMTS in the MSO network, and performing DOCSIS demodulation on data packets or frames transferred from the CMTS and then transferring the demodulated data packets or frames to the base station wireless processing unit; in which in the mode based on Layer 3 routing, the base station cable modem unit supports processing of IP layer, DOCSIS data link layer, and DOCSIS physical layer, and in the mode based on Layer 2 bridging, the base station cable modem unit supports processing of DOCSIS data link layer and DOCSIS physical layer.

The operations in the CMTS include:
performing DOCSIS modulation on data packets or frames transferred from a wired service processing unit by an MSO cable modem unit and then transferring the modulated data packets or frames to the base station equipment, and performing DOCSIS demodulation on data packets or frames transferred from the base station equipment and then transferring the demodulated data packets or frames to the wired service processing unit; in which in the mode based on Layer 3 routing, the MSO cable modem unit supports the processing of IP layer, DOCSIS data link layer, and DOCSIS physical layer, and in the mode based on Layer 2 bridging, the MSO cable modem unit supports the processing of DOCSIS data link layer and DOCSIS physical layer; and
processing data packets or frames transferred from the MSO cable modem unit by the wired service processing unit and then transferring the processed data packets or frames to a managed IP network of the MSO network through wired cables, and processing data packets or frames transferred from the managed IP network of the MSO network through wired cables and then transferring the processed data packets or frames to the MSO cable modem unit; in which in the mode based on Layer 3 routing, the wired service processing unit performs the processing of wired data link layer and provides a wired cable interface as an uplink interface to access the managed IP network, and in the mode based on Layer 2 bridging, the wired service processing unit performs the processing of wired data link layer and IP layer forwarding and provides a wired cable interface as an uplink interface to access the managed IP network.

When the BWA network is interconnected at the reference point CMTS-NSI, the method includes:
processing data packets or frames of the accessed wireless subscribers by the base station equipment and then transferring the processed data packets or frames to the managed IP network of the MSO network, and processing data packets or frames transferred from the managed IP network and then transferring the processed data packets or frames to the wireless subscribers.

The operations in the base station equipment include:
transferring data packets or frames transferred from the accessed wireless subscribers to the base station wired service processing unit by the base station wireless processing unit, and transferring data packets or frames transferred from the base station wired service processing unit to the wireless subscribers; and
transferring information required to be exchanged between the base station wired service processing unit and the managed IP network of the MSO network; in which in the mode based on Layer 3 routing, the base station wired service processing unit performs the processing of wired data link layer and provides a wired cable interface as an uplink interface to access the managed IP network, and in the mode based on Layer 2 bridging, the base station wired service processing unit performs the processing of wired data link layer and IP layer forwarding and provides a wired cable interface as an uplink interface to access the managed IP network.

When the wired network is the DSL network, the method includes:
transmitting information required to be exchanged between the BWA network and the wired network by the BWA network through a reference point U between a DSL modem and a DSL access multiplexer in the DSL network or through a reference point V between the DSL access multiplexer and a broadband access edge equipment.

When the BWA network is interconnected through the reference point U, the method includes:
transferring information required to be exchanged between the wireless subscribers and a DSLAM equipment of the DSL network by the base station equipment, and transferring information required to be exchanged between the base station equipment and the broadband access edge equipment of the DSL network by the DSLAM equipment.

The operations in the base station equipment include:
transferring data packets or frames of the accessed wireless subscribers to the base station equipment DSL modem unit by the base station wireless processing unit, and transferring data packets or frames transferred from the base station equipment DSL modem unit to the wireless subscribers; and
performing modulation on data packets or frames transferred from the base station wireless processing unit by the base station equipment DSL modem unit and then transferring the modulated data packets or frames to the DSLAM equipment of the DSL network, and performing demodulation on data packets or frames transferred from the DSLAM equipment and then transferring the demodulated data packets or frames to the base station wireless processing unit; in which in an IP-based mode in a path from terminal equipment (TE) to service provider (SP), the base station equipment DSL modem unit supports the processing of IP layer, Ethernet medium access control (MAC) layer, and DSL physical layer, and in a Point-to-Point Protocol over Ethernet (PPPoETH) mode and an Internet Protocol over Ethernet (IPoETH) mode, the base station equipment DSL modem unit supports the processing of Ethernet MAC layer and DSL physical layer.

The operations in the DSLAM equipment include:
performing modulation on data packets or frames transferred from an Ethernet service processing unit by the DSL modem unit and then transferring the modulated data packets or frames to the base station equipment, and performing demodulation on data packets or frames transferred from the base station equipment and then transferring the demodulated data packets or frames to the Ethernet service processing unit; in which in the IP-based mode in the TE to SP path, the DSL modem unit supports the processing of IP layer, Ethernet MAC layer, and DLS physical layer, and in the PPPoETH mode and the IPoETH mode, the DSL modem unit supports the processing of Ethernet MAC layer and DSL physical layer; and
processing data packets or frames transferred from the DSL modem unit by the Ethernet service processing unit and then transferring the processed data packets or frames to the broadband access edge equipment of the DSL network, and processing data packets or frames transferred from the broadband access edge equipment of the DSL network and then transferring the processed data packets or frames to the DSL modem unit; in which in the IP-based mode in the TE to SP path, the Ethernet service processing unit performs the processing of Ethernet MAC layer and provides an Ethernet cable interface as an uplink interface/cascade interface to connect with the broadband access edge equipment, and in the PPPoETH mode and the IPoETH mode, the Ethernet service processing unit performs the processing of Ethernet MAC layer and IP layer forwarding and provides an Ethernet cable interface as an uplink interface/cascade interface to connect with the broadband access edge equipment.

When the BWA network is interconnected through the reference point U, the method includes:
transferring information required to be exchanged between the wireless subscribers and the DSLAM equipment by a base station transceiver equipment, and transferring information required to be exchanged between the base station transceiver equipment and an access network edge equipment of the DSL network by the DSLAM equipment.

The operations in the base station transceiver equipment include:
transferring data packets or frames of the accessed wireless subscribers to the base station transceiver DSL modem unit by the base station wireless processing unit, and transferring data packets or frames transferred from the base station transceiver DSL modem unit to the wireless subscribers; and
performing modulation on data packets or frames transferred from the base station wireless processing unit by the base station transceiver DSL modem unit and then transferring the modulated data packets or frames to the DSLAM equipment of the DSL network, and performing demodulation on data packets or frames transferred from the DSLAM equipment and then transferring the demodulated data packets or frames to the base station wireless processing unit; in which in the IP-based mode in the TE to SP path, the base station transceiver DSL modem unit supports the processing of IP layer, Ethernet MAC layer, and DSL physical layer, and in the PPPoETH mode and the IPoETH mode, the base station transceiver DSL modem unit supports the processing of Ethernet MAC layer and DSL physical layer.

The operations in the DSLAM equipment include:
performing modulation on data packets or frames transferred from the Ethernet service processing unit by the DSL modem unit and then transferring the modulated data packets or frames to the base station transceiver equipment, and performing demodulation on data packets or frames transferred from the base station transceiver equipment and then transferring the demodulated data packets or frames to the Ethernet service processing unit; in which in the IP-based mode in the TE to SP path, the DSL modem unit supports the processing of IP layer, Ethernet MAC layer, and DSL physical layer, and in the PPPoETH mode and the IPoETH mode, the DSL modem unit supports the processing of Ethernet MAC layer and DSL physical layer; and
processing data packets or frames transferred from the DSL modem unit by the Ethernet service processing unit and then transferring the processed data packets or frames to a network element formed by the broadband access edge equipment of the DSL network and a base station controller (BSC), and processing data packets or frames transferred from the network element formed by the broadband access edge equipment of the DSL network and the BSC and then transferring the processed data packets or frames to the DSL modem unit; in which in the IP-based mode in the TE to SP path, the Ethernet service processing unit performs the processing of Ethernet MAC layer and provides an Ethernet cable interface as an uplink interface/cascade interface to connect with the network element formed by the broadband access edge equipment and the BSC, and in the PPPoETH mode and the IPoETH mode, the Ethernet service processing unit performs the processing of Ethernet MAC layer and IP layer forwarding and provides an Ethernet cable interface as an uplink interface/cascade interface to connect with the network element formed by the broadband access edge equipment and the BSC.

When the wired network includes the MSO network and the DSL network, the method includes:
exchanging information between the BWA network and the MSO network through the reference point CMRFI, and exchanging information between the MSO network and the DSL network through the reference point V;
alternatively,
exchanging information between the BWA network and the DSL network through the reference point V, and exchanging information between the MSO network and the DSL network through the reference point V.

The process of exchanging information between the BWA network and the MSO network includes:
transferring data packets or frames of the accessed wireless subscribers to a cable modem equipment by the base station equipment, and transferring data packets or frames transferred from the cable modem equipment to the wireless subscribers; and
transferring information required to be exchanged between the base station equipment and the CMTS by the cable modem equipment.

The operations in the base station equipment include:
transferring data packets or frames of the accessed wireless subscribers to the base station wired service processing unit by the base station wireless processing unit, and transferring data packets or frames transferred from the base station wired service processing unit to the wireless subscribers; and
processing data packets or frames transferred from the base station wireless processing unit by the base station wired service processing unit and then transferring the processed data packets or frames to the cable modem equipment, and processing data packets or frames transferred from the cable modem equipment and then transferring the processed data packets or frames to the base station wireless processing unit; in which in the mode based on Layer 3 routing, the base station wired service processing unit supports the processing of IP layer, data link layer, and physical layer, and in the mode based on Layer 2 bridging, the base station wired service processing unit supports the processing of data link layer and physical layer.

The operations in the base station wired service processing unit include:
processing data packets or frames transferred from the base station wireless processing unit by a base station Ethernet service processing unit and then transferring the processed data packets or frames to the cable modem equipment, and processing data packets or frames transferred from the cable modem equipment and then transferring the processed data packets or frames to the base station wireless processing unit; in which in the mode based on Layer 3 routing, the base station Ethernet service processing unit supports the processing of IP layer, Ethernet data link layer, and Ethernet physical layer, and in the mode based on Layer 2 bridging, the base station Ethernet service processing unit supports the processing of Ethernet data link layer and Ethernet physical layer.

The operations in the cable modem equipment include:
processing data packets or frames transferred from the base station equipment by a cable modem wired service processing unit and then transferring the processed data packets or frames to the cable modem unit, and processing data packets or frames transferred from the cable modem unit and then transferring the processed data packets or frames to the base station equipment; in which in the mode based on Layer 3 routing, the cable modem wired service processing unit supports the processing of IP layer, data link layer, and physical layer, and in the mode based on Layer 2 bridging, the cable modem wired service processing unit supports the processing of data link layer and physical layer; and
performing DOCSIS modulation on data packets or frames transferred from the cable modem wired service processing unit by the cable modem unit and then transferring the modulated data packets or frames to the CMTS, and performing DOCSIS demodulation on data packets or frames transferred from the CMTS and then transferring the demodulated data packets or frames to the cable modem wired service processing unit.

The operations in the cable modem wired service processing unit include:
processing data packets or frames transferred from the base station equipment by the cable modem Ethernet service processing unit and then transferring the processed data packets or frames to the cable modem unit, and processing data packets or frames transferred from the cable modem unit and then transferring the processed data packets or frames to the base station equipment; in which in the mode based on Layer 3 routing, the cable modem Ethernet service processing unit supports the processing of IP layer, Ethernet data link layer, and Ethernet physical layer, and in the mode based on Layer 2 bridging, the cable modem Ethernet service processing unit supports the processing of Ethernet data link layer and Ethernet physical layer.

When the BWA network is 802.16-2004, the method includes:
if the mode based on Layer 2 bridging is adopted at the reference point V, in the TE to SP path, employing a Layer 2 bridging between the broadband access edge equipment and the TE, employing 802.16-2004 Layer 2 wireless access between a base station and a subscriber station, and employing 802.16 security sub-layer PKM security architecture between the base station and the subscriber station in terms of security of the mode;
alternatively,
if the mode based on Layer 2 bridging is adopted at the reference point V, in the TE to SP path, employing the Layer 2 bridging between the broadband access edge equipment and the TE, employing the 802.16-2004 Layer 2 wireless access between the base station and the subscriber station, supporting point-to-point protocol (PPP) over Ethernet between the broadband access edge equipment and the TE as a link protocol and as a mechanism for address allocation and authentification, and for controlling and managing the terminal configuration and connection;
alternatively,
if the mode based on Layer 2 bridging is adopted at the reference point V, in a customer premises equipment (CPE) to SP path, employing the Layer 2 bridging between the broadband access edge equipment and the CPE, employing a DOCSIS (HFC access network) Layer 2 wired access between the CMTS and the cable modem, and employing a DOCSIS security sub-layer security architecture between the CMTS and the cable modem in terms of security of the mode;
alternatively,
if the mode based on Layer 2 bridging is adopted at the reference point V, in the CPE to SP path, employing the Layer 2 bridging between the broadband access edge equipment and the CPE, employing the DOCSIS Layer 2 wired access between the CMTS and the cable modem, supporting the PPP over Ethernet between the broadband access edge equipment and the CPE as a link protocol and as a mechanism for address allocation and authentification, and for controlling and managing the terminal configuration and connection;
alternatively,
if the mode based on Layer 3 routing is adopted at the reference point V, in the TE to SP path, employing the Layer 3 routing between the broadband access edge equipment and the TE, employing an accessing manner over the 802.16-2004 Layer 2 wireless access on the IP layer between the base station and the subscriber station, and employing the 802.16 security sub-layer PKM security architecture between the base station and the subscriber station in terms of security of the mode;
alternatively,
if the mode based on Layer 3 routing is adopted at the reference point V, in the CPE to SP path, employing the Layer 3 routing between the broadband access edge equipment and the CPE, employing the accessing manner over the DOCSIS Layer 2 wired access on the IP layer between the CMTS and the cable modem, and employing the DOCSIS security sub-layer security architecture between the CMTS and the cable modem in terms of security of the mode.

When the BWA network is 802.16e, the method includes:
if the mode based on Layer 2 bridging is adopted at the reference point V, in the TE to SP path, employing the Layer 2 bridging between the broadband access edge equipment and the TE, employing the 802.16e Layer 2 wireless access between an access service network (ASN) and a mobile subscriber station (MS), and employing the DOCSIS (HFC access network) security sub-layer security architecture between the ASN and the CMTS in terms of security of the mode;
alternatively,
if the mode based on Layer 2 bridging is adopted at the reference point V, in the TE to SP path, employing the Layer 2 bridging between the broadband access edge equipment and the TE, employing the 802.16e Layer 2 wireless access between the base station and the subscriber station, supporting the PPP over Ethernet between the broadband access edge equipment and the TE as a link protocol and as a mechanism for address allocation and authentification, and for controlling and managing the terminal configuration and connection, in which the mode employs radio resource management, load balance, and security attribute of 802.16e;
alternatively,
if the mode based on Layer 2 bridging is adopted at the reference point V, in the CPE to SP path, employing the Layer 2 bridging between the broadband access edge equipment and the CPE, employing the DOCSIS Layer 2 wired access between the CMTS and the cable modem, and supporting the PPP over Ethernet between the broadband access edge equipment and the CPE as a link protocol and as a mechanism for address allocation and authentification, and for controlling and managing the terminal configuration and connection;
alternatively,
if the mode based on Layer 3 routing is adopted at the reference point V, in the TE to SP path, employing the Layer 3 routing between the broadband access edge equipment and the TE, employing the accessing manner over 802.16e Layer 2 wireless access on the IP layer between the ASN and the MS, and employing the DOCSIS security sub-layer security architecture between the ASN and the CMTS in terms of security of the mode;
alternatively,
if the mode based on Layer 3 routing is adopted at the reference point V, in an MS to SP path, employing the Layer 3 routing between the broadband access edge equipment and the MS, employing the accessing manner over 802.16e Layer 2 wireless access on the IP layer between the ASN and the MS, and employing the DOCSIS security sub-layer security architecture between the ASN and the CMTS in terms of security of the mode;
alternatively,
if the mode based on Layer 3 routing is adopted at the reference point V, in the CPE to SP path, employing the Layer 3 routing between the broadband access edge equipment and the CPE, employing the accessing manner over the DOCSIS Layer 2 wired access on the IP layer between the CMTS and the cable modem, and employing the DOCSIS security sub-layer security architecture between the CMTS and the cable modem in terms of security of the mode.

In the mode based on Layer 2 bridging, in the CPE to SP path, the Layer 2 bridging is employed between the broadband access edge equipment and the CPE, the DOCSIS Layer 2 wired access is employed between the CMTS and the cable modem, and the DOCSIS security sub-layer security architecture is employed between the CMTS and the cable modem in terms of security of the mode.

The 802.16e or 802.16-2004 Layer 2 wireless access supports the ETH CS at the airlink.

In the mode based on Layer 2 bridging, a tunneling protocol is employed between the broadband access edge equipment and the SP, which includes Layer 2 Tunneling Protocol (L2TP) or MPLS Tunneling.

It can be seen from the above technical solutions that the present invention has the following efficacies during practical implementation.
1. The present invention provides two solutions for interconnecting 802.16-2004-based WiMAX, DSL, and MSO network and two solutions for interconnecting 802.16e-based WiMAX, DSL, and MSO network, so as to solve the problems in interconnecting WiMAX, DSL, and MSO network.
2. The present invention replaces the wired access of DOCSIS and DSL to serve as a wireless extension for the wired access of DOCSIS and DSL, and further supports fixed wireless, nomadic, portable, and mobile access applications.
3. The present invention supports the DSL operators to develop the WiMAX network and MSO network in a tight-coupling manner, proposes a concept based on WiMAX over DOCSIS (WiMAX over HFC access network), such that the WiMAX access network is constructed through utilizing most of the originally routed resources of the HFC transmission network, so as to directly avoid additional interconnecting lines of the base station backhaul, and thus reducing the construction cost of the WiMAX access network.
4. In the present invention, the WiMAX and MSO network share the BRAS of the DSL, and the user authentification is implemented through the PPPoE, which provides a user authentification manner for the WiMAX and MSO network.

### BRIEF DESCRIPTION OF THE DRAWINGS

The present invention will become more fully understood from the detailed description given herein below for illustration only for, which thus is not limitative of the present invention, and wherein:
FIG. 1 is a schematic structural view of a WiMAX system in the prior art;
FIG. 2 is a schematic structural view of an MSO network in the prior art;
FIG. 3 is a schematic structural view of a DSL network in the prior art;
FIG. 4 is a schematic view of an implementation solution for interconnecting 802.16-2004-based WiMAX with an MSO network at a reference point CMRFI when a BS of the WiMAX includes a CM function according to a first embodiment of the present invention;
FIG. 5 is a schematic view of an implementation solution for interconnecting the 802.16-2004-based WiMAX with the MSO network at the reference point CMRFI when the BS of the WiMAX does not include the CM function according to the first embodiment of the present invention;
FIG. 6 is a schematic view of an implementation solution for interconnecting 802.16e-based WiMAX with the MSO network at the reference point CMRFI when an ASN of the WiMAX includes the CM function according to the first embodiment of the present invention;
FIG. 7 is a schematic view of an implementation solution for interconnecting the 802.16e-based WiMAX with the MSO network at the reference point CMRFI when the ASN of the 802.16e-based WiMAX does not include the CM function according to the first embodiment of the present invention;
FIG. 8 is a schematic view of an implementation structure of a system for interconnecting a base station equipment with the MSO network according to the first embodiment of the present invention;
FIG 9 is a schematic structural view of an implementation solution for interconnecting 802.16-2004-based WiMAX with an MSO broadband network at a reference point CMTS-NSI according to a second embodiment of the present invention;
FIG. 10 is a schematic structural view of an implementation solution for interconnecting 802.16e-based WiMAX with the MSO broadband network at the reference point CMTS-NSI according to the second embodiment of the present invention;
FIG. 11 is a schematic view of an implementation structure of a system for interconnecting a base station equipment with the MSO network according to the second embodiment of the present invention;
FIG. 12 is a schematic structural view of an implementation solution for interconnecting 802.16-2004-based WiMAX with a DSL network at a reference point U according to a third embodiment of the present invention;
FIG. 13 is a schematic structural view of an implementation solution for interconnecting 802.16e-based WiMAX with the DSL network at the reference point U according to the third embodiment of the present invention;
FIG 14 is a schematic structural view of an implementation solution for interconnecting the 802.16-2004-based WiMAX with the DSL network at a reference point T according to the third embodiment of the present invention;
FIG. 15 is a schematic structural view of an implementation solution for interconnecting the 802.16e-based WiMAX with the DSL network at the reference point T according to the third embodiment of the present invention;
FIG. 16 is a schematic view of an implementation structure of the system according to the third embodiment of the present invention;
FIG 17 is a schematic view of an implementation structure of dividing the BS into a BTS and a BSC according to a fourth embodiment of the present invention;
FIG 18 is a schematic structural view of an implementation solution for interconnecting 802.16-2004-based WiMAX with the DSL network at a reference point V of the DSL access network according to the fourth embodiment of the present invention;
FIG. 19 is a schematic structural view of an implementation solution for interconnecting the 802.16-2004-based WiMAX with the DSL network at the reference point U of the DSL access network according to the fourth embodiment of the present invention;
FIG. 20 is a schematic structural view of an implementation solution for interconnecting the 802.16-2004-based WiMAX with the DSL network at the reference point T of the DSL access network according to the fourth embodiment of the present invention;
FIG. 21 is a schematic view of an implementation structure of a system for interconnecting a base station transceiver equipment with the DSL network according to the fourth embodiment of the present invention;
FIG. 22 is a schematic view of an implementation solution for interconnecting 802.16-2004-based WiMAX, DSL, and MSO at a reference point CMRFI/V when a BS of the WiMAX includes a CM function according to a fifth embodiment of the present invention;
FIG. 23 is a schematic view of an implementation solution for interconnecting 802.16-2004-based WiMAX, DSL, and MSO at the reference point CMRFI/V when the BS of the WiMAX does not include the CM function according to the fifth embodiment of the present invention;
FIG. 24 is a schematic view of an implementation solution for interconnecting 802.16e-based WiMAX, DSL, and MSO at the reference point CMRFI/V when an ASN of the 802.16e-based WiMAX includes the CM function according to the fifth embodiment of the present invention;
FIG 25 is a schematic view of an implementation solution for interconnecting 802.16e-based WiMAX, DSL, and MSO at the reference point CMRFI/V when the ASN of the 802.16e-based WiMAX does not include the CM function according to the fifth embodiment of the present invention;
FIG. 26 is a first schematic view of an implementation structure of a system for interconnecting a broadband wireless network with a wired network according to the fifth embodiment of the present invention;
FIG. 27 is a second schematic view of an implementation structure of a system for interconnecting the broadband wireless network with the wired network according to the fifth embodiment of the present invention;
FIG. 28 is a schematic view of an implementation solution for interconnecting 802.16-2004-based WiMAX, DSL, and MSO at the reference point V according to a sixth embodiment of the present invention;
FIG. 29 is a schematic view of an implementation solution for interconnecting the 802.16-2004-based WiMAX with the DSL network at the reference point V according to the sixth embodiment of the present invention;
FIG. 30 is a schematic view of an implementation solution for interconnecting the 802.16-2004-based WiMAX with the MSO broadband network at the reference point V according to the sixth embodiment of the present invention;
FIG. 31 is a schematic view of an implementation solution for interconnecting 802.16e-based WiMAX, DSL, and MSO at the reference point V according to the sixth embodiment of the present invention;
FIG 32 is a schematic view of an implementation solution for interconnecting the 802.16e-based WiMAX with the DSL network at the reference point V according to the sixth embodiment of the present invention; and
FIG 33 is a schematic view of an implementation solution for interconnecting the 802.16e-based WiMAX with the MSO broadband network at the reference point V according to the sixth embodiment of the present invention.

### DETAILED DESCRIPTION OF THE INVENTION

The present invention mainly provides an interconnection between a broadband wireless network and a wired network, for example, an interconnection between a WiMAX network and a multi-service operator (MSO) network and/or a DSL network as the wired network, such that subscribers of each network can develop services flexibly and conveniently through using various networks, which effectively enhances the flexibility of network operations, and brings more conveniences to the subscribers in accessing application networks.

The present invention includes the following networking manners during the practical implementation:
1. a networking implementation for interconnecting the broadband wireless network with the MSO network;
2. a networking implementation for interconnecting the broadband wireless network with the DSL network; and
3. a networking implementation for interconnecting the broadband wireless network, the MSO network, and the DSL network.

**In order to make the technical solutions provided by the present invention more comprehensible, the interconnecting implementations are illustrated below in detail through the following embodiments.**

**The present invention provides an implementation solution for interconnecting the broadband wireless network with the MSO network through a reference point CMRFI according to a first embodiment, which is illustrated in detail below.**

The present invention provides an implementation solution for interconnecting the BWA network with the MSO network, which focuses on the following two aspects: when a BS or an access service network (ASN) includes a cable modem (CM) function, the WiMAX network is interconnected with the MSO network at the reference point CMRFI; and when the BS or ASN does not include the CM function, a CM is added in the MSO network, such that the WiMAX network is interconnected with the MSO network at the reference point CMRFI through the CM.

The implementation solution for interconnecting the WiMAX network with the MSO network is illustrated below according to the present invention.

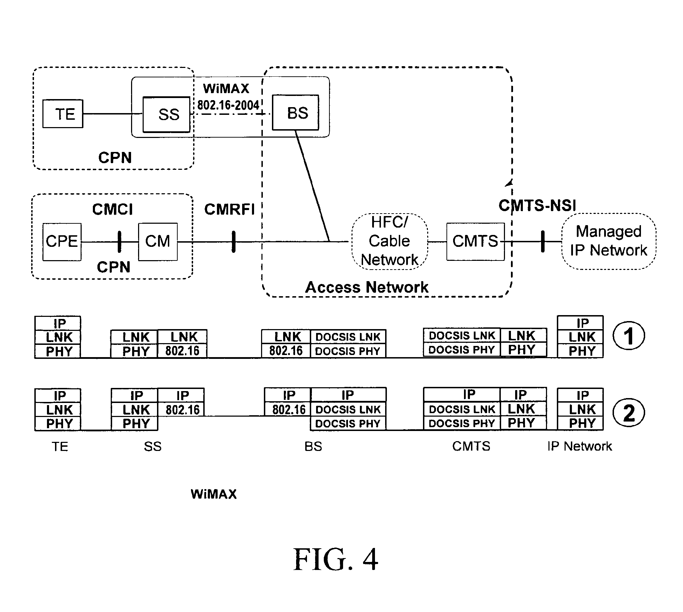

Solution 1: when the BS in the 802.16-2004-based WiMAX includes the CM function, a schematic view of an implementation solution for interconnecting the 802.16-2004-based WiMAX with the MSO network at the reference point CMRFI is shown in FIG. 4.

It belongs to a tight-coupling solution that the 802.16-2004-based WiMAX is interconnected with the MSO broadband network at the reference point CMRFI, which includes two modes, and the protocol stacks of the two modes in the path of TE->SS->BS->CMTS->MANAGED IP NETWORK, i.e., in the path sequentially from TE, SS, BS, CMTS to MANAGED IP NETWORK, are respectively shown in FIG. 4. This path is an end-to-end path for the 802.16-2004-based WiMAX to access the MSO network at the reference point CMRFI. Such interconnection solution is mainly applicable for fixed access applications, and the two modes of this solution are respectively illustrated herein below.

### 1. Mode 1

In the path of TE->SS->BS->CMTS->MANAGED IP NETWORK, the Layer 2 bridging technology is employed between the Managed IP Network and the TE, for example, Ethernet bridging technology. Herein, the Layer 2 bridging technology indicates that the CMTS, BS, and SS are all Layer 2 network elements, and the 802.16-2004 Layer 2 wireless access technology is employed between the BS and the SS to replace the DOCSIS Layer 2 wired access or to serve as a Layer 2 wireless extension of the DOCSIS Layer 2 wired access. The 802.16-2004 Layer 2 wireless access technology (e.g., Ethernet bridging technology) supports the Ethernet Convergence Sub-layer (ETH CS) at the airlink.

### 2. Mode 2

In the path of TE->SS->BS->CMTS->MANAGED IP NETWORK, the Layer 3 routing technology is employed between the Managed IP Network and the TE, for example, IP Layer 3 routing. Herein, the Layer 3 routing technology indicates that the CMTS, BS, and SS are all Layer 3 network elements, and an accessing manner over the 802.16-2004 Layer 2 wireless access is employed on the IP layer between the BS and the SS to replace the DOCSIS wired access or to serve as a wireless extension of the DOCSIS wired access. The 802.16-2004 Layer 2 wireless access technology supports an IP Convergence Sub-layer (IP CS) at the airlink.

In terms of security of the two modes in Solution 1, the 802.16 security sub-layer private key management (PKM) security architecture is employed between the SS and the BS, and the DOCSIS security sub-layer security architecture is employed between the BS and the CMTS.

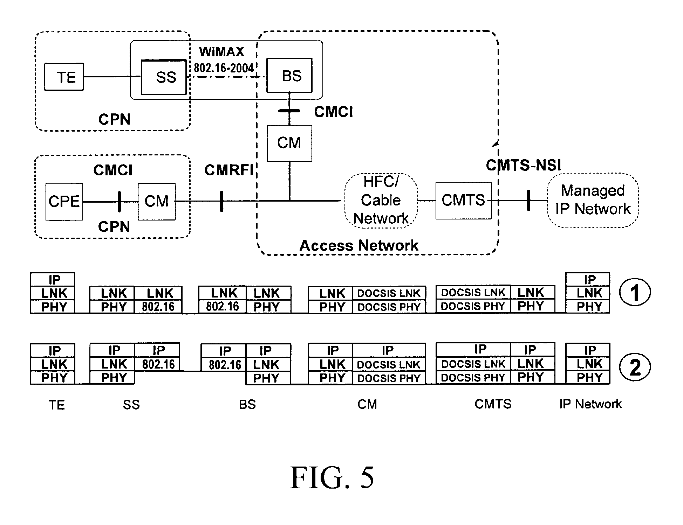

Solution 2: when the BS in the 802.16-2004-based WiMAX does not include the CM function, a schematic view of an implementation solution for interconnecting the 802.16-2004-based WiMAX with the MSO network at the reference point CMRFI of the present invention is shown in FIG. 5.

It belongs to a tight-coupling solution that a CM is set in the MSO broadband network, and then the 802.16-2004-based WiMAX is connected with the CM through a reference point CMCI (an interface between the CPN and the CM) and then interconnected with the MSO broadband network at the reference point CMRFI. This solution includes two modes, and the protocol stacks of the two modes in the path of TE->SS->BS->CM->CMTS->MANAGED IP NETWORK are respectively shown in FIG 5. This path is an end-to-end path for the 802.16-2004-based WiMAX to access the MSO network at the reference point CMRFI. The interconnection solution is mainly applicable for fixed access applications.

The difference between this solution and the interconnection solution shown in FIG. 4 lies in that, the BS in the solution shown in FIG. 4 includes the CM function (the CMCI is an internal interface of the network element, which is not made public to the other manufacturers); whereas in this solution, the BS and the CM are different network elements and the reference point is publicly known and followed by the manufacturers. The two modes of this solution are exactly identical to the two modes of the interconnection solution shown in FIG 4, which thus are not described repeatedly.

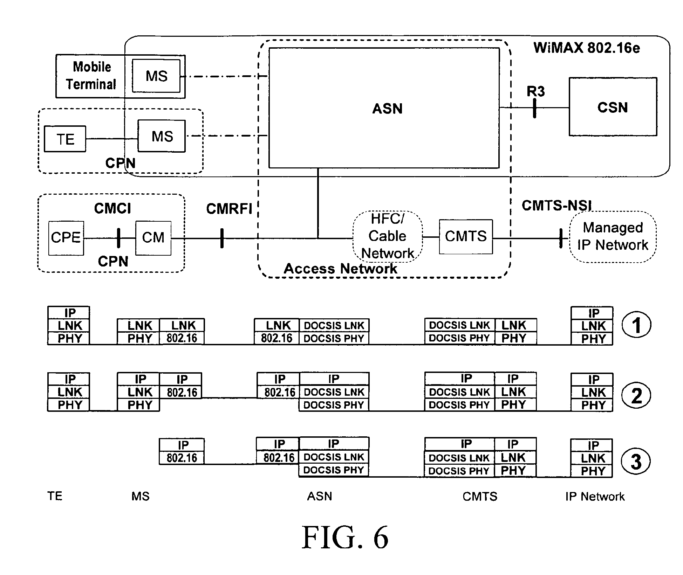

Solution 3: when an ASN in the 802.16e-based WiMAX includes a CM function, a schematic view of an implementation solution for interconnecting the 802.16e-based WiMAX with the MSO network at the reference point CMRFI of the present invention is shown in FIG. 6.

It belongs to a tight-coupling solution that the 802.16e-based WiMAX is interconnected with the MSO broadband network at the reference point CMRFI, which includes three modes, and the protocol stacks of the three modes in the path of TE->MS->BS->ASN->CMTS->MANAGED IP NETWORK are respectively shown in FIG. 6. This path is an end-to-end path for the 802.16e-based WiMAX to access the MSO network at the reference point CMRFI. This interconnection solution is mainly applicable for fixed and nomadic access applications, and also supports portable and mobile access applications to a certain extent.

The three modes of this implementation solution are respectively illustrated herein below.

### 1. Mode 1

In the path of TE->MS->BS->ASN->CMTS->MANAGED IP NETWORK, the Layer 2 bridging technology is employed between the Managed IP Network and the TE, for example, Ethernet bridging technology. The Layer 2 bridging technology indicates that the CMTS, all the network elements of ASN, and the MS are all Layer 2 network elements, and the 802.16e Layer 2 wireless access technology is employed between the BS and the MS to replace the DOCSIS Layer 2 wired access or to serve as a Layer 2 wireless extension of the DOCSIS Layer 2 wired access. The 802.16e Layer 2 wireless access technology (e.g., Ethernet bridging technology) supports the ETH CS at the airlink.

### 2. Mode 2

In the path of TE->MS->BS->ASN->CMTS->MANAGED IP NETWORK, the Layer 3 routing technology is employed between the Managed IP Network and the TE, for example, IP Layer 3 routing technology. The Layer 3 routing technology indicates that the CMTS, all the network elements of ASN, and the MS are all Layer 3 network elements, and an accessing manner over the 802.16e Layer 2 wireless access is employed on the IP layer between the BS and the MS to replace the DOCSIS wired access or to serve as a wireless extension of the DOCSIS wired access. The 802.16e Layer 2 wireless access technology supports the IP CS at the airlink.

### 3. Mode 3

In the path of MS->BS->ASN->CMTS->MANAGED IP NETWORK, the Layer 3 routing technology is employed between the Managed IP Network and the MS, for example, the IP Layer 3 routing technology. The Layer 3 routing technology indicates that the CMTS, all the network elements of ASN, and the MS are all Layer 3 network elements, and an accessing manner over the 802.16e Layer 2 wireless access is employed on the IP layer between the BS and the MS to replace the DOCSIS wired access or to serve as a wireless extension of the DOCSIS wired access. The 802.16e Layer 2 wireless access technology supports the IP CS at the airlink.

In terms of security of the above three modes, the 802.16 security sub-layer PKMv2 security architecture is employed between the MS and the BS.

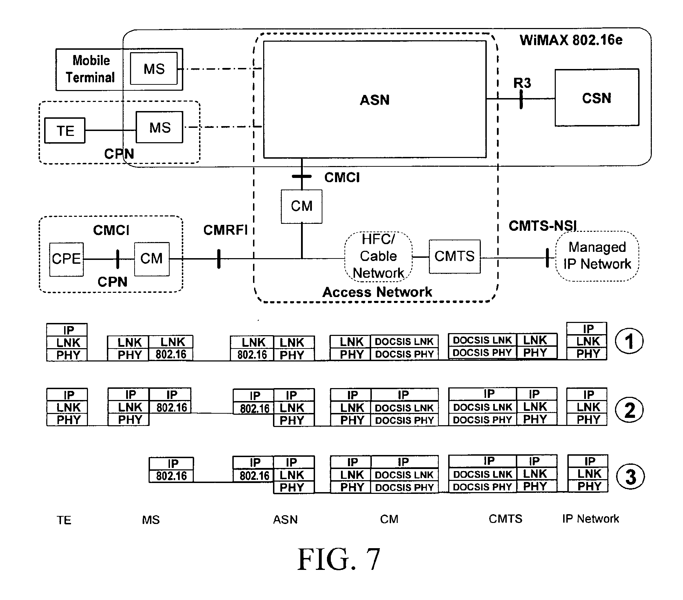

Solution 4: when the ASN of the 802.16e-based WiMAX does not include the CM function, a schematic view of an implementation solution for interconnecting the 802.16e-based WiMAX with the MSO network at the reference point CMRFI of the present invention is shown in FIG. 7.

It belongs to a tight-coupling solution that a CM is set in the MSO broadband network, and then the 802.16e-based WiMAX is connected with the CM through the reference point CMCI and then interconnected with the MSO broadband network at the reference point CMRFI. This solution includes three modes, and the protocol stacks of the three modes in the path of TE->MS->BS->CM->CMTS->MANAGED IP NETWORK are respectively shown in FIG. 7. This path is an end-to-end path for the 802.16e-based WiMAX to access the MSO network at the reference point CMRFI. This interconnection solution is mainly applicable for fixed and nomadic access applications, and further supports portable and mobile access applications to a certain extent.

The difference between this solution and the interconnection solution shown in FIG. 5 lies in that, the ASN of the solution shown in FIG. 6 includes the CM function (the CMCI is an internal interface of the network element, which is not made public to the other manufacturers); whereas in this solution, the ASN and the CM are different network elements and the reference point is publicly known and followed by the manufacturers. The three modes of this solution are exactly identical to the three modes of the interconnection solution shown in FIG. 6, which thus are not described herein repeatedly.

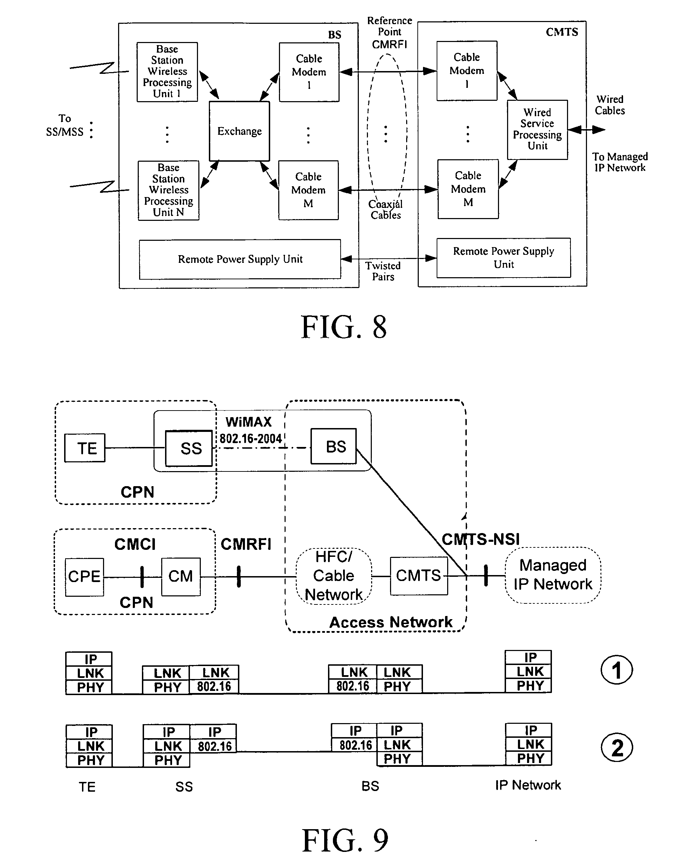

FIG 8 is a schematic view of an implementation structure of a system for interconnecting a base station equipment with the MSO network according to the present invention, in which the system includes a base station equipment, a CMTS, and a remote power supply equipment.

The base station equipment is used for being interconnected with the MSO network at the reference point CMRFI through one or more pairs of coaxial cables to accomplish the access services of wireless subscribers, performing DOCSIS modulation on data packets or frames of the accessed wireless subscribers and then outputting the modulated data packets or frames to the CMTS of the MSO network, and performing DOCSIS demodulation on data packets or frames transferred from the CMTS and then transferring the demodulated data packets or frames to the wireless subscribers. The base station equipment includes a base station wireless processing unit, a base station modem unit, a switching unit, and a base station remote power supply unit.

The CMTS is used for being interconnected with the base station equipment at the reference point CMRFI through one or more pairs of coaxial cables, performing DOCSIS demodulation on data packets or frames transferred from the base station equipment and then transferring the demodulated data packets or frames to the Managed IP Network of the MSO network through wired cables, and performing DOCSIS modulation on data packets or frames transferred from the Managed IP Network through wired cables and then transferring the modulated data packets or frames to the base station equipment. The CMTS includes an MSO cable modem unit, a wired service processing unit, and an MSO remote power supply unit.

The remote power supply equipment is optionally disposed, for converting mains input (e.g., 110V/220V AC) or DC input (e.g., -48V/-60V DC) into a high-voltage DC (e.g., 270V DC), and then outputting the high-voltage DC to remotely supply power to the remote base station equipment through wired cables (e.g., one or more pairs of twisted pairs). The distance of the remote power supply is relevant to the core diameter, number of pairs for the wired cables, power consumption of the outdoor unit for the base station, and output voltage of the remote power supply equipment. Generally, the power supply distance of up to 2 km-5 km can be achieved.

In the present invention, the base station equipment includes the base station wireless processing unit and the base station modem unit, and optionally includes the switching unit and/or the base station remote power supply unit. Each unit is respectively illustrated below.

The base station wireless processing unit is used for accomplishing the access services of wireless subscribers, transferring data packets or frames of the accessed wireless subscribers to the base station modem unit, and transferring data packets or frames transferred from the base station modem unit to the wireless subscribers. The base station wireless processing unit includes one or more processing units, and each processing unit is formed by an antenna, a radio frequency (RF) processing module, a medium-frequency processing module, a base band processing module, a processing module of wireless data link layer, and a processing module of layers over the wireless data link layer.

The base station modem unit is used for being interconnected with the MSO network at the reference point CMRFI through one or more pairs of coaxial cables, performing modulation or demodulation on data packets or frames transferred from the base station wireless processing unit and then transferring the modulated or demodulated data packets or frames to the CMTS of the MSO network, and performing modulation or demodulation on data packets or frames transferred from the CMTS and then transferring the modulated or demodulated data packets or frames to the base station wireless processing unit. The base station modem unit includes one or more cable modems. In Mode 2 and Mode 3 based on Layer 3 routing in Solution 3 and Solution 1, the base station modem unit supports the processing of IP layer, DOCSIS data link layer, and DOCSIS physical layer; and in Mode 1 based on Layer 2 bridging in Solution 3 and Solution 1, the unit supports the processing of DOCSIS data link layer and DOCSIS physical layer.

The switching unit is used for exchanging data packets or frames between each base station wireless processing unit and each cable modem. In Mode 2 and Mode 3 based on Layer 3 routing in Solution 3 and Solution 1, the switching unit is an IP switching unit; and in Mode I based on Layer 2 bridging in Solution 3 and Solution 1, the switching unit is a Layer 2 switching unit (e.g., Ethernet switching unit). If there are only one base station wireless processing unit and one cable modem, the switching unit can be omitted.

The base station remote power supply unit is used for converting the high-voltage DC (e.g., 270V DC) transferred from the remote power supply equipment or the MSO remote power supply unit of the CMTS into a low-voltage DC to locally supply power to a power supply unit of the base station equipment, or relaying the received high-voltage DC to remotely supply power to remote base station equipments in the next tier through wired cables. The base station remote power supply unit further supports intercommunications with the CMTS or the remote power supply equipment, so as to serve as an out-band management for the BS, thereby realizing surveillance alarm function during normal operations and system failures, which thus is convenient for the equipment management, fault location, and remote maintenance.

In the present invention, the CMTS includes the MSO cable modem unit and the wired service processing unit, and optionally includes the MSO remote power supply unit. Each unit is respectively illustrated below.

The MSO cable modem unit is used for being interconnected with the base station equipment at the reference point CMRFI through one or more pairs of coaxial cables, performing modulation or demodulation on data packets or frames transferred from the wired service processing unit and then transferring the modulated or demodulated data packets or frames to the base station equipment, and performing modulation or demodulation on data packets or frames transferred from the base station equipment and then transferring the modulated or demodulated data packets or frames to the wired service processing unit. In Mode 2 and Mode 3 based on Layer 3 routing in Solution 3 and Solution 1, the MSO cable modem unit supports the processing of IP layer, DOCSIS data link layer, and DOCSIS physical layer; and in Mode 1 based on Layer 2 bridging in Solution 3 and Solution 1, the unit supports the processing of DOCSIS data link layer and DOCSIS physical layer.

The wired service processing unit is used for processing data packets or frames transferred from the MSO cable modem unit and then transferring the processed data packets or frames to the Managed IP Network of the MSO network, and processing data packets or frames transferred from the Managed IP Network of the MSO network and then transferring the processed data packets or frames to the MSO cable modem unit. In Mode 2 and Mode 3 based on Layer 3 routing in Solution 3 and Solution 1, the wired service processing unit performs the processing of wired data link layer (e.g., Ethernet MAC layer) and provides a wired cable (e.g., Ethernet cable) interface as an uplink interface to access the Managed IP Network. In Mode 1 based on Layer 2 bridging in Solution 3 and Solution 1, the wired service processing unit performs the processing of wired data link layer (e.g., Ethernet MAC layer) and IP layer forwarding and provides a wired cable (e.g., Ethernet cable) interface as an uplink interface to access the Managed IP Network.

The MSO remote power supply unit in the CMTS has the same function as the remote power supply equipment, i.e., for providing a remote power supply.

**The present invention provides an implementation solution for interconnecting the broadband wireless network with the MSO network through a reference point CMTO-NSI according to a second embodiment, which is illustrated below in detail.**

The present invention provides a method and a system for interconnecting the BWA network with the MSO network, which focuses on interconnecting the WiMAX network with the MSO broadband network at a reference point CMTS-NSI.

The method for interconnecting the WiMAX network with the MSO broadband network of the present invention is illustrated first, which includes two solutions.

Solution 1: a schematic structural view of an implementation solution for interconnecting 802.16-2004-based WiMAX with the MSO broadband network at the reference point CMTS-NSI is shown in FIG. 9.

This interconnection solution belongs to a loose-coupling solution, which includes two modes, and the protocol stacks of the two modes in the path of TE->SS->BS->MANAGED IP NETWORK are respectively shown in FIG 9. This path is an end-to-end path for the 802.16-2004-based WiMAX to access the MSO network at the reference point CMTS-NSI. This interconnection solution is mainly applicable for fixed access applications, and supports uniform charging of services, uniform customer care, and uniform authentification.

The two modes of this solution are respectively illustrated herein below.

### 1. Mode 1

In the path of TE->SS->BS->MANAGED IP NETWORK, the Layer 2 bridging technology is employed between the Managed IP Network and the TE, for example, Ethernet bridging technology. Herein, the Layer 2 bridging technology indicates that the BS and the SS are both Layer 2 network elements, and the 802.16-2004 Layer 2 wireless access technology is employed between the BS and the SS to replace the DOCSIS Layer 2 wired access or to serve as a Layer 2 wireless extension of the DOCSIS Layer 2 wired access. The 802.16-2004 Layer 2 wireless access technology (e.g., Ethernet bridging technology) supports the ETH CS at the airlink, which thus avoids influences on the high-level network architecture.

### 2. Mode 2

In the path of TE->SS->BS->MANAGED IP NETWORK, the Layer 3 routing technology is employed between the Managed IP Network and the TE, for example, IP Layer 3 routing technology. Herein, the Layer 3 routing technology indicates that the BS and the SS are both Layer 3 network elements, and an accessing manner over the 802.16-2004 Layer 2 wireless access is employed on the IP layer between the BS and the SS to replace the DOCSIS wired access or to serve as a wireless extension of the DOCSIS wired access. The 802.16-2004 Layer 2 wireless access technology supports the IP CS at the airlink.

In terms of security of the two modes, the 802.16 security sub-layer PKM security architecture is employed between the SS and the BS.

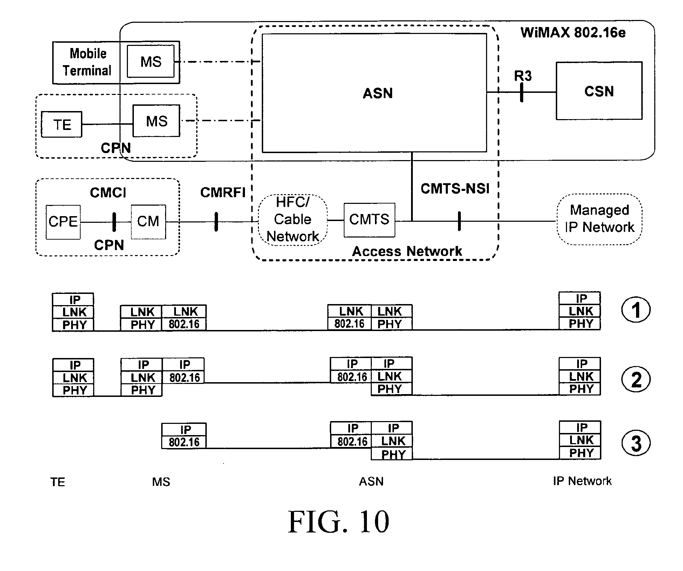

Solution 2: a schematic structural view of an implementation solution for interconnecting 802.16e-based WiMAX with the MSO broadband network at the reference point CMTS-NSI is shown in FIG. 10.

This interconnection solution belongs to a loose-coupling solution, which includes three modes, and the protocol stacks of the three modes in the path of TE->MS->BS->ASN->MANAGED IP NETWORK are respectively shown in FIG. 10. This path is an end-to-end path for the 802.16e-based WiMAX to access the MSO network at the reference point CMTS-NSI. This interconnection solution is mainly applicable for fixed and nomadic access applications, supports portable and mobile access applications to a certain extent, and further supports uniform charging of services, uniform customer care, and uniform authentification.

The three modes of this solution are respectively illustrated herein below.

### 1. Mode 1

In the path of TE->MS->BS->ASN->MANAGED IP NETWORK, the Layer 2 bridging technology is employed between the Managed IP Network and the TE, for example, Ethernet bridging technology. Herein, the Layer 2 bridging technology indicates that all the network elements of ASN and the MS are all Layer 2 network elements, and the 802.16e Layer 2 wireless access technology is employed between the BS and the MS to replace the DOCSIS Layer 2 wired access or to serve as a Layer 2 wireless extension of the DOCSIS Layer 2 wired access. The 802.16e Layer 2 wireless access technology (e.g., Ethernet bridging technology) supports the ETH CS at the airlink.

### 2. Mode 2

In the path of TE->MS->BS->ASN->MANAGED IP NETWORK, the Layer 3 routing technology is employed between the Managed IP Network and the TE, for example, IP Layer 3 routing technology. Herein, the Layer 3 routing technology indicates that all the network elements of ASN and the MS are all Layer 3 network elements, and an accessing manner over the 802.16e Layer 2 wireless access technology is employed on the IP layer between the BS and the MS to replace the DOCSIS wired access or to serve as a wireless extension of the DOCSIS wired access. The 802.16e Layer 2 wireless access technology supports the IP CS at the airlink.

### 3. Mode 3

In the path of MS->BS->ASN->MANAGED IP NETWORK, the Layer 3 routing technology is employed between the Managed IP Network and the MS, for example, IP Layer 3 routing technology. The Layer 3 routing technology indicates that all the network elements of ASN and the MS are all Layer 3 network elements, and an accessing manner over the 802.16e Layer 2 wireless access technology is employed on the IP layer between the BS and the MS to replace the DOCSIS wired access or to serve as a wireless extension of the DOCSIS wired access. The 802.16e Layer 2 wireless access technology supports the IP CS at the airlink.

In terms of security of the above three modes, the 802.16 security sub-layer PKMv2 security architecture is employed between the MS and the BS, and the DOCSIS security sub-layer security architecture is employed between the ASN and the CMTS.

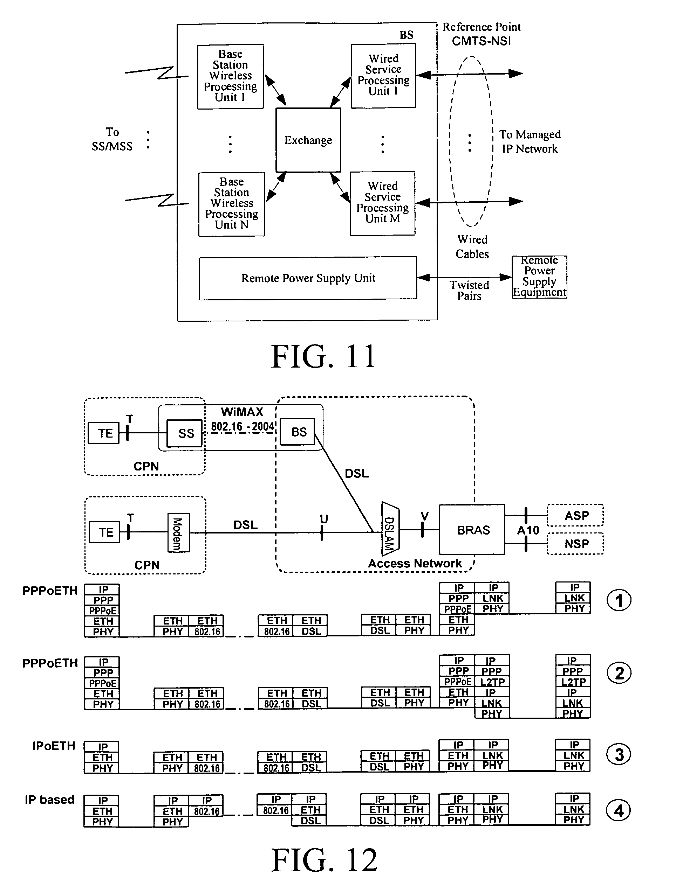

FIG. 11 is a schematic view of an implementation structure of a system for interconnecting the base station equipment with the MSO network, and the system includes a base station equipment and optionally includes a remote power supply equipment.

The base station equipment is used for being interconnected with the MSO network at the reference point CMRFI through one or more pairs of wired cables to accomplish the access services of wireless subscribers, processing data packets or frames of the accessed wireless subscribers and then transferring the processed data packets or frames to the Managed IP Network of the MSO network, and processing data packets or frames transferred from the Managed IP Network and then transferring the processed data packets or frames to the wireless subscribers.

The remote power supply equipment is used for converting mains input or DC input into a high-voltage DC, and then outputting the high-voltage DC to remotely supply power to the base station equipment through wired cables including twisted pairs.

The base station equipment includes a base station wireless processing unit and a base station wired service processing unit, and optionally includes a switching unit and/or a remote power supply unit. Each unit is respectively illustrated below.

The base station wireless processing unit is used for accomplishing the access services of wireless subscribers, transferring data packets or frames of the accessed wireless subscribers to the base station wired service processing unit, and transferring data packets or frames transferred from the base station wired service processing unit to the wireless subscribers. The base station wireless processing unit includes one or more processing units, and each unit is formed by an antenna, an RF processing module, a medium-frequency processing module, a base band processing module, a processing module of wireless data link layer, and a processing module of layers over the wireless data link layer.

The base station wired service processing unit is used for being interconnected with the MSO network at the reference point CMTS-NSI through one or more pairs of wired cables, processing data packets or frames transferred from the base station wireless processing unit and then transferring the processed data packets or frames to the Managed IP Network of the MSO network, and processing data packets or frames transferred from the Managed IP Network and then transferring the processed data packets or frames to the base station wireless processing unit. The base station wired service processing unit includes one or more processing units. In the mode based on Layer 3 routing, the base station wired service processing unit performs the processing of wired data link layer (e.g., Ethernet MAC layer) and provides a wired cable (e.g., Ethernet cable) interface as an uplink interface to access the Managed IP Network, and in the mode based on Layer 2 bridging, the unit performs the processing of wired data link layer (e.g., Ethernet MAC layer) and IP layer forwarding and provides a wired cable (e.g., Ethernet cable) interface as an uplink interface to access the Managed IP Network.

The switching unit is used for exchanging data packets or frames between each base station wireless processing unit and each base station wired service processing unit. In the mode based on Layer 3 routing, the switching unit is an IP switching unit, and in the mode based on Layer 2 bridging, the switching unit is a Layer 2 switching unit (e.g., Ethernet switching unit). If there are only one base station wireless processing unit and one base station wired service processing unit, the switching unit can be omitted.

The remote power supply unit is used for converting the high-voltage DC (e.g., 270V DC) transferred from the remote power supply equipment into a low-voltage DC to locally supply power to the power supply unit of the base station equipment, or relaying the received high-voltage DC to remotely supply power to remote base station equipments in the next tier through wired cables. The remote power supply unit further supports intercommunications with the remote power supply equipment, so as to serve as an out-band management for the BS, thereby realizing surveillance alarm function during normal operations and system failures, which thus is convenient for the equipment management, fault location, and remote maintenance.

**The present invention provides an implementation solution for interconnecting the broadband wireless network with a DSL network through a reference point U according to a third embodiment, which is illustrated below in detail.**

The present invention provides a method and a system for interconnecting the BWA network with a digital subscriber line (DSL) network, which focuses on the following two aspects: when the BS or ASN includes a DSL Modem function, the WiMAX network is interconnected with the DSL network at the reference point U; and when the BS or ASN does not include the DSL Modem function, a DSL Modem is added in the DSL network and then the WiMAX network is interconnected with the DSL network at the reference point U through the DSL Modem.

The method for interconnecting the WiMAX network with the DSL network of the present invention is first illustrated below, and when the BS in the WiMAX network includes the DSL Modem function, a schematic view of an implementation solution for interconnecting the 802.16-2004-based WiMAX with the DSL network at the reference point U is shown in FIG. 12.

The solution for interconnecting the BS of the 802.16-2004-based WiMAX with the DSL network at the reference point U includes four modes, namely, PPPoETH Mode 1, PPPoETH Mode 2, IPoETH Mode, and IP-based Mode, and the protocol stacks of the above four modes in the path of TE->SS->BS->DSLAM->BRAS->SP (ASP or NSP) are respectively shown in FIG. 12. This path is an end-to-end path for the 802.16-2004-based WiMAX to access the DSL network at the reference point U. This interconnection solution is mainly applicable for fixed access application.

The four modes of this solution are respectively illustrated herein below.

### 1. PPPoETH Mode 1

In the path of TE->SS->BS->DSLAM->BRAS->SP, the Layer 2 bridging technology may only be employed between the BRAS and the TE, for example, Ethernet bridging technology. Herein, the Layer 2 bridging technology indicates that the BS, SS, and DSLAM are all Layer 2 network elements. In the mode of Layer 2 bridging, the 802.16-2004 Layer 2 wireless access technology is employed between the BS and the SS to replace a DSL Layer 2 wired access or to serve as a Layer 2 wireless extension of the DSL Layer 2 wired access. The 802.16-2004 Layer 2 wireless access technology supports the ETH CS at the airlink, which thus avoids influences on the high-level network architecture. In order to support the whole service, the PPP protocol is employed between the TE and the SP to serve as a mechanism for address allocation and authentification, and the PPP over Ethernet is supported between the BRAS and the TE to serve as a link protocol for controlling and managing the terminal configuration and connection. This mode is applicable for the pure data services.

### 2. PPPoETH Mode 2

In addition to all the characteristics of the PPPoETH Mode 1, this mode further employs a tunneling protocol between a broadband access edge equipment (such as broadband remote access server (BRAS)) of the network operator and the SP, for example, Layer 2 Tunneling Protocol (L2TP) or Multi-Protocol Label Switching (MPLS) Tunneling. The tunneling protocol is used for distinguishing different service providers.

### 3. IPoETH Mode

In the path of TE->SS->BS->DSLAM->BRAS->SP, the Layer 2 bridging technology may only be employed between the BRAS and the TE, for example, Ethernet bridging technology. Herein, the Layer 2 bridging technology indicates that the BS, SS, and DSLAM are all Layer 2 network elements. In the mode of Layer 2 bridging, the 802.16-2004 Layer 2 wireless access is employed between the BS and the SS to replace the DSL Layer 2 wired access or to serves as a Layer 2 wireless extension of the DSL Layer 2 wired access. The 802.16-2004 Layer 2 wireless access technology supports the IP CS at the airlink, which thus avoids influences on the high-level network architecture. The mode supports the QoS Provisioning, and totally relies on the DHCP to provide identification and configuration functions for the TE. This mode is mainly applicable for Triple play (providing data + voice + video) services.

### 4. IP-based Mode

In the path of TE->SS->BS->DSLAM->BRAS->SP, the Layer 3 routing technology must be employed between the BRAS and the TE, for example, IP Layer 3 routing technology. Herein, the Layer 3 routing technology indicates that the BS, SS, and DSLAM are all Layer 3 network elements. In the mode of the Layer 3 routing, an accessing manner over the 802.16-2004 Layer 2 wireless access is employed on the IP layer between the BS and the SS to replace the DSL wired access or to serve as a wireless extension of the DSL wired access. The mode must employ the IP Layer 3 routing technology between the BRAS and the TE, which supports the QoS Provisioning, totally relies on the DHCP to provide identification and configuration functions for the TE, and completes a suitable routing configuration at the DHCP discovery stage. The mode is mainly applicable for Triple play (providing data + voice + video) services.

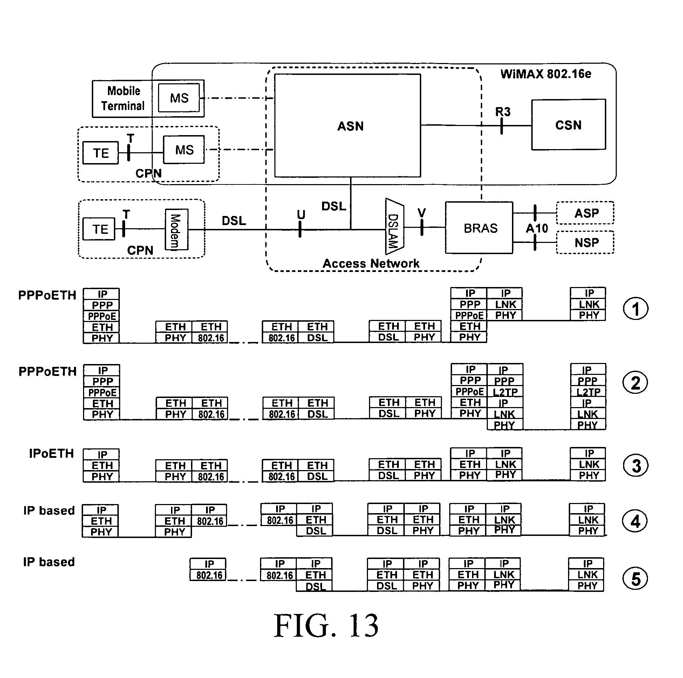

When the ASN includes the DSL Modem function, a schematic view of an implementation solution for interconnecting the 802.16e-based WiMAX with the DSL network at the reference point U is shown in FIG. 13.

The solution for interconnecting the ASN of the 802.16e-based WiMAX with the DSL network at the reference point U includes five modes, namely, PPPoETH Mode 1, PPPoETH Mode 2, PPPoETH Mode 3, IP-based Mode 1, and IP-based Mode 2, and the protocol stacks of the five modes in the path of TE->MS->ASN->DSLAM->BRAS->SP (ASP or NSP) are respectively shown in FIG. 13. This path is an end-to-end path for the 802.16e-based WiMAX to access the DSL network at the reference point U. The interconnection solution is mainly applicable for fixed and nomadic access applications, and also supports potable and mobile access applications to a certain extent.

The five modes of this solution are respectively illustrated herein below.

### 1. PPPoETH Mode 1

In the path of TE->MS->ASN->DSLAM->BRAS->SP, the Layer 2 bridging technology may only be employed between the BRAS and the TE, for example, Ethernet bridging technology. Herein, the Layer 2 bridging technology indicates that all the network elements of ASN and the DSLAM are all Layer 2 network elements. In the mode of Layer 2 bridging, the 802.16e Layer 2 wireless access technology is employed between the ASN and the MS to replace the DSL Layer 2 wired access or to serve as a Layer 2 wireless extension of the DSL Layer 2 wired access. The 802.16e Layer 2 wireless access technology supports the ETH CS at the airlink, which thus avoids influences on the high-level network architecture. In order to support the whole service, the PPP protocol is employed between the TE and the SP to serve as a mechanism for address allocation and authentification, and the PPP over Ethernet is supported between the BRAS and the TE to serve as a link protocol for controlling and managing the terminal configuration and connection. This mode employs radio resource management, load balance, and security attribute of 802.16e, which is mainly applicable for fixed and nomadic pure data service access applications.

### 2. PPPoETH Mode 2

In addition to all the characteristics of the PPPoETH Mode 1, this mode further employs a tunneling protocol between the BRAS of the network operator and the SP, for example, L2TP or MPLS Tunneling. The tunneling protocol is used for distinguishing different service providers.

### 3. IPoETH Mode 3

In the path of TE->MS->ASN->DSLAM->BRAS->SP, the Layer 2 bridging technology may only be employed between all the network elements of ASN and the TE, for example, Ethernet bridging technology. Herein, the Layer 2 bridging technology indicates that all the network elements of ASN and the DSLAM are all Layer 2 network elements. Under the Layer 2 bridging, the 802.16e Layer 2 wireless access technology is employed between the ASN and the MS to replace the DSL Layer 2 wired access or serve as a Layer 2 wireless extension of the DSL Layer 2 wired access. The 802.16e Layer 2 wireless access technology supports the IP CS at the airlink, which thus avoids influences on the high-level network architecture. This mode supports QoS Provisioning, employs the 802.16 security sub-layer PKMv2 security architecture in terms of security of the mode, and relies on the PKMv2 and DHCP to control and manage the terminal configuration and connection. This mode is mainly applicable for fixed and nomadic Triple play (providing data + voice + video) service access applications.

### 4. IP-based Mode 1

In the path of TE->MS->ASN->DSLAM->BRAS->SP, the Layer 3 routing technology must be employed between the BRAS and the TE, for example, IP Layer 3 routing technology. Herein, the Layer 3 routing technology indicates that all the network elements of ASN and the DSLAM are all Layer 3 network elements. Under the Layer 3 routing, an accessing manner over the 802.16e Layer 2 wireless access technology is employed on the IP layer between the ASN and the MS to replace the DSL wired access or to serve as a wireless extension of the DSL wired access. The Layer 3 routing technology supports IP CS at the airlink. This mode must employ the IP Layer 3 routing technology between the BRAS and the TE, which supports the QoS Provisioning, employs the 802.16 security sub-layer PKMv2 security architecture in terms of security of the mode, and relies on the PKMv2 and DHCP to control and manage the terminal configuration and connection. This mode is mainly applicable for fixed and nomadic Triple play (providing data + voice + video) service access applications.

### 5. IP-based Mode 2

In the path of MS->ASN->DSLAM->BRAS->SP, the Layer 3 routing technology must be employed between the BRAS and the TE, for example, IP Layer 3 routing technology. Herein, the Layer 3 routing technology indicates that all the network elements of ASN and the DSLAM are all Layer 3 network elements. Under the Layer 3 routing, an accessing manner over the 802.16e Layer 2 wireless access technology is employed on the IP layer between the ASN and the MS to replace the DSL wired access or to serve as a wireless extension of the DSL wired access. The Layer 3 routing technology supports the IP CS at the airlink. This mode must employ the IP Layer 3 routing technology between the BRAS and the TE, which supports the QoS Provisioning, employs the 802.16 security sub-layer PKMv2 security architecture in terms of security of the mode, and relies on the PKMv2 and DHCP to control and manage the terminal configuration and connection. This mode mainly supports the portable and mobile access applications to a certain extent, which is also applicable for fixed and nomadic access applications, and mainly applicable for Triple play (providing data + voice + video) services.

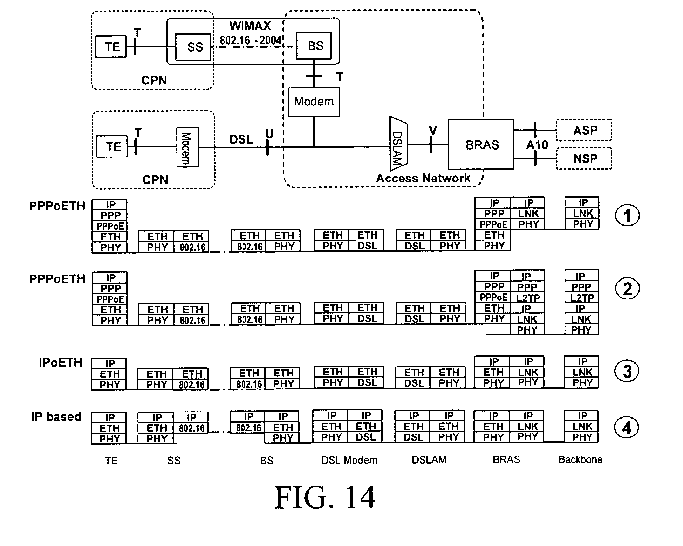

When the BS in the WiMAX network does not include the DSL Modem function, a schematic view of an implementation solution for interconnecting 802.16-2004-based WiMAX with the DSL network at a reference point T of the present invention is shown in FIG. 14.

A DSL Modem is added at the interface U of the DSL network, and then the BS of the 802.16-2004-based WiMAX is interconnected with the DSL Modem through the reference point T and then interconnected with the DSL network at the reference point U. This solution includes four modes, namely, PPPoETH Mode 1, PPPoETH Mode 2, IPoETH Mode, and IP-based Mode, and the protocol stacks of all the four modes in the path of TE->SS->BS->DSL Modem->DSLAM->BRAS->SP (ASP or NSP) are respectively shown in FIG 14. This path is an end-to-end path for the 802.16-2004-based WiMAX to access the DSL network at the reference point T. The interconnection solution is mainly applicable for fixed access application. The four modes of this solution are exactly identical to the four modes of the above solution for interconnecting the 802.16-2004-based WiMAX with the DSL network at the reference point U, which thus are not described repeatedly.

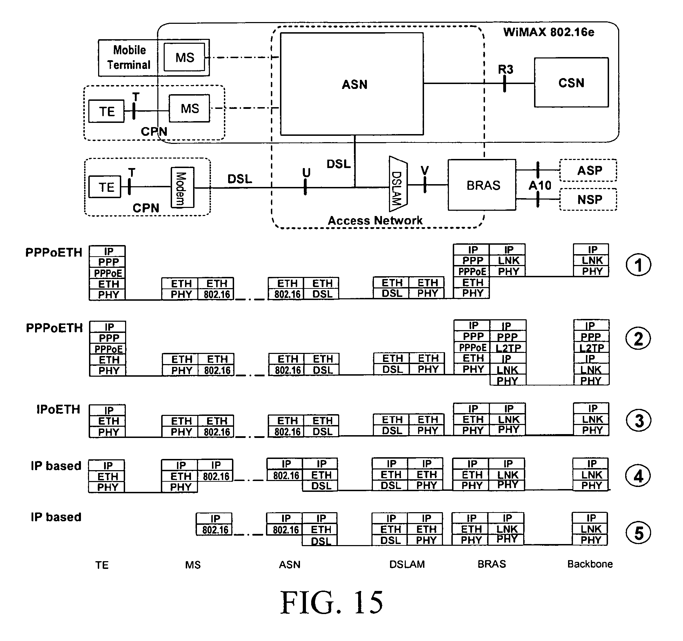

When the ASN in the WiMAX network does not include the DSL Modem function, a schematic view of an implementation solution for interconnecting 802.16e-based WiMAX with the DSL network at the reference point T of the present invention is shown in FIG 15.

A DSL Modem is added at the interface U of the DSL network, and then the ASN in the 802.16e-based WiMAX is interconnected with the DSL Modem through the reference point T and then interconnected with the DSL network at the reference point U. This solution includes five modes, namely, PPPoETH Mode 1, PPPoETH Mode 2, PPPoETH Mode 3, IP-based Mode 1, and IP-based Mode 2, and the protocol stacks of the five modes in the path of TE->MS->ASN->DSL Modem->DSLAM->BRAS->SP (ASP or NSP) are respectively shown in FIG. 15. This path is an end-to-end path for the 802.16e-based WiMAX to access the DSL network at the reference point T. The interconnection solution is mainly applicable for fixed and nomadic access applications, and supports portable and mobile access applications to a certain extent. The five modes of this solution are exactly identical to the five modes of the above solution for interconnecting the 802.16e-based WiMAX with the DSL network at the reference point T, which thus are not described repeatedly.

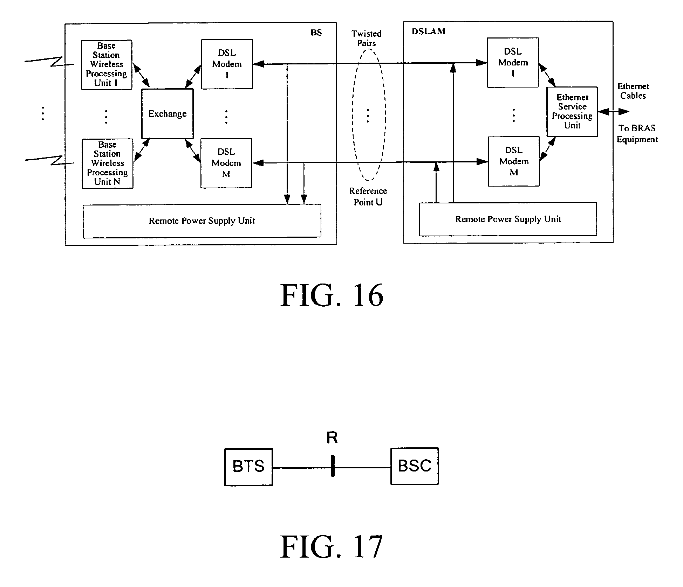

A structural view of an implementation structure of a system for interconnecting the base station equipment with the DSL network of the present invention is shown in FIG. 16, and the system includes a base station equipment and a DSLAM equipment, and optionally includes a remote power supply equipment.

The base station equipment is used for being interconnected with the DSL network at the reference point U through one or more pairs of twisted pairs to accomplish the access services of wireless subscribers, performing DSL modulation on data packets or frames of the accessed wireless subscribers and then transferring the modulated data packets or frames to the DSLAM equipment of the DSL network, and performing DSL demodulation on data packets or frames transferred from the DSLAM equipment and then transferring the demodulated data packets or frames to the wireless subscribers. The base station equipment includes a base station wireless processing unit, a base station equipment DSL modem unit, a switching unit, and a base station remote power supply unit.

The DSLAM equipment is used for being interconnected with the base station equipment at the reference point U through one or more pairs of twisted pairs, performing DSL demodulation on data packets or frames transferred from the base station equipment and then transferring the demodulated data packets or frames to the BRAS of the DSL network, and performing DSL modulation on data packets or frames transferred from the BRAS and then transferring the modulated data packets or frames to the base station equipment. The DSLAM equipment includes a DSL modem unit, an Ethernet service processing unit, and a DSL remote power supply unit.

The remote power supply equipment is used for converting mains input (e.g., 110V/220V AC) or DC input (e.g., -48V/-60V DC) into a high-voltage DC (e.g., 270V DC), and then outputs the high-voltage DC to remotely supply power to the remote base station equipment through wired cables (e.g., one or more pairs of twisted pairs). The distance of the remote power supply is relevant to the core diameter, number of pairs for the wired cables, power consumption of the outdoor unit for the base station, and output voltage of the remote power supply equipment. Generally, the power supply distance of up to 2 km-5 km can be achieved.

The base station equipment in the system includes the base station wireless processing unit and the base station equipment DSL modem unit, and optionally includes the switching unit and/or the base station remote power supply unit. Each unit is respectively illustrated below.

The base station wireless processing unit is used for accomplishing the access services of wireless subscribers, transferring data packets or frames of the accessed wireless subscribers to the base station equipment DSL modem unit, and transferring data packets or frames transferred from the base station equipment DSL modem unit to the wireless subscribers. The base station wireless processing unit includes one or more processing units, and each unit is formed by an antenna, an RF processing module, a medium-frequency processing module, a base band processing module, a processing module of wireless data link layer, and a processing module of layers over the wireless data link layer.

The base station equipment DSL modem unit is used for being interconnected with the DSL network at the reference point U through one or more pairs of twisted pairs, performing modulation on data packets or frames transferred from the base station wireless processing unit and then transferring the modulated data packets or frames to the DSLAM equipment of the DSL network, and performing demodulation on data packets or frames transferred from the DSLAM equipment and then transferring the demodulated data packets or frames to the base station wireless processing unit. The base station equipment DSL modem unit includes one or more DSL modems. In the IP-based mode in the TE to SP path, the base station equipment DSL modem unit supports the processing of IP layer, Ethernet MAC layer, and DLS physical layer, and in the PPPoETH mode and IPoETH mode, the unit supports the processing of Ethernet MAC layer and DLS physical layer.

The switching unit is used for exchanging data packets or frames between each base station wireless processing unit and each DSL modem, and in the IP-based mode in the TE to SP path, the switching unit is an IP switching unit; and in the PPPoETH mode and IPoETH mode, the switching unit is an Ethernet switching unit. If there are only one base station wireless processing unit and one DSL modem, the switching unit can be omitted.

The base station remote power supply unit is used for converting the high-voltage DC (e.g., 270V DC) transferred from the remote power supply equipment or the DSL remote power supply unit of the DSLAM equipment into a low-voltage DC to locally supply power to the power supply unit of the base station equipment, or relaying the received high-voltage DC to remotely supply power to remote base station equipments in the next tier through wired cables. The base station remote power supply unit further supports intercommunications with the DSLAM or the remote power supply equipment, so as to serve as an out-band management for the BS, thereby realizing surveillance alarm function during normal operations and system failures, which thus is convenient for the equipment management, fault location, and remote maintenance.

The DSLAM equipment in the system includes the DSL modem unit and the Ethernet service processing unit, and optionally includes the DSL remote power supply unit. Each unit is respectively illustrated below.

The DSL modem unit is used for being interconnected with the base station equipment at the reference point U through one or more pairs of twisted pairs, performing modulation on data packets or frames transferred from the Ethernet service processing unit and then transferring the modulated data packets or frames to the base station equipment, and performing demodulation on data packets or frames transferred from the base station equipment and then transferring the demodulated data packets or frames to the Ethernet service processing unit. In the IP-based mode in the TE to SP path, the DSL modem unit supports the processing of IP layer, Ethernet MAC layer, and DLS physical layer, and in the PPPoETH mode and IPoETH mode, the unit supports the processing of Ethernet MAC layer and DLS physical layer.

The Ethernet service processing unit is used for processing data packets or frames transferred from the DSL modem unit and then transferring the processed data packets or frames to the BRAS of the DSL network, and processing data packets or frames transferred from the BRAS of the DSL network and then transferring the processed data packets or frames to the DSL modem unit. In the IP-based mode in the TE to SP path, the Ethernet service processing unit performs the processing of Ethernet MAC layer and provides an Ethernet cable interface as an uplink interface/cascade interface to connect with the BRAS equipment, and in the PPPoETH mode and IPoETH mode, the Ethernet service processing unit performs the processing of Ethernet MAC layer and IP layer forwarding and provides an Ethernet cable interface as an uplink interface/cascade interface to connect with the BRAS equipment.

The DSL remote power supply unit in the above DSLAM equipment has the same function as the remote power supply equipment, i.e., for providing a remote power supply.

**The present invention provides an implementation solution for interconnecting the broadband wireless network with the DSL network according to a fourth embodiment. In this embodiment, the broadband wireless network equipment is divided into two network element entities, and then the interconnection of the two networks is implemented through the reference point V, U, or T, which is not illustrated below in detail.**

The present invention provides a method and a system for interconnecting the broadband fixed wireless access network with the DSL network, which focuses on dividing the network element BS of 802.16-2004 into two network element entities, namely, BTS and BSC; and then interconnecting the 802.16-2004-based WiMAX with the DSL network at the reference point V, U, or T of the DSL access network.

That is to say, the network element BS of 802.16-2004 can be divided into two network element entities, namely, BTS and BSC, and a reference point between the BTS and the BSC is set as R. A schematic view of dividing the BS into BTS and BSC is shown in FIG. 17, and the individual functions of the BTS and the BSC are respectively shown in Table 1.

**Table 1 Function Mapping Table of BTS and BSC**

| **Function** | **BTS** | **BSC** |
|---|---|---|
| **MAC/PHY Function** | | |
| • MAC PDU Generation | Support | |
| • Link Adaptation | Support | |
| • ARQ or HARQ | Support | |
| • Scheduling | Support | |
| • BW Assignment | | Support |
| • Packet Classification | | Support |
| • ARQ Control | | Support |
| • Service Flow Management (SFID/CID Assignment) | | Support |
| • Service Flow Management (SFID/CID Mapping) | Support | |
| • Payload Header Suppression | | Support |
| **Security/Authentication** | | |
| • MAC Encryption/Decryption | Support | |
| • Authenticator | | Support |
| • Key Management | | Support |
| • Authentication Relay | Support | |
| • HMAC Calculation | Support | |
| • HMAC Verification | | Support |
| • AAA Client | Support | |
| • AAA Proxy | | Support |
| **Radio Resource Management (RRM)** | | |
| • Radio Resource Agent | Support | |
| • Radio Resource Controller | | Support |
| **Policy Management (Service, Access, Security, QoS)** | | |
| • Policy Decision Function (PDF) | | Support |
| • Policy Enforcement | Support | Support |
| **QoS** | | |
| • Airlink Admission Control | Support | |
| • Network Admission Control | | Support |

After the BS is divided into the BTS and the BSC, the BTS and the BSC are used to interconnect the 802.16-2004-based WiMAX with the DSL network at the reference point V, U, or T of the DSL access network, and the interconnection solutions at the reference point V, U, or T are respectively illustrated below.

### 1. The solution for interconnecting the 802.16-2004-based WiMAX with the DSL network at the reference point V of the access network.

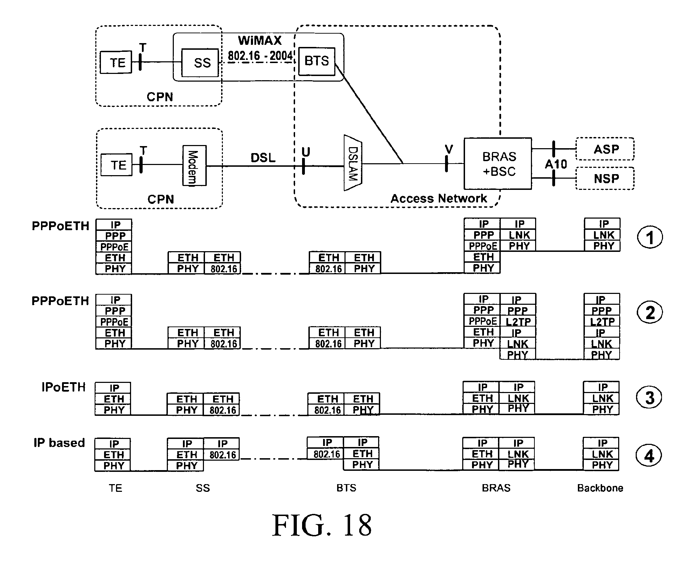

A schematic view of an implementation solution for interconnecting the 802.16-2004-based WiMAX with the DSL network at the reference point V of the access network is shown in FIG. 18. In this solution, the BSC and the BRAS of the DSL network are formed into a new network element, and the BSC belongs to the BS in terms of function. The solution mainly includes four modes, namely, PPPoETH Mode 1, PPPoETH Mode 2, IPoETH Mode 3, and IP-based Mode 4, and the protocol stacks of the four modes in the path of TE->SS->BTS-> BRAS+BSC->SP (ASP or NSP) are respectively shown in FIG 18. This path is an end-to-end path for the 802.16-2004-based WiMAX to access the DSL network at the reference point V. This interconnection solution is, but not limited to, applicable for fixed wireless access applications, and supports uniform charging of services, uniform customer care, and uniform authentification.

### 1-1. PPPoETH Mode 1

In the path of TE->SS->BTS->BRAS+BSC->SP, the Layer 2 bridging technology is employed between the BRAS+BSC and the TE, for example, Ethernet bridging technology. The Layer 2 bridging technology indicates that the BTS and the SS are both Layer 2 network elements, and the 802.16-2004 Layer 2 wireless access technology is employed between the BS and the SS to replace the DSL Layer 2 wired access or to serve as a Layer 2 wireless extension of the DSL Layer 2 wired access. The 802.16-2004 Layer 2 wireless access technology supports the ETH CS at the airlink, which thus avoids influences on the high-level network architecture. In order to support the whole service, the PPP over Ethernet is supported between the BRAS and the TE as a link protocol and as a mechanism for address allocation and authentification, and for controlling and managing the terminal configuration and connection. This mode is, but not limited to, applicable for pure data services.

### 1-2. PPPoETH Mode 2

In addition to all the characteristics of the PPPoETH Mode 1, this mode further employs a tunneling protocol between BRAS+BSC of the network operator and the SP, for example, L2TP or MPLS Tunneling. Furthermore, the tunneling protocol is used for distinguishing different service providers.

### 1-3. IPoETH Mode 3

In the path of TE->SS->BTS->BRAS+BSC->SP, the Layer 2 bridging technology may only be employed between the BRAS+BSC and the TE, for example, Ethernet bridging technology. The Layer 2 bridging technology indicates that the BTS and the SS are both Layer 2 network elements, and the 802.16-2004 Layer 2 wireless access technology is employed between the BTS and the SS to replace the DSL Layer 2 wired access or to serve as a Layer 2 wireless extension of the DSL Layer 2 wired access. The 802.16-2004 Layer 2 wireless access technology supports the ETH CS at the airlink, which thus avoids influences on the high-level network architecture. This mode supports QoS Provisioning, and completely relies on the DHCP to provide identification and configuration functions for the TE. This mode is, but not limited to, applicable for Triple play (providing data + voice + video) services.

### 1-4. IP-based Mode 4

In the path of TE->SS->BTS->BRAS+BSC->SP, the Layer 3 routing technology must be employed between the BRAS+BSC and the TE, for example, IP Layer 3 routing technology. The Layer 3 routing technology indicates that the BTS and the SS are both Layer 3 network elements, and an accessing manner over the 802.16-2004 Layer 2 wireless access technology is employed on the IP layer between the BTS and the SS to replace the DSL wired access or to serve as a wireless extension of the DSL wired access. The 802.16-2004 Layer 2 wireless access technology supports the ETH CS at the airlink. This mode must employ the IP Layer 3 routing technology between the BRAS and the TE, which supports the QoS Provisioning, and completely relies on the DHCP to provide identification and configuration functions for the TE. This mode is, but not limited to, applicable for Triple play (providing data + voice + video) services.

### 2. The solution for interconnecting the 802.16-2004-based WiMAX with the DSL network at the reference point U of the access network

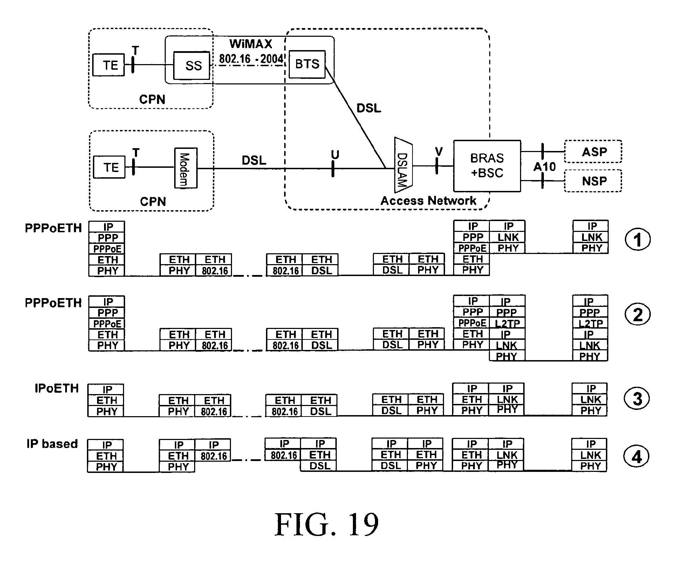

A schematic view of an implementation solution for interconnecting the 802.16-2004-based WiMAX with the DSL network at the reference point U of the access network is shown in FIG. 19. In this solution, the BSC and the BRAS of the DSL network are formed into a new network element (as shown in FIG 19), or the BSC and the DSLAM are formed into a new network element, and the BSC belongs to BS in terms of function. The solution mainly includes four modes, namely, PPPoETH Mode 1, PPPoETH Mode 2, IPoETH Mode 3, and IP-based Mode 4, and the protocol stacks of the four modes in the path of TE->SS->BTS->DSLAM->BRAS+BSC->SP (ASP or NSP) are respectively shown in FIG 19. This path is an end-to-end path for the 802.16-2004-based WiMAX to access the DSL network at the reference point U. This interconnection solution is, but not limited to, applicable for fixed wireless access applications, and supports uniform charging of services, uniform customer care, and uniform authentification.

### 2-1. PPPoETH Mode 1

In the path of TE->SS->BTS->DSLAM->BRAS+BSC->SP, the Layer 2 bridging technology is employed between the BRAS+BSC and the TE, for example, Ethernet bridging technology. The Layer 2 bridging technology indicates that the BTS, SS, and DSLAM are all Layer 2 network elements, and the 802.16-2004 Layer 2 wireless access technology is employed between the BS and the SS to replace the DSL Layer 2 wired access or to serve as a Layer 2 wireless extension of the DSL Layer 2 wired access. The 802.16-2004 Layer 2 wireless access technology supports the ETH CS at the airlink, which thus avoids influences on the high-level network architecture. In order to support the whole service, the PPP over Ethernet is supported between the BRAS and the TE as a link protocol and as a mechanism for address allocation and authentification, and for controlling and managing the terminal configuration and connection. This mode is applicable for pure data services.

### 2-2. PPPoETH Mode 2

In addition to all the characteristics of the PPPoETH Mode 1, this mode further employs a tunneling protocol between BRAS+BSC of the network operator and the SP, for example, L2TP or MPLS Tunneling. The tunneling protocol is used for distinguishing different service providers.

### 2-3. IPoETH Mode 3

In the path of TE->SS->BTS->DSLAM->BRAS+BSC->SP, the Layer 2 bridging technology may only be employed between the BRAS+BSC and the TE, for example, Ethernet bridging technology. Herein, the Layer 2 bridging technology indicates that the BTS, SS, and DSLAM are all Layer 2 network elements, and the 802.16-2004 Layer 2 wireless access technology is employed between the BTS and the SS to replace the DSL Layer 2 wired access or to serve as a Layer 2 wireless extension of the DSL Layer 2 wired access. The 802.16-2004 Layer 2 wireless access technology supports the ETH CS at the airlink, which thus avoids influences on the high-level network architecture. This mode supports the QoS Provisioning, and completely relies on the DHCP to provide identification and configuration functions for the TE. This mode is, but not limited to, applicable for Triple play (providing data + voice + video) services.

### 2-4. IP-based Mode 4

In the path of TE->SS->BTS->DSLAM->BRAS+BSC->SP, the Layer 3 routing technology must be employed between the BRAS+BSC and the TE, for example, IP Layer 3 routing technology. The Layer 3 routing technology indicates that the BTS, SS, and DSLAM are all Layer 3 network elements, and an accessing manner over the 802.16-2004 Layer 2 wireless access technology is employed on the IP layer between the BTS and the SS to replace the DSL wired access or to serve as a wireless extension of the DSL wired access. The 802.16-2004 Layer 2 wireless access technology supports the ETH CS at the airlink. This mode must employ the IP Layer 3 routing between the BRAS and the TE, which supports the QoS Provisioning, and completely relies on the DHCP to provide identification and configuration functions for the TE. This mode is, but not limited to, applicable for Triple play (providing data + voice + video) services.

### 3. The solution for interconnecting the 802.16-2004-based WiMAX with the DSL network at the reference point T of the access network

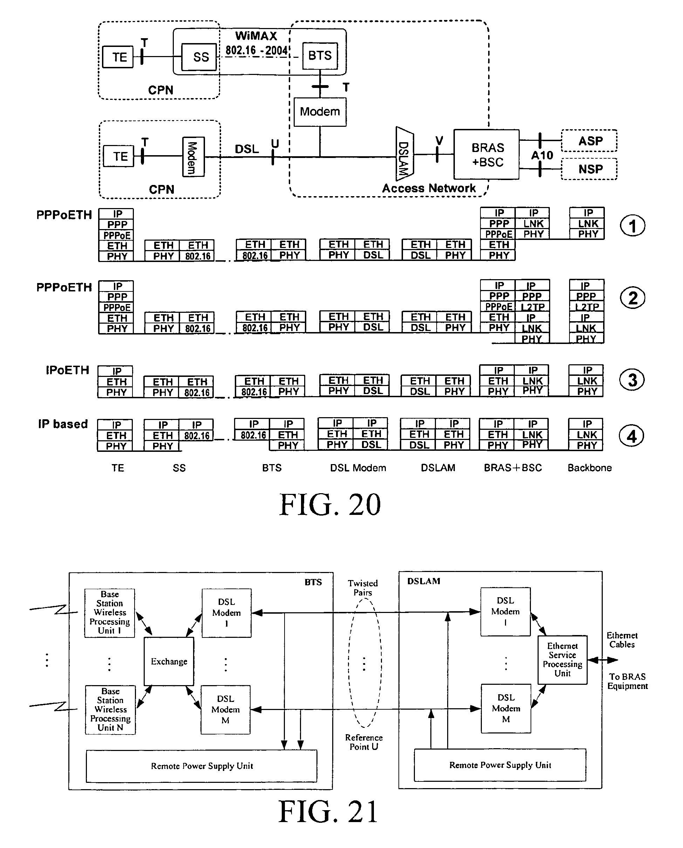

A schematic view of an implementation solution for interconnecting the 802.16-2004-based WiMAX with the DSL network at the reference point T of the access network is shown in FIG 20. In this solution, the BSC and the BRAS of the DSL network are formed into a new network element (as shown in FIG 20), or the BSC and the DSLAM are formed into a new network element, and the BSC belongs to the BS in terms of function. A DSL Modem is added at the U interface of the DSL network, and then the BTS of the 802.16-2004-based WiMAX is interconnected with the DSL Modem through the reference point T and then interconnected with the DSL network at the reference point U. The solution mainly includes four modes, namely, PPPoETH Mode 1, PPPoETH Mode 2, IPoETH Mode 3, and IP-based Mode 4, and the protocol stacks of the above four modes in the path of TE->SS->BTS->DSL Modem->DSLAM->BRAS+BSC->SP (ASP or NSP) are respectively shown in FIG. 20. This interconnection solution is, but not limited to, applicable for fixed access applications.

This solution is different from the above interconnection solution implemented through the reference point U in that: the BTS in the above interconnection solution implemented through the reference point U includes the DSL Modem function, and T is an internal interface of the BTS network element, which is not made public to the other manufacturers; whereas in this solution, the BTS and the DSL Modem are different network elements, and the reference point T is publicly known and followed by the manufacturers. The four modes of this solution are identical to those of the above interconnection solution implemented through the reference point U, except for an additionally-added DSL Modem network element, which thus will not be described herein.

A schematic view of an implementation structure of a system for interconnecting a base station transceiver equipment with the DSL network according to the present invention is shown in FIG. 21, and the system includes a base station transceiver equipment and a DSLAM equipment, and optionally includes a remote power supply equipment.

The base station transceiver equipment is used for being interconnected with the DSL network at the reference point V through one or more pairs of twisted pairs to accomplish the access services of wireless subscribers, performing DSL modulation on data packets or frames of the accessed wireless subscribers and then transferring the modulated data packets or frames to the DSLAM equipment of the DSL network, and performing DSL demodulation on data packets or frames transferred from the DSLAM equipment and then transferring the demodulated data packets or frames to the wireless subscribers. The base station transceiver equipment includes a base station wireless processing unit, a base station transceiver DSL modem unit, a switching unit, and a base station transceiver remote power supply unit.

The DSLAM equipment is used for being interconnected with the base station transceiver equipment at the reference point V through one or more pairs of twisted pairs, performing DSL demodulation on data packets or frames transferred from the base station transceiver equipment and then transferring the demodulated data packets or frames to the network element formed by the BRAS of the DSL network and the BSC, and performing DSL modulation on data packets or frames transferred from the network element formed by the BRAS and the BSC and then transferring the modulated data packets or frames to the base station transceiver equipment. The DSLAM equipment includes a DSL modem unit, an Ethernet service processing unit, and a DSL remote power supply unit.

The remote power supply equipment is used for converting mains input (e.g., 110V/220V AC) or DC input (e.g., -48V/-60V DC) into a high-voltage DC (e.g., 270V DC), and then outputs the high-voltage DC to remotely power supply to a remote base station transceiver equipment through wired cables (e.g., one or more pairs of twisted pairs). The distance of the remote power supply is relevant to the core diameter, number of pairs for the wired cable, power consumption of the outdoor unit for the base station, and output voltage of the remote power supply equipment. Generally, the power supply distance of up to 2 km-5 km can be achieved.

The base station transceiver equipment in the system includes the base station wireless processing unit and the base station transceiver DSL modem unit, and optionally includes the switching unit and/or the base station transceiver remote power supply unit. Each unit is respectively illustrated below.

The base station wireless processing unit is used for accomplishing the access services of wireless subscribers, transferring data packets or frames of the accessed wireless subscribers to the base station transceiver DSL modem unit, and transferring data packets or frames transferred from the base station transceiver DSL modem unit to the wireless subscribers. The base station wireless processing unit includes one or more processing units, and each unit is formed by an antenna, an RF processing module, a medium-frequency processing module, a base band processing module, a processing module of wireless data link layer, and a processing module of layers over the wireless data link layer.

The base station transceiver DSL modem unit is used for being interconnected with the DSL network at the reference point U through one or more pairs of twisted pairs, performing modulation on data packets or frames transferred from the base station wireless processing unit and then transferring the modulated data packets or frames to the DSLAM equipment of the DSL network, and performing demodulation on data packets or frames transferred from the DSLAM equipment and then transferring the demodulated data packets or frames to the base station wireless processing unit. The base station transceiver DSL modem unit includes one or more DSL modems. In the IP-based Mode 4, the base station transceiver DSL modem unit supports the processing of IP layer, Ethernet MAC layer, and DLS physical layer; and in the PPPoETH Mode 1, PPPoETH Mode 2, and IPoETH Mode 3, the unit supports the processing of Ethernet MAC layer and DLS physical layer.

The switching unit is used for exchanging data packets or frames between each base station wireless processing unit and each DSL modem, and in the IP-based Mode 4, the switching unit is an IP switching unit, and in the PPPoETH Mode 1, PPPoETH Mode 2, and IPoETH Mode 3, the switching unit is an Ethernet switching unit. If there are only one base station wireless processing unit and one DSL modem, the switching unit can be omitted.

The base station transceiver remote power supply unit is used for converting the high-voltage DC (e.g., 270V DC) transferred from the remote power supply equipment or the DSL remote power supply unit of the DSLAM equipment into a low-voltage DC to locally supply power to a power supply unit of the base station transceiver equipment, or relaying the received high-voltage DC to remotely supply power to remote base station transceiver equipments in the next tier through wired cables. The base station transceiver remote power supply unit further supports intercommunications with the DSLAM equipment or the remote power supply equipment, so as to serve as an out-band management for the BS, thereby realizing surveillance alarm function during normal operations and system failures, which thus is convenient for the equipment management, fault location, and remote maintenance.

The DSLAM equipment in the system includes the DSL modem unit and/or the Ethernet service processing unit, and optionally includes the DSL remote power supply unit. Each unit is respectively illustrated below.

The DSL modem unit is used for being interconnected with the base station transceiver equipment at the reference point U through one or more pairs of twisted pairs, performing modulation on data packets or frames transferred from the Ethernet service processing unit and then transferring the modulated data packets or frames to the base station transceiver equipment, and performing demodulation on data packets or frames transferred from the base station transceiver equipment and then transferring the demodulated data packets or frames to the Ethernet service processing unit. In the IP-based Mode 4, the DSL modem unit supports the processing of IP layer, Ethernet MAC layer, and DLS physical layer; and in the PPPoETH Mode 1, PPPoETH Mode 2, and IPoETH Mode 3, the unit supports the processing of Ethernet MAC layer and DLS physical layer.

The Ethernet service processing unit is used for processing data packets or frames transferred from the DSL modem unit and then transferring the processed data packets or frames to the network element formed by the BRAS of the DSL network and the BSC, and processing data packets or frames transferred from the network element formed by the BRAS of the DSL network and the BSC and then transferring the processed data packets or frames to the DSL modem unit. In the IP-based Mode 4, the Ethernet service processing unit performs the processing of Ethernet MAC layer and provides an Ethernet cable interface as an uplink interface/cascade interface to connect with the network element formed by the BRAS and the BSC; and in the PPPoETH Mode 1, PPPoETH Mode 2, and IPoETH Mode 3, the unit performs the processing of Ethernet MAC layer and IP layer forwarding and provides an Ethernet cable interface as an uplink interface/cascade interface to connect with the network element formed by the BRAS and the BSC.

The DSL remote power supply unit in the above DSLAM equipment has the same function as the remote power supply equipment, i.e., for providing a remote power supply, which thus is not described repeatedly.

**The present invention provides an implementation solution for interconnecting the broadband wireless access network, the MSO network, and the DSL network according to a fifth embodiment. In this embodiment, the broadband wireless access network is interconnected with the MSO network at the reference point CMRFI, and the MSO network is interconnected with the DSL network at the reference point V, which will be described below in detail.**

The present invention provides a method and a system for interconnecting the broadband wireless network with the wired network, which focuses on the following two aspects.

When the BS or ASN includes the CM function, the WiMAX network is interconnected with the MSO network at the reference point CMRFI through the BS or ASN, and then the MSO network is interconnected with the DSL network at the reference point V through the CMTS.

When the BS or ASN does not include the CM function, a CM is added in the MSO network, the BS or ASN is connected with the CM at the reference point CMCI and then interconnected with the MSO network at the reference point CMRFI, and then, the MSO network is interconnected with the DSL network at the reference point V through the CMTS.

The method of interconnecting the broadband wireless network with the wired network of the present invention is first described below, i.e., the method of interconnecting the WiMAX network, DSL network, and MSO network, which includes the following four implementation solutions.

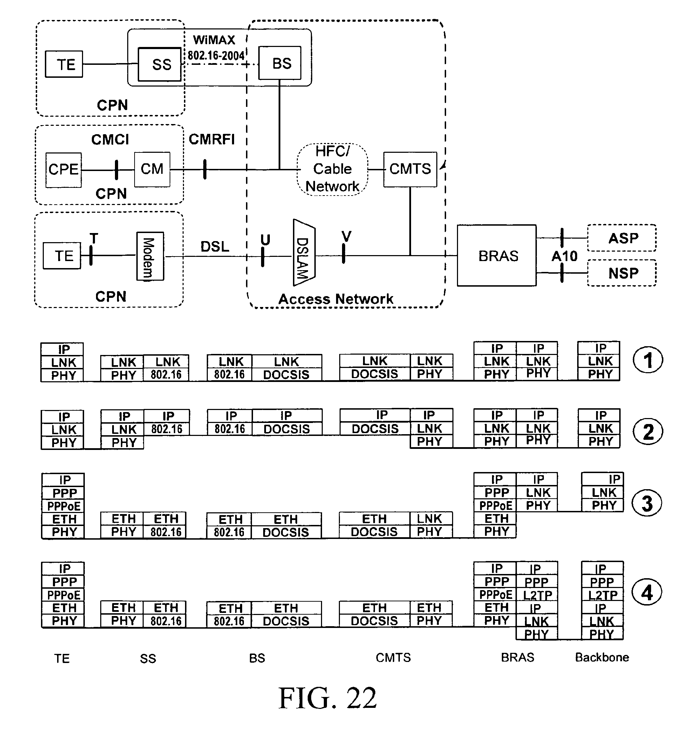

Solution 1: When the BS of the 802.16-2004-based WiMAX includes the CM function, a schematic view of an implementation solution for interconnecting the 802.16-2004-based WiMAX, DSL, and MSO at the reference point CMRFI/V according to the present invention is shown in FIG. 22.

It belongs to a tight-coupling solution that the WiMAX network is interconnected with the MSO network at the reference point CMRFI through the BS and then the MSO network is interconnected with the DSL network at the reference point V through the CMTS. This solution includes four modes, and the protocol stacks of the four modes in the path of TE->SS->BS->CMTS->BRAS are respectively shown in FIG. 22. This path is an end-to-end path for interconnecting the 802.16-2004-based WiMAX, DSL, and MSO in the solution. The interconnection solution is, but not limited to, applicable for fixed access applications.

The four modes of this solution are respectively illustrated below.

### 1-1. Mode 1

In the path of TE->SS->BS->CMTS->BRAS->SP, the Layer 2 bridging technology is employed between the BRAS and the TE, e.g., Ethernet bridging technology. The Layer 2 bridging technology indicates that the CMTS, BS, and SS are all Layer 2 network elements, and the 802.16-2004 Layer 2 wireless access technology is employed between the BS and the SS to replace the Layer 2 wired access of DOCSIS and DSL or to serve as a Layer 2 wireless extension for the Layer 2 wired access of DOCSIS and DSL. The 802.16-2004 Layer 2 wireless access technology (e.g., Ethernet bridging) supports the ETH CS at the airlink.

### 1-2. Mode 2

In the path of TE->SS->BS->CMTS->BRAS->SP, the Layer 3 routing technology is employed between the BRAS and the TE, e.g., IP Layer 3 routing technology. The Layer 3 routing technology indicates that the CMTS, BS, and SS are all Layer 3 network elements, and an accessing manner over the 802.16-2004 Layer 2 wireless access technology is employed on the IP layer between the BS and the SS to replace the wired access of DOCSIS and DSL or to serve as a wireless extension for the wired access of DOCSIS and DSL. The 802.16-2004 Layer 2 wireless access technology supports the IP CS at the airlink.

In terms of security of the two modes in the above Solution 1, the 802.16 security sub-layer PKM security architecture is employed between the SS and the BS, and relies on PKM and DHCP to control and manage the terminal configuration and connection. The two modes are, but not limited to, applicable for fixed and nomadic Triple play (providing data + voice + video) service access applications.

### 1-3. Mode 3

In the path of TE->SS->BS->CMTS->BRAS->SP, the Layer 2 bridging technology may only be employed between the BRAS and the TE, for example, Ethernet bridging technology. The Layer 2 bridging technology indicates that the CMTS, BS, and SS are all Layer 2 network elements, and the 802.16-2004 Layer 2 wireless access technology is employed between the BS and the SS to replace the Layer 2 wired access of DOCSIS and DSL or to serve as a Layer 2 wireless extension for the Layer 2 wired access of DOCSIS and DSL. The 802.16-2004 Layer 2 wireless access technology (e.g., Ethernet bridging) supports the ETH CS at the airlink. In order to support the whole service, the PPP over Ethernet is supported between the BRAS and the TE as a link protocol and as a mechanism for address allocation and authentification, and for controlling and managing the terminal configuration and connection. The mode is, but not limited to, applicable for pure data services.

### 1-4. Mode 4

In addition to all the characteristics of Mode 3, this mode further employs a tunneling protocol between the BRAS of the network operator and the SP, for example, L2TP or MPLS Tunneling. The tunneling protocol is used for distinguishing different service providers.

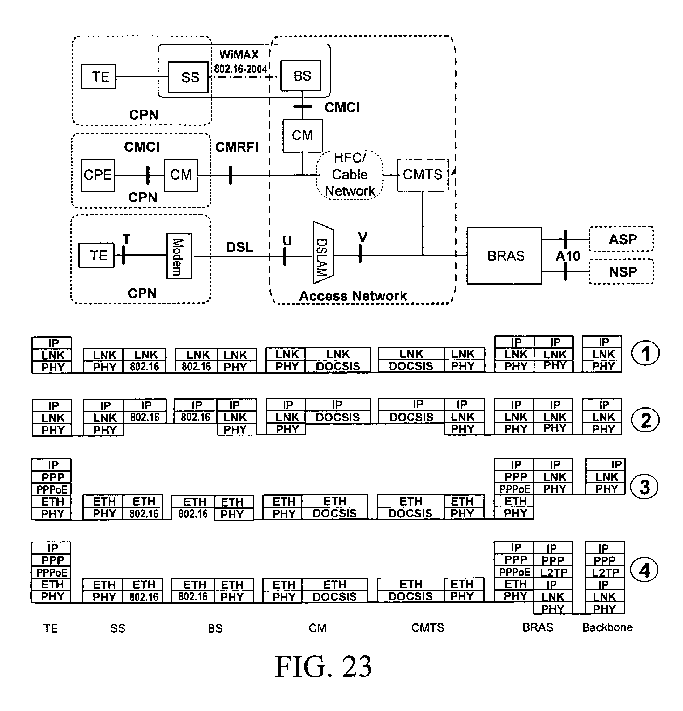

Solution 2: When the BS of the 802.16-2004-based WiMAX does not include the CM function, a schematic view of an implementation solution for interconnecting the 802.16-2004-based WiMAX, DSL, and MSO at the reference point CMRFI/V according to the present invention is shown in FIG. 23.

A CM is set in the MSO broadband network, and the BS is connected with the CM at the reference point CMCI and then interconnected with the MSO network at the reference point CMRFI. Then, the MSO network is interconnected with the DSL network at the reference point V through the CMTS. This solution belongs to a tight-coupling solution and includes four modes, and the protocol stacks of the four modes in the path of TE->SS->BS->CM->CMTS->BRAS->SP are respectively shown in FIG. 23. This path is an end-to-end path for interconnecting the 802.16-2004-based WiMAX, DSL, and MSO in the solution. The interconnection solution is, but not limited to, applicable for fixed access applications.

This solution is different from the interconnection solution shown in FIG. 22 in that, the BS of the solution shown in FIG. 22 includes the CM function (CMCI is an internal interface of the network element, which is not made public to the other manufacturers); whereas in this solution, the BS and the CM are different network elements and the reference point is publicly known and followed by the manufacturers. The four modes of this solution are exactly identical to the four modes of the interconnection solution shown in FIG. 22, which thus are not described herein any more.

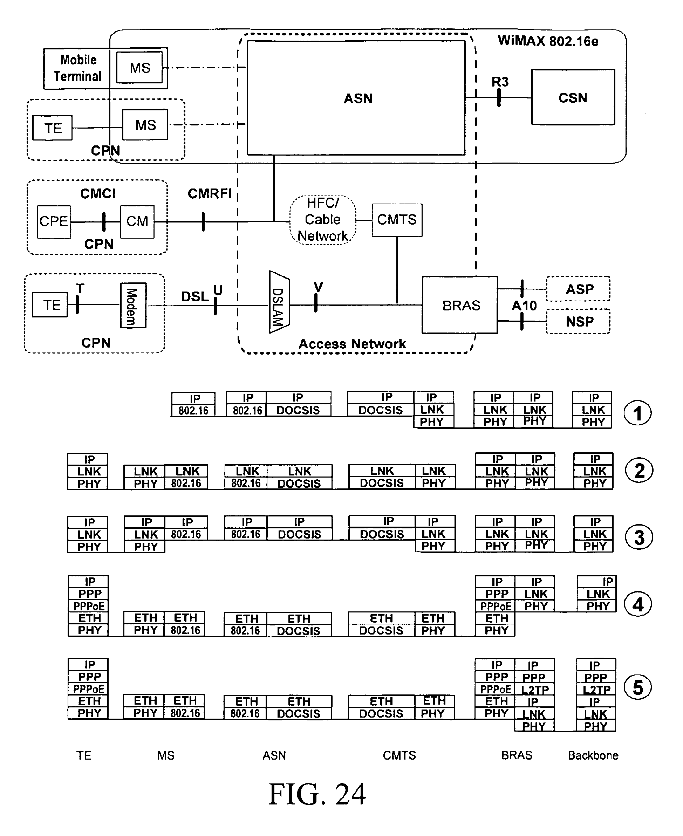

Solution 3: When the ASN in 802.16e-based WiMAX includes the CM function, a schematic view of an implementation solution for interconnecting the 802.16e-based WiMAX, DSL, and MSO at the reference point CMRFI according to the present invention is shown in FIG. 24.

When the ASN includes the CM function, the WiMAX network is interconnected with the MSO network at the reference point CMRFI through the ASN, and the MSO network is interconnected with the DSL network at the reference point V through the CMTS. This solution belongs to a tight-coupling solution and includes five modes, and the protocol stacks of the five modes in the path of TE->MS->BS->ASN->CMTS->BRAS->SP are respectively shown in FIG. 24. This path is an end-to-end path for interconnecting the 802.16e-based WiMAX, DSL, and MSO in the solution. The interconnection solution is, but not limited to, applicable for fixed and nomadic access applications, and supports portable and mobile access applications to a certain extent.

The five modes of this solution are respectively illustrated below.

### 3-1. Mode I

In the path of TE->MS->BS->ASN->CMTS->BRAS->SP, the Layer 2 bridging technology is employed between the BRAS and the TE, e.g., Ethernet bridging technology. The Layer 2 bridging technology indicates that the CMTS, all the network elements of ASN, and the MS are all Layer 2 network elements, and the 802.16e Layer 2 wireless access technology is employed between the BS and the MS to replace the Layer 2 wired access of DOCSIS and DSL or to serve as a Layer 2 wireless extension for the Layer 2 wired access of DOCSIS and DSL. The 802.16e Layer 2 wireless access technology (e.g., Ethernet bridging) supports the ETH CS at the airlink.

### 3-2. Mode 2

In the path of TE->MS->BS->ASN->CMTS->BRAS->SP, the Layer 3 routing technology is employed between the BRAS and the TE, e.g., IP Layer 3 routing technology. The Layer 3 routing technology indicates that the CMTS, all the network elements of ASN, and the MS are all Layer 3 network elements, and an accessing manner over the 802.16e Layer 2 wireless access technology is employed on the IP layer between the BS and the MS to replace the wired access of DOCSIS and DSL or to serve as a wireless extension for the wired access of DOCSIS and DSL. The 802.16e Layer 2 wireless access technology supports the IP CS at the airlink.

### 3-3. Mode 3

In the path of MS->BS->ASN->CMTS->BRAS->SP, the Layer 3 routing technology is employed between the BRAS and the MS, e.g., IP Layer 3 routing technology. The Layer 3 routing technology indicates that the CMTS, all the network elements of ASN, and the MS are all Layer 3 network elements, and an accessing manner over the 802.16e Layer 2 wireless access technology is employed on the IP layer between the BS and the MS to replace the wired access of DOCSIS and DSL or to serve as a wireless extension for the wired access of DOCSIS and DSL. The 802.16e Layer 2 wireless access technology supports the IP CS at the airlink.

In terms of security of the above three modes, the DOCSIS security sub-layer security architecture is employed between the ASN and the CMTS, and relies on PKMv2 and DHCP to control and manage the terminal configuration and connection. The three modes are, but not limited to, applicable for fixed and nomadic Triple play service access applications.

### 3-4. Mode 4

In the path of TE->MS->BS->ASN->CMTS->BRAS->SP, the Layer 2 bridging technology is employed between the BRAS and the TE, e.g., Ethernet bridging technology. The Layer 2 bridging technology indicates that the CMTS, all the network elements of ASN, and the MS are all Layer 2 network elements, and the 802.16e Layer 2 wireless access technology is employed between the BS and the MS to replace the Layer 2 wired access of DOCSIS and DSL or to serve as a Layer 2 wireless extension for the Layer 2 wired access of DOCSIS and DSL. The 802.16e Layer 2 wireless access technology (e.g., Ethernet bridging) supports the ETH CS at the airlink. In order to support the whole service, the PPP over Ethernet is supported between the BRAS and the TE as a link protocol and as a mechanism for address allocation and authentification, and for controlling and managing the terminal configuration and connection. This mode employs radio resource management, load balance, and security attribute of 802.16e, which is applicable for pure data services.

### 3-5. Mode 5

In addition to all the characteristics of Mode 4, this mode further employs a tunneling protocol between the BRAS of the network operator and the SP, for example, L2TP or MPLS Tunneling. The tunneling protocol is used for distinguishing different service providers.

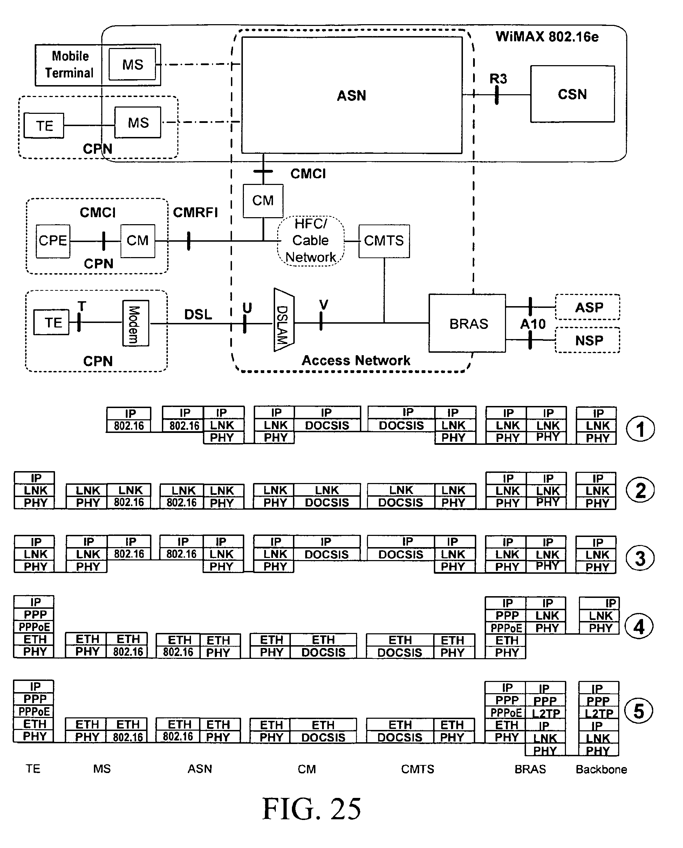

Solution 4: When the ASN of 802.16e-based WiMAX does not include the CM function, a schematic view of an implementation solution for interconnecting the 802.16e-based WiMAX with the MSO at the reference point CMRFI is shown in FIG. 25.

A CM is set in the MSO broadband network, and the ASN is connected with the CM at the reference point CMCI and then interconnected with the MSO network at the reference point CMRFI. Then, the MSO network is interconnected with the DSL network at the reference point V through the CMTS. This solution belongs to a tight-coupling solution and includes five modes, and the protocol stacks of the five modes in the path of TE->MS->BS->CM->CMTS->BRAS->SP are respectively shown in FIG. 25. This path is an end-to-end path for interconnecting 802.16e-based WiMAX, DSL, and MSO in the solution. The interconnection solution is, but not limited to, applicable for fixed and nomadic access applications, and supports portable and mobile access applications to a certain extent.

This solution is different from the interconnection solution shown in FIG. 24 in that, the ASN of the solution shown in FIG 24 includes the CM function (CMCI is an internal interface of the network element, which is not made public to the other manufacturers); whereas in this solution, the ASN and the CM are different network elements and the reference point is publicly known and followed by the manufacturers. The five modes of this solution are exactly identical to the five modes of the interconnection solution shown in FIG. 24, which thus are not described herein any more.

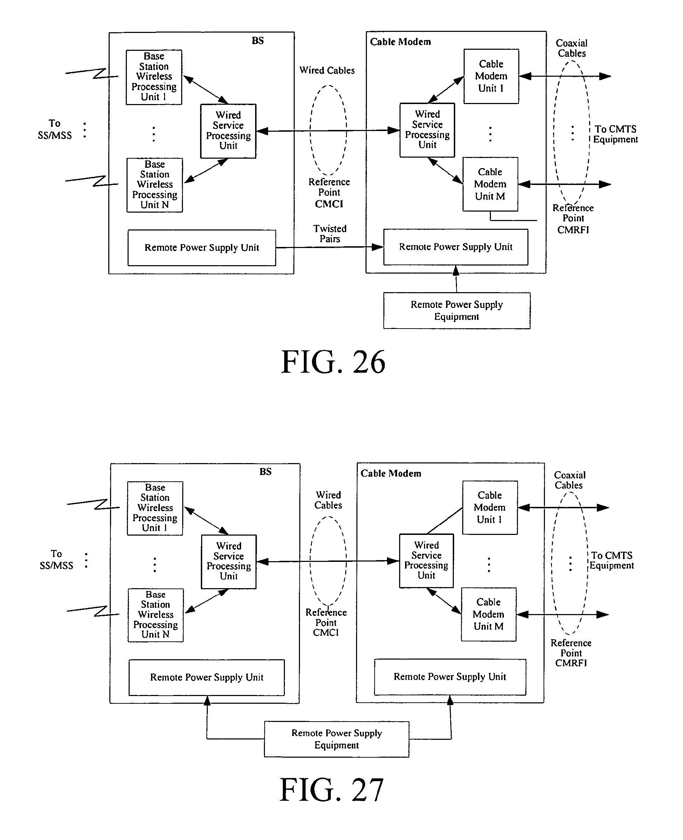

A schematic view of a first implementation structure of a system for interconnecting the broadband wireless network with the wired network according to the present invention is shown in FIG. 26, which includes a base station equipment and a cable modem equipment, and optionally includes a remote power supply equipment.

The base station equipment is used for being interconnected with the cable modem equipment through one or more pairs of wired cables to accomplish the access services of wireless subscribers, transferring data packets or frames of the accessed wireless subscribers to the cable modem equipment, and outputting data packets or frames transferred from the cable modem equipment to the wireless subscribers, which may be a 802.16 base station. The base station equipment includes a base station wireless processing unit, a base station wired service processing unit, and a base station remote power supply unit.

The cable modem equipment is used for being connected with the base station equipment through one or more pairs of wired cables and connected with the CMTS of the MSO network at the reference point CMRFI through one or more pairs of coaxial cables, performing DOCSIS modulation on data packets or frames transferred from the base station equipment and then transferring the modulated data packets or frames to the CMTS, and performing DOCSIS demodulation on data packets or frames transferred from the CMTS and then transferring the demodulated data packets or frames to the base station equipment. The cable modem equipment includes a cable modem wired service processing unit, a cable modem unit, and a cable modem remote power supply unit.

The remote power supply equipment is used for converting mains input (e.g., 110V/220V AC) or DC input (e.g., -48V/-60V DC) into a high-voltage DC (e.g., 270V DC), and then outputting the high-voltage DC to remotely supply power to the cable modem equipment through wired cables (e.g., one or more pairs of twisted pairs). The distance of the remote power supply is relevant to the core diameter, number of pairs for the wired cable, power consumption of the outdoor unit for the base station, and output voltage of the remote power supply equipment. Generally, the power supply distance of up to 2 km-5 km can be achieved.

The base station equipment in the system includes the base station wireless processing unit and the base station wired service processing unit, and optionally includes the base station remote power supply unit. Each unit is respectively illustrated below.

The base station wireless processing unit is used for accomplishing the access services of wireless subscribers, transferring data packets or frames of the accessed wireless subscribers to the base station wired service processing unit, and transferring data packets or frames transferred from the base station wired service processing unit to the wireless subscribers. The base station wireless processing unit includes one or more processing units, and each unit is formed by an antenna, an RF processing module, a medium-frequency processing module, a base band processing module, a processing module of wireless data link layer, and a processing module of layers over the wireless data link layer.

The base station wired service processing unit is used for being connected with the cable modem equipment through one or more pairs of wired cables, processing data packets or frames transferred from the base station wireless processing unit and transferring the processed data packets or frames to the cable modem equipment, and processing data packets or frames transferred from the cable modem equipment and then transferring the processed data packets or frames to the base station wireless processing unit. In the above mode based on Layer 3 routing, the base station wired service processing unit supports the processing of IP layer, data link layer, and physical layer; and in the above mode based on Layer 2 bridging, the unit supports the processing of data link layer and physical layer.

The base station wired service processing unit may be a base station Ethernet service processing unit, and in this case, the wired cables are Ethernet wired cables, the data link layer is Ethernet MAC layer, and the physical layer is Ethernet PHY layer.

The base station remote power supply unit in the base station equipment has the same function as the above remote power supply equipment, i.e., for providing a remote power supply.

The cable modem equipment in the system includes the cable modem wired service processing unit and the cable modem unit, and optionally includes the cable modem remote power supply unit. Each unit is respectively illustrated below.

The cable modem wired service processing unit is used for being connected with the base station equipment through one or more pairs of wired cables, processing data packets or frames transferred from the base station equipment and then transferring the processed data packets or frames to the cable modem unit, and processing data packets or frames transferred from the cable modem unit and then transferring the processed data packets or frames to the base station equipment. In the above mode based on Layer 3 routing, the cable modem wired service processing unit supports the processing of IP layer, data link layer, and physical layer, and in the above mode based on Layer 2 bridging, the unit supports the processing of data link layer and physical layer.

The cable modem wired service processing unit may be a cable modem Ethernet service processing unit, and in this case, the wired cables are Ethernet wired cables, the data link layer is Ethernet MAC layer, and the physical layer is Ethernet PHY layer.

The cable modem unit is used for being interconnected with the CMTS of the MSO network at the reference point CMRFI through one or more pairs of coaxial cables, performing DOCSIS modulation on data packets or frames transferred from the cable modem wired service processing unit and then transferring the modulated data packets or frames to the CMTS equipment, and performing DOCSIS demodulation on data packets or frames transferred from the CMTS and then transferring the demodulated data packets or frames to the cable modem wired service processing unit. The cable modem unit includes one or more cable modems.

The cable modem remote power supply unit is used for converting the high-voltage DC (e.g., 270V DC) transferred from the remote power supply equipment or the base station remote power supply unit of the base station equipment into a low-voltage DC to locally supply power to the power supply unit of the cable modem equipment, or relaying the received high-voltage DC to remotely supply power to remote cable modem equipments in the next tier through wired cables. The cable modem remote power supply unit further supports intercommunications with the base station equipment or the remote power supply equipment, so as to serve as an out-band management for the BS, thereby realizing surveillance alarm function during normal operations and system failures, which thus is convenient for the equipment management, fault location, and remote maintenance.

A schematic view of another implementation structure of a system for interconnecting the broadband wireless network with the wired network according to the present invention is shown in FIG. 27, which includes a base station equipment and a cable modem equipment, and optionally includes a remote power supply equipment.

The base station equipment is used for being connected with the cable modem equipment through one or more pairs of wired cables to accomplish the access services of wireless subscribers, transferring data packets or frames of the accessed wireless subscribers to the cable modem equipment, and outputting data packets or frames transferred from the cable modem equipment to the wireless subscribers, which may be a 802.16 base station. The base station equipment includes a base station wireless processing unit, a base station wired service processing unit, and a base station remote power supply unit.

The cable modem equipment is used for being connected with the base station equipment through one or more pairs of wired cables and connected with the CMTS of the MSO network at the reference point CMRFI through one or more pairs of coaxial cables, performing DOCSIS modulation on data packets or frames transferred from the base station equipment and then transferring the modulated data packets or frames to the CMTS, and performing DOCSIS demodulation on data packets or frames transferred from the CMTS and then transferring the demodulated data packets or frames to the base station equipment. The cable modem unit includes a cable modem wired service processing unit, a cable modem unit, and a cable modem remote power supply unit.

The remote power supply equipment is used for converting mains input (e.g., 110V/220V AC) or DC input (e.g., -48V/-60V DC) into a high-voltage DC (e.g., 270V DC) and then outputting the high-voltage DC to remotely supply power to the cable modem equipment and the base station equipment through wired cables (e.g., one or more pairs of twisted pairs). The distance of the remote power supply is relevant to the core diameter, number of pairs for the wired cable, power consumption of the outdoor unit for the base station, and output voltage of the remote power supply equipment. Generally, the power supply distance of up to 2 km-5 km can be achieved.

The base station equipment in the system includes the base station wireless processing unit and the base station wired service processing unit, and optionally includes the base station remote power supply unit. Each unit is respectively illustrated below.

The base station wireless processing unit is used for accomplishing the access services of wireless subscribers, transferring data packets or frames of the accessed wireless subscribers to the base station wired service processing unit, and transferring data packets or frames transferred from the base station wired service processing unit to the wireless subscribers. The base station wireless processing unit includes one or more processing units, and each unit is formed by an antenna, an RF processing module, a medium-frequency processing module, a base band processing module, a processing module of wireless data link layer, and a processing module of layers over the wireless data link layer.

The base station wired service processing unit is used for being connected with the cable modem equipment through one or more pairs of wired cables, processing data packets or frames transferred from the base station wireless processing unit and then transferring the processed data packets or frames to the cable modem equipment, and processing data packets or frames transferred from the cable modem equipment and then transferring the processed data packets or frames to the base station wireless processing unit. In the above mode based on Layer 3 routing, the base station wired service processing unit supports the processing of IP layer, data link layer, and physical layer, and in the above mode based on Layer 2 bridging, the base station wired service processing unit supports the processing of data link layer and physical layer.

The base station wired service processing unit may be the base station Ethernet service processing unit, and in this case, the wired cable is Ethernet wired cable, the data link layer is Ethernet MAC layer, and the physical layer is Ethernet PHY layer.

The base station remote power supply unit is used for converting the high-voltage DC (e.g., 270V DC) transferred from the remote power supply equipment into a low-voltage DC to locally supply power to the power supply unit of the base station equipment, or relaying the received high-voltage DC to remotely supply power to remote base station equipments in the next tier through wired cables. The base station remote power supply unit further supports interconnections with the remote power supply equipment, so as to serve as an out-band management for the BS, thereby realizing surveillance alarm function during normal operations and system failures, which thus is convenient for the equipment management, fault location, and remote maintenance.

The cable modem equipment in the system includes the cable modem wired service processing unit and the cable modem unit, and optionally includes the cable modem remote power supply unit. Each unit is respectively illustrated below.

The cable modem wired service processing unit is used for being connected with the base station equipment through one or more pairs of wired cables, processing data packets or frames transferred from the base station equipment and then transferring the processed data packets or frames to the cable modem unit, and processing data packets or frames transferred from the cable modem unit and then transferring the processed data packets or frames to the base station equipment. In the above mode based on Layer 3 routing, the cable modem wired service processing unit supports the processing of IP layer, data link layer, and physical layer; and in the above mode based on Layer 2 bridging, the unit supports the processing of data link layer and physical layer.

The cable modem wired service processing unit may be the cable modem Ethernet service processing unit, and in this case, the wired cables are Ethernet wired cables, the data link layer is Ethernet MAC layer, and the physical layer is Ethernet PHY layer.

The cable modem unit is used for being interconnected with the CMTS of the MSO network at the reference point CMRFI through one or more pairs of coaxial cables, performing DOCSIS modulation on data packets or frames transferred from the cable modem wired service processing unit and then transferring the modulated data packets or frames to the CMTS equipment, and performing DOCSIS demodulation on data packets or frames transferred from the CMTS and then transferring the demodulated data packets or frames to the cable modem wired service processing unit. The cable modem unit includes one or more cable modems.

The cable modem remote power supply unit is used for converting the high-voltage DC (e.g., 270V DC) transferred from the remote power supply equipment into a low-voltage DC to locally supply power to the power supply unit of the cable modem equipment, or relaying the received high-voltage DC to remotely supply power to remote cable modem equipments in the next tier through wired cables. The cable modem remote power supply unit further supports intercommunications with the base station equipment or remote power supply equipment, so as to serve as an out-band management for the cable modem equipment, thereby realizing surveillance alarm function during normal operations and system failures, which thus is convenient for the equipment management, fault location, and remote maintenance.

**The present invention provides an implementation solution for interconnecting the BWA network, the MSO network, and the DSL network according to a sixth embodiment, in which the BWA network and the MSO network are respectively interconnected with the DSL network at the reference point V, which will be described below in detail.**

The present invention provides an implementation solution for interconnecting the broadband wireless network with the wired network, which focuses on respectively interconnecting the WiMAX network and the MSO network with the DSL network at the reference point V.

The implementation for interconnecting the broadband wireless network with the wired network, i.e., the implementation solution for interconnecting the WiMAX network, DSL network, and MSO network of the present invention is described below.

The embodiment includes the following two implementation solutions.

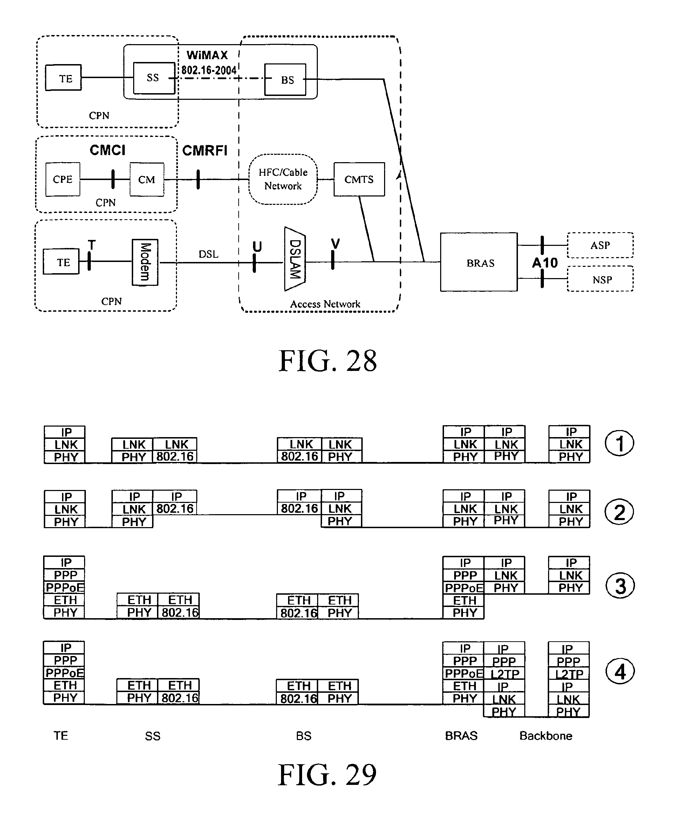

Solution 1: A schematic view of an implementation solution for interconnecting 802.16-2004-based WiMAX, DSL, and MSO at the reference point V according to the present invention is shown in FIG. 28.

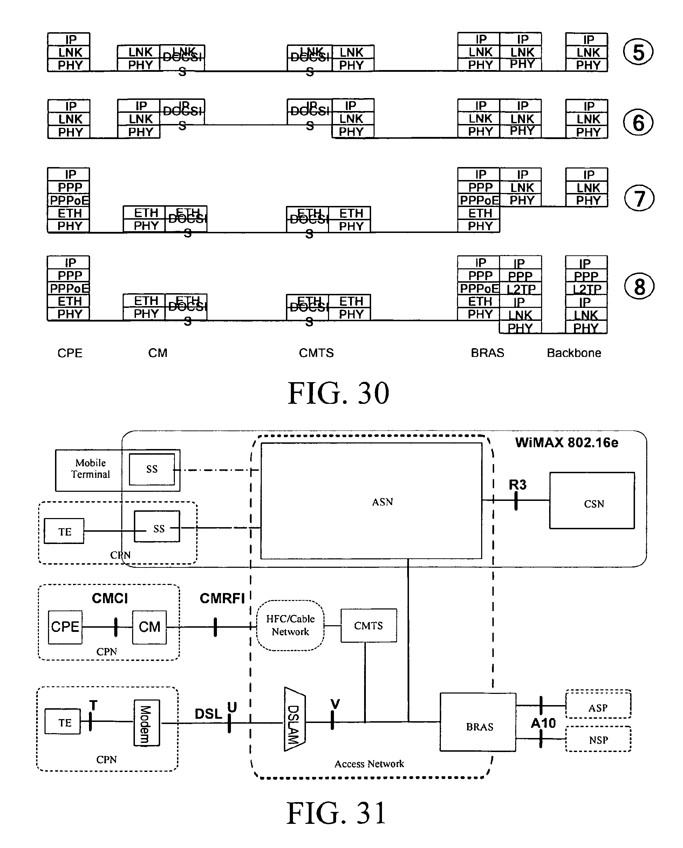

A switching function is introduced into the BRAS of the DSL network, which supports intercommunications among the subscribers of the 802.16-2004, DSL, and MSO broadband network. The 802.16-2004-based WiMAX network is interconnected with the DSL network at the reference point V through the BS, and the MSO network is interconnected with the DSL network at the reference point V through the CMTS. This solution belongs to a loose-coupling solution, which includes eight modes, and the protocol stacks of Mode 1 to Mode 5 in the path of TE->MS->BS->ASN->BRAS->SP (ASP or NSP) are respectively shown in FIG 29, and the protocol stacks of Mode 6 to Mode 8 in the path of CPE->CM->CMTS->BRAS->SP (ASP or NSP) are respectively shown in FIG 30. The interconnection solution is mainly applicable for fixed and nomadic access applications, supports the portable and mobile access applications to a certain extent, and further supports the uniform charging of services, uniform customer care, and uniform authentification. The eight modes of this solution are respectively described below.

### 1-1. Mode 1

In the path of TE->SS->BS->BRAS->SP, the Layer 2 bridging technology is employed between the BRAS and the TE, for example, Ethernet bridging technology. The Layer 2 bridging technology indicates that the BS and the SS are both Layer 2 network elements, and the 802.16-2004 Layer 2 wireless access technology is employed between the BS and the SS to replace the Layer 2 wired access of DOCSIS and DSL or to serve as a Layer 2 wireless extension for the Layer 2 wired access of DOCSIS and DSL. The 802.16-2004 Layer 2 wireless access technology (e.g., Ethernet bridging technology) supports the ETH CS at the airlink.

### 1-2. Mode 2

In the path of TE->SS->BS->BRAS->SP, the Layer 3 routing technology is employed between the BRAS and the TE, for example, IP Layer 3 routing technology. The Layer 3 routing technology indicates that the BS and the SS are both Layer 3 network elements, and an accessing manner over the 802.16-2004 Layer 2 wireless access technology is employed on the IP layer between the BS and the SS to replace the wired access of DOCSIS and DSL or to serve as a wireless extension for the wired access of DOCSIS and DSL. The 802.16-2004 Layer 2 wireless access technology supports the IP CS at the airlink.

In terms of security of the above two modes in Solution 1, the 802.16 security sub-layer PKM security architecture is employed between the SS and the BS, and relies on PKM and DHCP to control and manage the terminal configuration and connection. The two modes are, but not limited to, applicable for fixed and nomadic Triple play (providing data + voice + video) service access applications.

### 1-3. Mode 3

In the path of TE->SS->BS->BRAS->SP, the Layer 2 bridging technology may only be employed between the BRAS and the TE, for example, Ethernet bridging technology. Herein, the Layer 2 bridging technology indicates that the BS and the SS are both Layer 2 network elements, and the 802.16-2004 Layer 2 wireless access technology is employed between the BS and the SS to replace the Layer 2 wired access of DOCSIS and DSL or to serve as a Layer 2 wireless extension for the Layer 2 wired access of DOCSIS and DSL. The 802.16-2004 Layer 2 wireless access technology (e.g., Ethernet bridging technology) supports the ETH CS at the airlink. In order to support the whole service, the PPP over Ethernet is supported between the BRAS and the TE as a link protocol and as mechanism for address allocation and authentification, and for controlling and managing the terminal configuration and connection. The mode is, but not limited to, applicable for pure data services.

### 1-4. Mode 4

In addition to all the characteristics of Mode 3, this mode further employs a tunneling protocol between the BRAS of the network operator and the SP, for example, L2TP or MPLS Tunneling. The tunneling protocol is used for distinguishing different service providers.

### 1-5. Mode 5

In the path of CPE->CM->CMTS->BRAS->SP, the Layer 2 bridging technology is employed between the BRAS and the CPE, for example, Ethernet bridging technology. The Layer 2 bridging technology indicates that the CMTS and the CM are both Layer 2 network elements, and the DOCSIS Layer 2 wired access technology is employed between the CMTS and the CM to replace the DSL Layer 2 wired access or to serve as a supplement for the DSL Layer 2 wired access, which avoids influences on the high-level network architecture.

### 1-6. Mode 6

In the path of CPE->CM->CMTS->BRAS->SP, the Layer 3 routing technology is employed between the BRAS and the CPE, for example, IP Layer 3 routing technology. The Layer 3 routing technology indicates that the CMTS and the CM are both Layer 3 network elements, and an accessing manner over the DOCSIS Layer 2 wired access technology is employed on the IP layer between the CMTS and the CM to replace the wired access of DOCSIS and DSL or to serve as a wireless extension for the wired access of DOCSIS and DSL.

In terms of security of Mode 5 and Mode 6, the DOCSIS security sub-layer security architecture is employed between the CMTS and the CM. The modes are, but not limited to, applicable for fixed Triple play service access applications.

### 1-7. Mode 7

In the path of CPE->CM->CMTS->BRAS->SP, the Layer 2 bridging technology may only be employed between the BRAS and the CPE, for example, Ethernet bridging technology. Herein, the Layer 2 bridging technology indicates that the CMTS and the CM are both Layer 2 network elements, and the DOCSIS Layer 2 wired access technology is employed between the CMTS and the CM to replace the DSL Layer 2 wired access or to serve as a supplement for the DSL Layer 2 wired access. In order to support the whole service, the PPP over Ethernet is supported between the BRAS and the CPE as a link protocol and as a mechanism for address allocation and authentification, and for controlling and managing the terminal configuration and connection. The mode is, but not limited to, applicable for pure data services.

### 1-8. Mode 8

In addition to all the characteristics of Mode 7, this mode further employs a tunneling protocol between the BRAS of the network operator and the SP, for example, L2TP or MPLS Tunneling. The tunneling protocol is used for distinguishing different service providers.

Solution 2: A schematic view of an implementation solution for interconnecting the 802.16e-based WiMAX, DSL, and MSO at the reference point V according to the present invention is shown in FIG. 31.

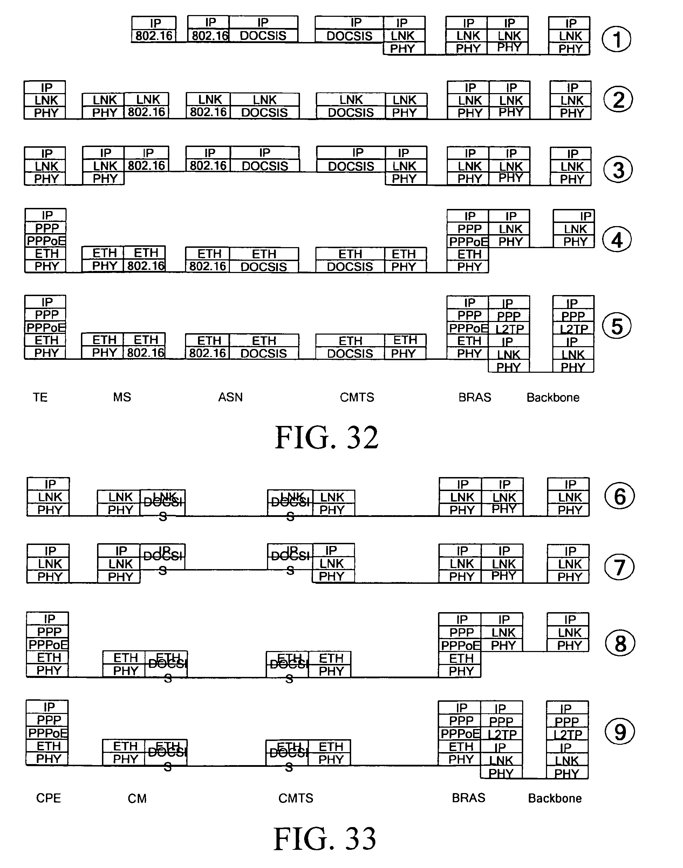

A switching function is introduced into the BRAS of the DSL network, which supports intercommunications among the subscribers of the 802.16e, DSL, and MSO broadband network. The 802.16e-based WiMAX network is interconnected with the DSL network at the reference point V through the ASN, and the MSO network is interconnected with the DSL network at the reference point V through the CMTS. This solution belongs to a loose-coupling solution, which includes nine modes and the protocol stacks of Mode 1 to Mode 5 in the path of TE->MS->BS->ASN->BRAS->SP (ASP or NSP) are respectively shown in FIG. 32, and the protocol stacks of Mode 6 to Mode 9 in the path of CPE->CM->CMTS->BRAS->SP (ASP or NSP) are respectively shown in FIG. 33. The interconnection solution is mainly applicable for fixed and nomadic access applications, supports the portable and mobile access applications to a certain extent, and further supports the uniform charging of services, uniform customer care, and uniform authentification. The solution includes nine modes, which are respectively described herein below.

### 2-1. Mode 1

In the path of TE->MS->BS->ASN->BRAS->SP, the Layer 2 bridging technology is employed between the BRAS and the TE, for example, Ethernet bridging technology. The Layer 2 bridging technology indicates that all the network elements of ASN and the MS are all Layer 2 network elements, and the 802.16e Layer 2 wireless access technology is employed between the BS and the MS to replace the Layer 2 wired access of DOCSIS and DSL or to serve as a Layer 2 wireless extension for the Layer 2 wired access of DOCSIS and DSL. The 802.16e Layer 2 wireless access technology (e.g., Ethernet bridging technology) supports the ETH CS at the airlink.

### 2-2. Mode 2

In the path of TE->MS->BS->ASN->BRAS->SP, the Layer 3 routing technology is employed between the BRAS and the TE, for example, IP Layer 3 routing technology. The Layer 3 routing technology indicates that all the network elements of ASN and the MS are all Layer 3 network elements, and an accessing manner over the 802.16e Layer 2 wireless access technology is employed on the IP layer between the BS and the MS to replace the wired access of DOCSIS and DSL or to serve as a wireless extension for the wired access of DOCSIS and DSL. The 802.16e Layer 2 wireless access technology supports the IP CS at the airlink.

### 2-3. Mode 3

In the path of MS->BS->ASN->BRAS->SP, the Layer 3 routing technology is employed between the BRAS and the MS, for example, the IP Layer 3 routing technology. The Layer 3 routing technology indicates that all the network elements of ASN and the MS are all Layer 3 network elements, and an accessing manner over the 802.16e Layer 2 wireless access technology is employed on the IP layer between the BS and the MS to replace the wired access of DOCSIS and DSL or to serve as a wireless extension for the wired access of DOCSIS and DSL. The 802.16e Layer 2 wireless access technology supports the IP CS at the airlink.

In terms of security of the above three modes, the DOCSIS security sub-layer security architecture is employed between the ASN and the CMTS, and relies on PKMv2 and DHCP to control and manage the terminal configuration and connection. The above three modes are, but not limited to, applicable for fixed and nomadic Triple play service access applications.

### 2-4. Mode 4

In the path of TE->MS->BS->ASN->BRAS->SP, the Layer 2 bridging technology may only be employed between the BRAS and the TE, for example, Ethernet bridging technology. Herein, the Layer 2 bridging technology indicates that all the network elements of ASN and the MS are all Layer 2 network elements, and the 802.16e Layer 2 wireless access technology is employed between the BS and the MS to replace the Layer 2 wired access of DOCSIS and DSL or to serve as a Layer 2 wireless extension for the Layer 2 wired access of DOCSIS and DSL. The 802.16e Layer 2 wireless access technology (e.g., Ethernet bridging technology) supports the ETH CS at the airlink. In order to support the whole service, the PPP over Ethernet is supported between the BRAS and the TE as a link protocol and as a mechanism for address allocation and authentification, and for controlling and managing the terminal configuration and connection. This mode employs radio resource management, load balance, and security attribute of 802.16e, which is mainly applicable for pure data services.

### 2-5. Mode 5

In addition to all the characteristics of Mode 4, this mode further employs a tunneling protocol between the BRAS of the network operator and the SP, for example, L2TP or MPLS Tunneling. The tunneling protocol is used for distinguishing different service providers.

### 2-6. Mode 6

In the path of CPE->CM->CMTS->BRAS->SP, the Layer 2 bridging technology is employed between the BRAS and the CPE, for example, Ethernet bridging technology. The Layer 2 bridging technology indicates that the CMTS and the CM are both Layer 2 network elements, and the DOCSIS Layer 2 wired access is employed between the CMTS and the CM to replace the DSL Layer 2 wired access or to serve as a supplement for the DSL Layer 2 wired access, thereby avoiding influences on the high-level network architecture.

### 2-7. Mode 7

In the path of CPE->CM->CMTS->BRAS->SP, the Layer 3 routing technology is employed between the BRAS and the CPE, for example, IP Layer 3 routing technology. The Layer 3 routing technology indicates that the CMTS and the CM are both Layer 3 network elements, and an accessing manner over the DOCSIS Layer 2 wired access is employed on the IP layer between the CMTS and the CM to replace the wired access of DOCSIS and DSL or to serve as a wireless extension for the wired access of DOCSIS and DSL.

In terms of security of Mode 6 and Mode 7, the DOCSIS security sub-layer security architecture is employed between the CMTS and the CM. The modes are, but not limited to, applicable for fixed Triple play service access applications.

### 2-8. Mode 8

In the path of CPE->CM->CMTS->BRAS->SP, the Layer 2 bridging technology may only employed between the BRAS and the CPE, for example, Ethernet bridging technology. Herein, the Layer 2 bridging technology indicates that the CMTS and the CM are both Layer 2 network elements, and the DOCSIS Layer 2 wired access technology is employed between the CMTS and the CM to replace the DSL Layer 2 wired access or to serve as a supplement for the DSL Layer 2 wired access. In order to support the whole service, the PPP over Ethernet is supported between the BRAS and the CPE as a link protocol and as a mechanism for address allocation and authentification, and for controlling and managing the terminal configuration and connection. This mode is, but not limited to, applicable for pure data services.

### 2-9. Mode 9

In addition to all the characteristics of Mode 7, this mode further employs a tunneling protocol between the BRAS of the network operator and the SP, for example, L2TP or MPLS Tunneling. The tunneling protocol is used for distinguishing different service providers.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A system for interconnecting a broadband wireless network with a wired network, comprising: a broadband wireless network, a wired network, and an interface for intercommunicating the broadband wireless network with the wired network, wherein:
the broadband wireless network is used for providing broadband wireless services, and comprises a broadband wireless access (BWA) network for providing wireless access services;
the wired network is used for providing wired services, and the wired network is a multi-service operator (MSO) network and/or a digital subscriber line (DSL) network; and
the interface for intercommunicating the broadband wireless network with the wired network is set between the BWA network and the wired network and is interconnected with a reference point or an interface selected in the wired network; the interface is used for transmitting information required to be transferred between the BWA network and the wired network, so as to implement an interconnection between the broadband wireless network and the wired network; and the interface is an interface for intercommunicating the BWA network with the MSO network and/or the DSL network.

2. The system for interconnecting a broadband wireless network with a wired network according to claim 1, wherein when the wired network is the MSO network, the system comprises:
the interface, provided at an equipment in the BWA network, for being interconnected with a cable modem to radio frequency interface (CMRFI), wherein the interface is used for transmitting information required to be transferred between the BWA network and the wired network, and the CMRFI is an interface in the MSO network;
alternatively,
the interface, provided at an equipment in the BWA network, for being interconnected with a cable modem termination system-network side interface (CMTS-NSI), wherein the interface is used for transmitting information required to be transferred between the BWA network and the wired network, and the CMTS-NSI is an interface in the MSO network.

3. The system for interconnecting a broadband wireless network with a wired network according to claim 2, wherein when the interface for being interconnected with the CMRFI is provided at the equipment in the BWA network, the system further comprises:
a base station equipment, serving as an equipment in the BWA network, for being interconnected with the MSO network at the CMRFI through wired cables, so as to implement access services of wireless subscribers, and for transmitting information required to be exchanged between the wireless subscribers and a cable modem termination system (CMTS); and
the CMTS, for being interconnected with the base station equipment at the reference point CMRFI through wired cables, and for transmitting information required to be exchanged between a managed IP network and the base station equipment.

4. The system for interconnecting a broadband wireless network with a wired network according to claim 3, wherein the base station equipment comprises a base station wireless processing unit and a base station cable modem unit, wherein
the base station wireless processing unit is used for implementing the access services of wireless subscribers, transferring data packets or frames of the accessed wireless subscribers to the base station cable modem unit, and transferring data packets or frames transferred from the base station cable modem unit to the wireless subscribers; and
the base station cable modem unit is used for being interconnected with the MSO network at the reference point CMRFI through at least one pair of coaxial cables, performing DOCSIS modulation on data packets or frames transferred from the base station wireless processing unit and then transferring the modulated data packets or frames to the CMTS of the MSO network, and performing DOCSIS demodulation on data packets or frames transferred from the CMTS and then transferring the demodulated data packets or frames to the base station wireless processing unit, wherein in a mode based on Layer 3 routing, the base station cable modem unit supports processing of IP layer, DOCSIS data link layer, and DOCSIS physical layer; and in a mode based on Layer 2 bridging, the base station cable modem unit supports processing of DOCSIS data link layer and DOCSIS physical layer.

5. The system for interconnecting a broadband wireless network with a wired network according to claim 4, wherein the base station equipment further comprises a switching unit for exchanging data packets or frames between each base station wireless processing unit and each cable modem, wherein in the mode based on Layer 3 routing, the switching unit is an IP switching unit, and in the mode based on Layer 2 bridging, the switching unit is a Layer 2 switching unit.

6. The system for interconnecting a broadband wireless network with a wired network according to claim 2, wherein the CMTS comprises an MSO cable modem unit and a wired service processing unit, wherein
the MSO cable modem unit is used for being interconnected with the base station equipment at the reference point CMRFI through wired cables, performing DOCSIS modulation on data packets or frames transferred from the wired service processing unit and then transferring the modulated data packets or frames to the base station equipment, and performing DOCSIS demodulation on data packets or frames transferred from the base station equipment and then transferring the demodulated data packets or frames to the wired service processing unit, wherein in the mode based on Layer 3 routing, the MSO cable modem unit supports the processing of IP layer, DOCSIS data link layer, and DOCSIS physical layer, and in the mode based on Layer 2 bridging, the MSO cable modem unit supports the processing of DOCSIS data link layer and DOCSIS physical layer; and
the wired service processing unit is used for processing data packets or frames transferred from the MSO cable modem unit and then transferring the processed data packets or frames to the managed IP network in the MSO network through wired cables, processing data packets or frames transferred from the managed IP network in the MSO network through wired cables and then transferring the processed data packets or frames to the MSO cable modem unit, wherein in the mode based on Layer 3 routing, the wired service processing unit performs processing of wired data link layer and provides a wired cable interface as an uplink interface to access the managed IP network, and in the mode based on Layer 2 bridging, the wired service processing unit performs the processing of wired data link layer and IP layer forwarding and provides a wired cable interface as an uplink interface to access the managed IP network.

7. The system for interconnecting a broadband wireless network with a wired network according to claim 6, wherein the CMTS further comprises an MSO remote power supply unit, for converting mains input or direct current (DC) input into a high-voltage DC, and then outputting the high-voltage DC to the base station equipment through wired cables including twisted pairs, so as to remotely supply power to the base station equipment.

8. The system for interconnecting a broadband wireless network with a wired network according to claim 2, wherein when the interface for being interconnected with the CMTS-NSI is provided at the equipment in the BWA network, the system further comprises:
the base station equipment, serving as an equipment in the BWA network, for being interconnected with the MSO network at the reference point CMTS-NSI through at least one pair of wired cables to implement the access services of wireless subscribers, processing data packets or frames of the accessed wireless subscribers and then transferring the processed data packets or frames to the managed IP network in the MSO network, and processing data packets or frames transferred from the managed IP network and then transferring the processed data packets or frames to the wireless subscribers.

9. The system for interconnecting a broadband wireless network with a wired network according to claim 8, wherein the base station equipment comprises a base station wireless processing unit and a base station wired service processing unit, wherein
the base station wireless processing unit is used for implementing the access services of wireless subscribers, transferring data packets or frames of the accessed wireless subscribers to the base station wired service processing unit, and transferring data packets or frames transferred from the base station wired service processing unit to the wireless subscribers; and
the base station wired service processing unit is used for being interconnected with the MSO network at the reference point CMTS-NSI through wired cables, and transferring information required to be exchanged between the base station wireless processing unit and the managed IP network in the MSO network, wherein in the mode based on Layer 3 routing, the base station wired service processing unit performs the processing of wired data link layer and provides a wired cable interface as an uplink interface to access the managed IP network, and in the mode based on Layer 2 bridging, the base station wired service processing unit performs the processing of wired data link layer and IP layer forwarding and provides a wired cable interface as an uplink interface to access the managed IP network.

10. The system for interconnecting a broadband wireless network with a wired network according to claim 9, wherein the base station equipment further comprises a switching unit, for switching data packets or frames between each base station wireless processing unit and each base station wired service processing unit, wherein in the mode based on Layer 3 routing, the switching unit is an IP switching unit, and in the mode based on Layer 2 bridging, the switching unit is a Layer 2 switching unit.

11. The system for interconnecting a broadband wireless network with a wired network according to claim 1, wherein when the wired network is the DSL network, the system further comprises:
the interface, provided at an equipment in the BWA network, used for communicating with a DSL access multiplexer and used for implementing an interconnection between the BWA network and the wired network at a reference point U between a DSL modem and the DSL access multiplexer in the DSL network, and used for transmitting information required to be transferred between the BWA network and the wired network through the reference point U;
alternatively,
the interface, provided at an equipment in the BWA network, for communicating with the DSL access multiplexer in the DSL network and used for implementing an interconnection between the BWA network and the wired network at a reference point V between the DSL access multiplexer and a broadband access edge equipment in the DSL network, and used for transmitting information required to be transferred between the BWA network and the wired network through the reference point V.

12. The system for interconnecting a broadband wireless network with a wired network according to claim 11, wherein when the interface for communicating with the DSL modem is provided at the equipment in the BWA network, the system comprises the base station equipment and a digital subscriber line access multiplexer (DSLAM) equipment interconnected with each other, wherein:
the base station equipment is used for being interconnected with the DSL network at a reference point U through wired cables to implement the access services of wireless subscribers, and transferring information required to be exchanged between the accessed wireless subscribers and the DSLAM equipment in the DSL network; and
the DSLAM equipment is used for being interconnected with the base station equipment at the reference point U through wired cables, and transmitting information required to be exchanged between the base station equipment and the broadband access edge equipment in the DSL network.

13. The system for interconnecting a broadband wireless network with a wired network according to claim 12, wherein the base station equipment comprises the base station wireless processing unit and a base station equipment DSL modem unit, wherein:
the base station wireless processing unit is used for implementing the access services of wireless subscribers, transferring data packets or frames of the accessed wireless subscribers to the base station equipment DSL modem unit, and transferring data packets or frames transferred from the base station equipment DSL modem unit to the wireless subscribers; and
the base station equipment DSL modem unit is used for being interconnected with the DSL network at the reference point U through at least one pair of twisted pairs, performing modulation on data packets or frames transferred from the base station wireless processing unit and then transferring the modulated data packets or frames to the DSLAM equipment in the DSL network, and performing demodulation on data packets or frames transferred from the DSLAM equipment and then transferring the demodulated data packets or frames to the base station wireless processing unit, wherein in an IP-based mode in a path from terminal equipment (TE) to service provider (SP), the base station equipment DSL modem unit supports the processing of IP layer, Ethernet medium access control (MAC) layer, and DSL physical layer; and in a Point-to-Point Protocol over Ethernet (PPPoETH) mode and an Internet Protocol over Ethernet (IPoETH) mode, the base station equipment DSL modem unit supports the processing of Ethernet MAC layer and DSL physical layer.

14. The system for interconnecting a broadband wireless network with a wired network according to claim 13, wherein the base station equipment further comprises a switching unit, for exchanging data packets or frames between each base station wireless processing unit and each DSL modem, wherein in the IP-based mode in the TE to SP path, the switching unit is an IP switching unit; and in the PPPoETH mode and the IPoETH mode, the switching unit is an Ethernet switching unit.

15. The system for interconnecting a broadband wireless network with a wired network according to claim 12, wherein the DSLAM equipment comprises a DSL modem unit and an Ethernet service processing unit, wherein:
the DSL modem unit is used for being interconnected with the base station equipment at the reference point U through at least one pair of twisted pairs, performing modulation on data packets or frames transferred from the Ethernet service processing unit and then transferring the modulated data packets or frames to the base station equipment, and performing demodulation on data packets or frames transferred from the base station equipment and then transferring the demodulated data packets or frames to the Ethernet service processing unit, wherein in the IP-based mode in the TE to SP path, the DSL modem unit supports the processing of IP layer, Ethernet MAC layer, and DLS physical layer, and in the PPPoETH mode and IPoETH mode, the DSL modem unit supports the processing of Ethernet MAC layer and DSL physical layer; and
the Ethernet service processing unit is used for processing data packets or frames transferred from the DSL modem unit and then transferring the processed data packets or frames to the broadband access edge equipment in the DSL network, and processing data packets or frames transferred from the broadband access edge equipment in the DSL network and then transferring the processed data packets or frames to the DSL modem unit, wherein in the IP-based mode in the TE to SP path, the Ethernet service processing unit performs the processing of Ethernet MAC layer and provides an Ethernet cable interface as an uplink interface/cascade interface to interconnect with the broadband access edge equipment; and in the PPPoETH mode and IPoETH mode, the Ethernet service processing unit performs the processing of Ethernet MAC layer and IP layer forwarding and provides an Ethernet cable interface as an uplink interface/cascade interface to interconnect with the broadband access edge equipment.

16. The system for interconnecting a broadband wireless network with a wired network according to claim 11, wherein when the interface for communicating with the DSL access multiplexer in the DSL network is provided at the equipment in the BWA network, the system comprises a base station transceiver equipment and the DSLAM equipment, wherein:
the base station transceiver equipment is used for being interconnected with the DSL network at the reference point U through wired cables to implement the access services of wireless subscribers, and transferring information required to be exchanged between the accessed wireless subscribers and the DSLAM equipment; and
the DSLAM equipment is used for being interconnected with the base station transceiver equipment at the reference point U through wired cables, and transferring information required to be exchanged between the base station transceiver equipment and an access network edge equipment in the DSL network.

17. The system for interconnecting a broadband wireless network with a wired network according to claim 16, wherein the base station transceiver equipment comprises the base station wireless processing unit and a base station transceiver DSL modem unit, wherein:
the base station wireless processing unit is used for implementing the access services of wireless subscribers, transferring data packets or frames of the accessed wireless subscribers to the base station transceiver DSL modem unit, and transferring data packets or frames transferred from the base station transceiver DSL modem unit to the wireless subscribers; and
the base station transceiver DSL modem unit is used for being interconnected with the DSL network at the reference point U through at least one pair of twisted pairs, performing modulation on data packets or frames transferred from the base station wireless processing unit and then transferring the modulated data packets or frames to the DSLAM equipment in the DSL network, and performing demodulation on data packets or frames transferred from the DSLAM equipment and then transferring the demodulated data packets or frames to the base station wireless processing unit, wherein in the IP-based mode in the TE to SP path, the base station transceiver DSL modem unit supports the processing of IP layer, Ethernet MAC layer, and DSL physical layer; and in the PPPoETH mode and IPoETH mode, the base station transceiver DSL modem unit supports the processing of Ethernet MAC layer and DSL physical layer.

18. The system for interconnecting a broadband wireless network with a wired network according to claim 17, wherein the base station transceiver equipment further comprises a switching unit, for exchanging data packets or frames between each base station wireless processing unit and each DSL modem, wherein in the IP-based mode in the TE to SP path, the switching unit is an IP switching unit; and in the PPPoETH mode and IPoETH mode, the switching unit is an Ethernet switching unit.

19. The system for interconnecting a broadband wireless network with a wired network according to claim 16, wherein the DSLAM equipment comprises the DSL modem unit and the Ethernet service processing unit, wherein:
the DSL modem unit is used for being interconnected with the base station transceiver equipment at the reference point U through at least one pair of twisted pairs, performing modulation on data packets or frames transferred from the Ethernet service processing unit and then transferring the modulated data packets or frames to the base station transceiver equipment, and performing demodulation on data packets or frames transferred from the base station transceiver equipment and then transferring the demodulated data packets or frames to the Ethernet service processing unit, wherein in the IP-based mode in the TE to SP path, the DSL modem unit supports the processing of IP layer, Ethernet MAC layer, and DSL physical layer, and in the PPPoETH mode and IPoETH mode, the DSL modem unit supports the processing of Ethernet MAC layer and DSL physical layer; and
the Ethernet service processing unit is used for processing data packets or frames transferred from the DSL modem unit and then transferring the processed data packets or frames to a network element formed by the broadband access edge equipment in the DSL network and a base station controller (BSC), and processing data packets or frames transferred from the network element formed by the broadband access edge equipment in the DSL network and the BSC and then transferring the processed data packets or frames to the DSL modem unit, wherein in the IP-based mode in the TE to SP path, the Ethernet service processing unit performs the processing of Ethernet MAC layer and provides an Ethernet cable interface as an uplink interface/cascade interface to connect with the network element formed by the broadband access edge equipment and the BSC; and in the PPPoETH mode and IPoETH mode, the Ethernet service processing unit performs the processing of Ethernet MAC layer and IP layer forwarding and provides an Ethernet cable interface as an uplink interface/cascade interface to connect with the network element formed by the broadband access edge equipment and the BSC.

20. The system for interconnecting a broadband wireless network with a wired network according to claim 6, 8, 15, or 19, further comprising a remote power supply equipment, for converting mains input or DC input into a high-voltage DC, and then outputting the high-voltage DC to the base station equipment through wired cables including twisted pairs, so as to remotely supply power to the base station.

21. The system for interconnecting a broadband wireless network with a wired network according to claim 20, wherein the base station transceiver equipment further comprises a base station remote power supply unit or a base station transceiver remote power supply unit, for converting the high-voltage DC transferred from the remote power supply equipment or the DSL remote power supply unit of the DSLAM equipment into a low-voltage DC, so as to locally supply power to the base station or the base station transceiver equipment, or relaying the received high-voltage DC to remotely supply power to remote base stations or base station transceiver equipments in the next tier through wired cables; alternatively, when the wired network is the DSL network, the DSLAM equipment further comprises the DSL remote power supply unit for converting mains input or DC input into the high-voltage DC, and then outputting the high-voltage DC to the base station or the base station transceiver equipment through wired cables including twisted pairs, so as to remotely supply power to the base station or the base station transceiver equipment.

22. The system for interconnecting a broadband wireless network with a wired network according to claim 16, wherein the base station transceiver equipment is communicated with the BSC, and the BSC is set in the broadband access edge equipment in the DSL network.

23. The system for interconnecting a broadband wireless network with a wired network according to claim 1, wherein when the wired network comprises the MSO network and the DSL network, the system further comprises:
the interface, provided at the BWA network, for communicating with a cable modem of the MSO network and used for being interconnected with the MSO network through the CMRFI, wherein an interconnection between the MSO network and the DSL network is implemented at the reference point V through the CMTS;
alternatively,
the interface, provided at the BWA network, for communicating with the reference point V in the DSL network and used for being interconnected with the DSL network at the reference point V, wherein an interconnection between the MSO network and the DSL network is also implemented at the reference point V, so as to transmit information required to be transferred between the BWA network and each wired network through the reference point V.

24. The system for interconnecting a broadband wireless network with a wired network according to claim 23, wherein when the interface for communicating with the cable modem of the MSO network is provided at the BWA network, the system comprises the base station equipment and a cable modem equipment interconnected with each other, wherein:
the base station equipment is used for being connected with the cable modem equipment through wired cables to implement the access services of wireless subscribers, transferring data packets or frames of the accessed wireless subscribers to the cable modem equipment, and transferring data packets or frames transferred from the cable modem equipment to the wireless subscribers; and
the cable modem equipment is used for being connected with the base station equipment through wired cables and connected with the CMTS of the MSO network at the reference point CMRFI through wired cables, so as to transfer information required to be exchanged between the base station equipment and the CMTS.

25. The system for interconnecting a broadband wireless network with a wired network according to claim 24, wherein the base station equipment comprises the base station wireless processing unit and the base station wired service processing unit, wherein:
the base station wireless processing unit is used for implementing the access services of wireless subscribers, transferring data packets or frames of the accessed wireless subscribers to the base station wired service processing unit, and transferring data packets or frames transferred from the base station wired service processing unit to the wireless subscribers, wherein the base station wireless processing unit comprises one or more processing units; and
the base station wired service processing unit is used for being connected with the cable modem equipment through at least one pair of wired cables, processing data packets or frames transferred from the base station wireless processing unit and then transferring the processed data packets or frames to the cable modem equipment, and processing data packets or frames transferred from the cable modem equipment and then transferring the processed data packets or frames to the base station wireless processing unit, wherein in the mode based on Layer 3 routing, the base station wired service processing unit supports the processing of IP layer, data link layer, and physical layer, and in the mode based on Layer 2 bridging, the base station wired service processing unit supports the processing of data link layer and physical layer.

26. The system for interconnecting a broadband wireless network with a wired network according to claim 25, wherein the base station wired service processing unit comprises:
a base station Ethernet service processing unit, for being connected with the cable modem equipment through at least one pair of Ethernet wired cables, processing data packets or frames transferred from the base station wireless processing unit and then transferring the processed data packets or frames to the cable modem equipment, and processing data packets or frames transferred from the cable modem equipment and then transferring the processed data packets or frames to the base station wireless processing unit, wherein in the mode based on Layer 3 routing, the base station Ethernet service processing unit supports the processing of IP layer, Ethernet data link layer, and Ethernet physical layer, and in the mode based on Layer 2 bridging, the base station Ethernet service processing unit supports the processing of Ethernet data link layer and Ethernet physical layer.

27. The system for interconnecting a broadband wireless network with a wired network according to claim 4, 7, 12, 16, or 24, further comprising the remote power supply equipment, for converting mains input or DC input into a high-voltage DC, and then outputting the high-voltage DC to the cable modem equipment and/or base station equipment through wired cables including twisted pairs, so as to remotely supply power to the cable modem equipment and/or base station equipment.

28. The system for interconnecting a broadband wireless network with a wired network according to claim 27, wherein the base station equipment further comprises the base station remote power supply unit, when the base station equipment does not receive the power supplied from the remote power supply equipment, the base station remote power supply unit is used for converting mains input or DC input into a high-voltage DC and then outputting the high-voltage DC to the cable modem equipment through wired cables including twisted pairs to remotely supply power to the cable modem equipment; and
when the base station equipment receives the power supplied from the remote power supply equipment, the base station remote power supply unit is used for converting the high-voltage DC transferred from the remote power supply equipment into a low-voltage DC to locally supply power to the base station equipment, or relaying the received high-voltage DC to remotely supply power to remote base station equipments in the next tier through wired cables.

29. The system for interconnecting a broadband wireless network with a wired network according to claim 24, wherein the cable modem equipment comprises a cable modem wired service processing unit and a cable modem unit, wherein:
the cable modem wired service processing unit is used for being connected with the base station equipment through at least one pair of wired cables, processing data packets or frames transferred from the base station equipment and then transferring the processed data packets or frames to the cable modem unit, and processing data packets or frames transferred from the cable modem unit and then transferring the processed data packets or frames to the base station equipment, wherein in the mode based on Layer 3 routing, the cable modem wired service processing unit supports the processing of IP layer, data link layer, and physical layer, and in the mode based on Layer 2 bridging, the cable modem wired service processing unit supports the processing of data link layer and physical layer; and
the cable modem unit comprises at least one cable modem, and is used for being interconnected with the CMTS of the MSO network at the reference point CMRFI through at least one pair of coaxial cables, performing DOCSIS modulation on data packets or frames transferred from the cable modem wired service processing unit and then transferring the modulated data packets or frames to the CMTS, and performing DOCSIS demodulation on data packets or frames transferred from the CMTS and then transferring the demodulated data packets or frames to the cable modem wired service processing unit.

30. The system for interconnecting a broadband wireless network with a wired network according to claim 29, wherein the cable modem wired service processing unit comprises:
a cable modem Ethernet service processing unit, for being connected with the base station equipment through at least one pair of Ethernet wired cables, processing data packets or frames transferred from the base station equipment and then transferring the processed data packets or frames to the cable modem unit, and processing data packets or frames transferred from the cable modem unit and then transferring the processed data packets or frames to the base station equipment, wherein in the mode based on Layer 3 routing, the cable modem Ethernet service processing unit supports the processing of IP layer, Ethernet data link layer, and Ethernet physical layer, and in the mode based on Layer 2 bridging, the cable modem Ethernet service processing unit supports the processing of Ethernet data link layer and Ethernet physical layer.

31. The system for interconnecting a broadband wireless network with a wired network according to claim 6 or 29, wherein the cable modem equipment further comprises:
a cable modem remote power supply unit, for converting the high-voltage DC transferred from the remote power supply equipment or the high-voltage DC simultaneously transferred from both the remote power supply equipment and the base station remote power supply unit of the base station equipment into a low-voltage DC, so as to locally supply power to a power supply unit of the cable modem equipment, or relaying the received high-voltage DC, so as to remotely supply power to remote cable modem equipments in the next tier through wired cables.

32. The system for interconnecting a broadband wireless network with a wired network according to claim 23, wherein when transmitting information required to be transferred between the BWA network and each wired network through the reference point V, the system further comprises:
the BWA network, for being interconnected with the DSL network at the reference point V through a base station, wherein the MSO network is interconnected with the DSL network at the reference point V through the CMTS; and
a broadband remote access server (BRAS) of the DSL network, further provided with a switching function unit for supporting intercommunications among subscribers of the BWA network, DSL network, and CMTS network.

33. The system for interconnecting a broadband wireless network with a wired network according to claim 32, wherein
if the mode based on Layer 2 bridging is adopted at the reference point V, in the TE to SP path, a Layer 2 bridging is employed between the BRAS and the TE, 802.16-2004 Layer 2 wireless access is employed between a base station and a subscriber station, and 802.16 security sub-layer Private Key Management (PKM) security architecture is employed between the base station and the subscriber station in terms of security of the mode;
alternatively,
if the mode based on Layer 2 bridging is adopted at the reference point V, in the TE to SP path, the Layer 2 bridging is employed between the broadband access edge equipment and the TE, the 802.16-2004 Layer 2 wireless access is employed between the base station and the subscriber station, PPP over Ethernet is supported between the broadband access edge equipment and the TE as a link protocol and as a mechanism for address allocation and authentification, and for controlling and managing the terminal configuration and connection;
alternatively,
if the mode based on Layer 2 bridging is adopted at the reference point V, in a customer premises equipment (CPE) to SP path, the Layer 2 bridging is employed between the broadband access edge equipment and the CPE, a DOCSIS (hybrid fiber coaxial (HFC) access network) Layer 2 wired access is employed between the CMTS and the cable modem, and a DOCSIS security sub-layer security architecture is employed between the CMTS and the cable modem in terms of security of the mode;
alternatively,
if the mode based on Layer 2 bridging is adopted at the reference point V, in the CPE to SP path, the Layer 2 bridging is employed between the broadband access edge equipment and the CPE, the DOCSIS Layer 2 wired access is employed between the CMTS and the cable modem, the PPP over Ethernet is supported between the broadband access edge equipment and the CPE as a link protocol and as a mechanism for address allocation and authentification, and for controlling and managing the terminal configuration and connection;
alternatively,
if the mode based on Layer 3 routing is adopted at the reference point V, in the TE to SP path, a Layer 3 routing is employed between the broadband access edge equipment and the TE, an accessing manner over the 802.16-2004 Layer 2 wireless access is employed on the IP layer between the base station and the subscriber station, and the 802.16 security sub-layer PKM security architecture is employed between the base station and the subscriber station in terms of security of the mode;
alternatively,
if the mode based on Layer 3 routing is adopted at the reference point V, in the CPE to SP path, the Layer 3 routing is employed between the broadband access edge equipment and the CPE, the accessing manner over the DOCSIS Layer 2 wired access is employed on the IP layer between the CMTS and the cable modem, and the DOCSIS security sub-layer security architecture is employed between the CMTS and the cable modem in terms of security of the mode.

34. The system for interconnecting a broadband wireless network with a wired network according to claim 32, further comprising:
the broadband access edge equipment of the DSL network, provided with a switching function unit for supporting intercommunications among subscribers of 802.16e-based WiMAX network, DSL network, and MSO network; and
the 802.16e-based WiMAX network, interconnected with the DSL network at the reference point V through an access service network, wherein the MSO network is interconnected with the DSL network at the reference point V through the CMTS.

35. The system for interconnecting a broadband wireless network with a wired network according to claim 34, wherein
if the mode based on Layer 2 bridging is adopted at the reference point V, in the TE to SP path, the Layer 2 bridging is employed between the broadband access edge equipment and the TE, 802.16e Layer 2 wireless access is employed between an access service network (ASN) and a mobile subscriber station (MS), and the DOCSIS (HFC access network) security sub-layer security architecture is employed between the ASN and the CMTS in terms of security of the mode;
alternatively,
if the mode based on Layer 2 bridging is adopted at the reference point V, in the TE to SP path, the Layer 2 bridging is employed between the broadband access edge equipment and the TE, the 802.16e Layer 2 wireless access is employed between the base station and the subscriber station, the PPP over Ethernet is supported between the broadband access edge equipment and the TE as a link protocol and as a mechanism for address allocation and authentification, and for controlling and managing the terminal configuration and connection, and the mode employs radio resource management, load balance, and security attribute of 802.16e;
alternatively,
if the mode based on Layer 2 bridging is adopted at the reference point V, in the CPE to SP path, the Layer 2 bridging is employed between the broadband access edge equipment and the CPE, the DOCSIS Layer 2 wired access is employed between the CMTS and the cable modem, and the PPP over Ethernet is supported between the broadband access edge equipment and the CPE as a link protocol and as a mechanism for address allocation and authentification, for controlling and managing the terminal configuration and connection;
alternatively,
if the mode based on Layer 3 routing is adopted at the reference point V, in the TE to SP path, the Layer 3 routing is employed between the broadband access edge equipment and the TE, an accessing manner over 802.16e Layer 2 wireless access is employed on the IP layer between the ASN and the MS, and the DOCSIS security sub-layer security architecture is employed between the ASN and the CMTS in terms of security of the mode;
alternatively,
if the mode based on Layer 3 routing is adopted at the reference point V, in an MS to SP path, the Layer 3 routing is employed between the broadband access edge equipment and the MS, the accessing manner over 802.16e Layer 2 wireless access is employed on the IP layer between the ASN and the MS, and the DOCSIS security sub-layer security architecture is employed between the ASN and the CMTS in terms of security of the mode;
alternatively,
if the mode based on Layer 3 routing is adopted at the reference point V, in the CPE to SP path, the Layer 3 routing is employed between the broadband access edge equipment and the CPE, the accessing manner over the DOCSIS Layer 2 wired access is employed on the IP layer between the CMTS and the cable modem, and the DOCSIS security sub-layer security architecture is employed between the CMTS and the cable modem in terms of security of the mode.

36. The system for interconnecting a broadband wireless network with a wired network according to claim 35, wherein in the mode based on Layer 2 bridging, in the CPE to SP path, the Layer 2 bridging is employed between the broadband access edge equipment and the CPE, the DOCSIS Layer 2 wired access is employed between the CMTS and the cable modem, and the DOCSIS security sub-layer security architecture is employed between the CMTS and the cable modem in terms of security of the mode.

37. The system for interconnecting a broadband wireless network with a wired network according to claim 33 or 35, wherein the 802.16e or 802.16-2004 Layer 2 wireless access supports an Ethernet Convergence Sub-layer (ETH CS) at an airlink.

38. The system for interconnecting a broadband wireless network with a wired network according to claim 33 or 35, wherein in the mode based on Layer 2 bridging, a tunneling protocol is employed between the broadband access edge equipment and the SP, and the tunneling protocol comprises Layer 2 Tunneling Protocol (L2TP) or Multi-Protocol Label Switching (MPLS) Tunneling Protocol.

39. A method for interconnecting a broadband wireless network with a wired network, applicable for a system including a broadband wireless network and a wired network, wherein the broadband wireless network is 802.16-2004-based Worldwide Interoperability for Microwave Access (WiMAX) network or 802.16e-based WiMAX network; the wired network is a multi-service operator (MSO) network and/or a digital subscriber line (DSL) network; the method comprising:
transmitting information required to be transferred between a broadband wireless access (BWA) network and the wired network via a reference point or an interface selected in the wired network through an interface for intercommunicating the broadband wireless network with the wired network, so as to exchange information between the broadband wireless network and the wired network, wherein the interface for intercommunicating the broadband wireless network with the wired network is an interface for implementing an intercommunication between the BWA network and the MSO network and/or DSL network.

40. The method for interconnecting a broadband wireless network with a wired network according to claim 39, comprising:
transmitting the information required to be transferred between the BWA network and the MSO network by the BWA network through a cable modem to radio frequency interface (CMRFI) or a cable modem termination system-network side interface (CMTS-NSI) on the MSO network.

41. The method for interconnecting a broadband wireless network with a wired network according to claim 40, wherein when the BWA network is interconnected through the reference point CMRFI, the method further comprises:
transferring information required to be exchanged between a wireless network and a wired network through a base station equipment and a cable modem termination system (CMTS) interconnected thereto.

42. The method for interconnecting a broadband wireless network with a wired network according to claim 41, wherein operations in the base station equipment comprise:
transferring data packets or frames of accessed wireless subscribers to a base station cable modem unit by a base station wireless processing unit, and transferring data packets or frames transferred from the base station cable modem unit to the wireless subscribers; and
performing DOCSIS modulation on data packets or frames transferred from the base station wireless processing unit by the base station cable modem unit and then transferring the modulated data packets or frames to the CMTS of the MSO network, and performing DOCSIS demodulation on data packets or frames transferred from the CMTS and then transferring the demodulated data packets or frames to the base station wireless processing unit, wherein in the mode based on Layer 3 routing, the base station cable modem unit supports processing of IP layer, DOCSIS data link layer, and DOCSIS physical layer, and in the mode based on Layer 2 bridging, the base station cable modem unit supports processing of DOCSIS data link layer and DOCSIS physical layer.

43. The method for interconnecting a broadband wireless network with a wired network according to claim 41, wherein operations in the CMTS comprise:
performing DOCSIS modulation on data packets or frames transferred from a wired service processing unit by an MSO cable modem unit and then transferring the modulated data packets or frames to the base station equipment, and performing DOCSIS demodulation on data packets or frames transferred from the base station equipment and then transferring the demodulated data packets or frames to the wired service processing unit, wherein in the mode based on Layer 3 routing, the MSO cable modem unit supports the processing of IP layer, DOCSIS data link layer, and DOCSIS physical layer, and in the mode based on Layer 2 bridging, the MSO cable modem unit supports the processing of DOCSIS data link layer and DOCSIS physical layer; and
processing data packets or frames transferred from the MSO cable modem unit by the wired service processing unit and then transferring the processed data packets or frames to a managed IP network of the MSO network through wired cables, and processing data packets or frames transferred from the managed IP network of the MSO network through wired cables and then transferring the processed data packets or frames to the MSO cable modem unit, wherein in the mode based on Layer 3 routing, the wired service processing unit performs the processing of wired data link layer and provides a wired cable interface as an uplink interface to access the managed IP network, and in the mode based on Layer 2 bridging, the wired service processing unit performs the processing of wired data link layer and IP layer forwarding and provides a wired cable interface as an uplink interface to access the managed IP network.

44. The method for interconnecting a broadband wireless network with a wired network according to claim 40, wherein when the BWA network is interconnected at the reference point CMTS-NSI, the method further comprises:
processing data packets or frames of the accessed wireless subscribers by the base station equipment and then transferring the processed data packets or frames to the managed IP network of the MSO network, and processing data packets or frames transferred from the managed IP network and then transferring the processed data packets or frames to the wireless subscribers.

45. The method for interconnecting a broadband wireless network with a wired network according to claim 44, wherein operations in the base station equipment comprise:
transferring data packets or frames transferred from the accessed wireless subscribers to the base station wired service processing unit by the base station wireless processing unit, and transferring data packets or frames transferred from the base station wired service processing unit to the wireless subscribers; and
transferring information required to be exchanged between the base station wired service processing unit and the managed IP network of the MSO network, wherein in the mode based on Layer 3 routing, the base station wired service processing unit performs the processing of wired data link layer and provides a wired cable interface as an uplink interface to access the managed IP network, and in the mode based on Layer 2 bridging, the base station wired service processing unit performs the processing of wired data link layer and IP layer forwarding and provides a wired cable interface as an uplink interface to access the managed IP network.

46. The method for interconnecting a broadband wireless network with a wired network according to claim 39, wherein when the wired network is the DSL network, the method comprises:
transmitting information required to be exchanged between the BWA network and the wired network by the BWA network through a reference point U between a DSL modem and a DSL access multiplexer in the DSL network or through a reference point V between the DSL access multiplexer and a broadband access edge equipment.

47. The method for interconnecting a broadband wireless network with a wired network according to claim 46, wherein when the BWA network is interconnected through the reference point U, the method comprises:
transferring information required to be exchanged between the wireless subscribers and a digital subscriber line access multiplexer (DSLAM) equipment of the DSL network by the base station equipment, and transferring information required to be exchanged between the base station equipment and the broadband access edge equipment of the DSL network by the DSLAM equipment.

48. The method for interconnecting a broadband wireless network with a wired network according to claim 47, wherein operations in the base station equipment comprise:
transferring data packets or frames of the accessed wireless subscribers to the base station equipment DSL modem unit by the base station wireless processing unit, and transferring data packets or frames transferred from the base station equipment DSL modem unit to the wireless subscribers; and
performing modulation on data packets or frames transferred from the base station wireless processing unit by the base station equipment DSL modem unit and then transferring the modulated data packets or frames to the DSLAM equipment of the DSL network, and performing demodulation on data packets or frames transferred from the DSLAM equipment and then transferring the demodulated data packets or frames to the base station wireless processing unit, wherein in an IP-based mode in a path from terminal equipment (TE) to service provider (SP), the base station equipment DSL modem unit supports the processing of IP layer, Ethernet medium access control (MAC) layer, and DSL physical layer, and in a Point-to-Point Protocol over Ethernet (PPPoETH) mode and an Internet Protocol over Ethernet (IPoETH) mode, the base station equipment DSL modem unit supports the processing of Ethernet MAC layer and DSL physical layer.

49. The method for interconnecting a broadband wireless network with a wired network according to claim 47, wherein operations in the DSLAM equipment comprise:
performing modulation on data packets or frames transferred from an Ethernet service processing unit by the DSL modem unit and then transferring the modulated data packets or frames to the base station equipment, and performing demodulation on data packets or frames transferred from the base station equipment and then transferring the demodulated data packets or frames to the Ethernet service processing unit, wherein in the IP-based mode in the TE to SP path, the DSL modem unit supports the processing of IP layer, Ethernet MAC layer, and DLS physical layer, and in the PPPoETH mode and the IPoETH mode, the DSL modem unit supports the processing of Ethernet MAC layer and DSL physical layer; and
processing data packets or frames transferred from the DSL modem unit by the Ethernet service processing unit and then transferring the processed data packets or frames to the broadband access edge equipment of the DSL network, and processing data packets or frames transferred from the broadband access edge equipment of the DSL network and then transferring the processed data packets or frames to the DSL modem unit, wherein in the IP-based mode in the TE to SP path, the Ethernet service processing unit performs the processing of Ethernet MAC layer and provides an Ethernet cable interface as an uplink interface/cascade interface to connect with the broadband access edge equipment, and in the PPPoETH mode and the IPoETH mode, the Ethernet service processing unit performs the processing of Ethernet MAC layer and IP layer forwarding and provides an Ethernet cable interface as an uplink interface/cascade interface to connect with the broadband access edge equipment.

50. The method for interconnecting a broadband wireless network with a wired network according to claim 46, wherein when the BWA network is interconnected through the reference point U, the method comprises:
transferring information required to be exchanged between the wireless subscribers and the DSLAM equipment by a base station transceiver equipment, and transferring information required to be exchanged between the base station transceiver equipment and an access network edge equipment of the DSL network by the DSLAM equipment.

51. The method for interconnecting a broadband wireless network with a wired network according to claim 50, wherein operations in the base station transceiver equipment comprise:
transferring data packets or frames of the accessed wireless subscribers to the base station transceiver DSL modem unit by the base station wireless processing unit, and transferring data packets or frames transferred from the base station transceiver DSL modem unit to the wireless subscribers; and
performing modulation on data packets or frames transferred from the base station wireless processing unit by the base station transceiver DSL modem unit and then transferring the modulated data packets or frames to the DSLAM equipment of the DSL network, and performing demodulation on data packets or frames transferred from the DSLAM equipment and then transferring the demodulated data packets or frames to the base station wireless processing unit, wherein in the IP-based mode in the TE to SP path, the base station transceiver DSL modem unit supports the processing of IP layer, Ethernet MAC layer, and DSL physical layer, and in the PPPoETH mode and the IPoETH mode, the base station transceiver DSL modem unit supports the processing of Ethernet MAC layer and DSL physical layer.

52. The method for interconnecting a broadband wireless network with a wired network according to claim 50, wherein operations in the DSLAM equipment comprise:
performing modulation on data packets or frames transferred from the Ethernet service processing unit by the DSL modem unit and then transferring the modulated data packets or frames to the base station transceiver equipment, and performing demodulation on data packets or frames transferred from the base station transceiver equipment and then transferring the demodulated data packets or frames to the Ethernet service processing unit, wherein in the IP-based mode in the TE to SP path, the DSL modem unit supports the processing of IP layer, Ethernet MAC layer, and DSL physical layer, and in the PPPoETH mode and the IPoETH mode, the DSL modem unit supports the processing of Ethernet MAC layer and DSL physical layer; and
processing data packets or frames transferred from the DSL modem unit by the Ethernet service processing unit and then transferring the processed data packets or frames to a network element formed by the broadband access edge equipment of the DSL network and a base station controller (BSC), and processing data packets or frames transferred from the network element formed by the broadband access edge equipment of the DSL network and the BSC and then transferring the processed data packets or frames to the DSL modem unit, wherein in the IP-based mode in the TE to SP path, the Ethernet service processing unit performs the processing of Ethernet MAC layer and provides an Ethernet cable interface as an uplink interface/cascade interface to connect with the network element formed by the broadband access edge equipment and the BSC, and in the PPPoETH mode and the IPoETH mode, the Ethernet service processing unit performs the processing of Ethernet MAC layer and IP layer forwarding and provides an Ethernet cable interface as an uplink interface/cascade interface to connect with the network element formed by the broadband access edge equipment and the BSC.

53. The method for interconnecting a broadband wireless network with a wired network according to claim 39, wherein when the wired network comprises the MSO network and the DSL network, the method comprises:
exchanging information between the BWA network and the MSO network through the reference point CMRFI, and exchanging information between the MSO network and the DSL network through the reference point V;
alternatively,
exchanging information between the BWA network and the DSL network through the reference point V, and exchanging information between the MSO network and the DSL network through the reference point V.

54. The method for interconnecting a broadband wireless network with a wired network according to claim 53, wherein the process of exchanging information between the BWA network and the MSO network comprises:
transferring data packets or frames of the accessed wireless subscribers to a cable modem equipment by the base station equipment, and transferring data packets or frames transferred from the cable modem equipment to the wireless subscribers; and
transferring information required to be exchanged between the base station equipment and the CMTS by the cable modem equipment.

55. The method for interconnecting a broadband wireless network with a wired network according to claim 54, wherein operations in the base station equipment comprise:
transferring data packets or frames of the accessed wireless subscribers to the base station wired service processing unit by the base station wireless processing unit, and transferring data packets or frames transferred from the base station wired service processing unit to the wireless subscribers; and
processing data packets or frames transferred from the base station wireless processing unit by the base station wired service processing unit and then transferring the processed data packets or frames to the cable modem equipment, and processing data packets or frames transferred from the cable modem equipment and then transferring the processed data packets or frames to the base station wireless processing unit; wherein in the mode based on Layer 3 routing, the base station wired service processing unit supports the processing of IP layer, data link layer, and physical layer, and in the mode based on Layer 2 bridging, the base station wired service processing unit supports the processing of data link layer and physical layer.

56. The method for interconnecting a broadband wireless network with a wired network according to claim 55, wherein operations in the base station wired service processing unit comprise:
processing data packets or frames transferred from the base station wireless processing unit by a base station Ethernet service processing unit and then transferring the processed data packets or frames to the cable modem equipment, and processing data packets or frames transferred from the cable modem equipment and then transferring the processed data packets or frames to the base station wireless processing unit; wherein in the mode based on Layer 3 routing, the base station Ethernet service processing unit supports the processing of IP layer, Ethernet data link layer, and Ethernet physical layer, and in the mode based on Layer 2 bridging, the base station Ethernet service processing unit supports the processing of Ethernet data link layer and Ethernet physical layer.

57. The method for interconnecting a broadband wireless network with a wired network according to claim 54, wherein operations in the cable modem equipment comprise:
processing data packets or frames transferred from the base station equipment by a cable modem wired service processing unit and then transferring the processed data packets or frames to the cable modem unit, and processing data packets or frames transferred from the cable modem unit and then transferring the processed data packets or frames to the base station equipment; wherein in the mode based on Layer 3 routing, the cable modem wired service processing unit supports the processing of IP layer, data link layer, and physical layer, and in the mode based on Layer 2 bridging, the cable modem wired service processing unit supports the processing of data link layer and physical layer; and
performing DOCSIS modulation on data packets or frames transferred from the cable modem wired service processing unit by the cable modem unit and then transferring the modulated data packets or frames to the CMTS, and performing DOCSIS demodulation on data packets or frames transferred from the CMTS and then transferring the demodulated data packets or frames to the cable modem wired service processing unit.

58. The method for interconnecting a broadband wireless network with a wired network according to claim 57, wherein operations in the cable modem wired service processing unit comprise:
processing data packets or frames transferred from the base station equipment by a cable modem Ethernet service processing unit and then transferring the processed data packets or frames to the cable modem unit, and processing data packets or frames transferred from the cable modem unit and then transferring the processed data packets or frames to the base station equipment; wherein in the mode based on Layer 3 routing, the cable modem Ethernet service processing unit supports the processing of IP layer, Ethernet data link layer, and Ethernet physical layer, and in the mode based on Layer 2 bridging, the cable modem Ethernet service processing unit supports the processing of Ethernet data link layer and Ethernet physical layer.

59. The method for interconnecting a broadband wireless network with a wired network according to claim 53, wherein when the BWA network is 802.16-2004, the method further comprises:
if the mode based on Layer 2 bridging is adopted at the reference point V, in the TE to SP path, employing a Layer 2 bridging between the broadband access edge equipment and the TE, employing 802.16-2004 Layer 2 wireless access between a base station and a subscriber station, and employing 802.16 security sub-layer PKM security architecture between the base station and the subscriber station in terms of security of the mode;
alternatively,
if the mode based on Layer 2 bridging is adopted at the reference point V, in the TE to SP path, employing the Layer 2 bridging between the broadband access edge equipment and the TE, employing the 802.16-2004 Layer 2 wireless access between the base station and the subscriber station, supporting point-to-point protocol (PPP) over Ethernet between the broadband access edge equipment and the TE as a link protocol and as a mechanism for address allocation and authentification, and for controlling and managing the terminal configuration and connection;
alternatively,
if the mode based on Layer 2 bridging is adopted at the reference point V, in a customer premises equipment (CPE) to SP path, employing the Layer 2 bridging between the broadband access edge equipment and the CPE, employing a DOCSIS (HFC access network) Layer 2 wired access between the CMTS and the cable modem, and employing a DOCSIS security sub-layer security architecture between the CMTS and the cable modem in terms of security of the mode;
alternatively,
if the mode based on Layer 2 bridging is adopted at the reference point V, in the CPE to SP path, employing the Layer 2 bridging between the broadband access edge equipment and the CPE, employing the DOCSIS Layer 2 wired access between the CMTS and the cable modem, supporting the PPP over Ethernet between the broadband access edge equipment and the CPE as a link protocol and as a mechanism for address allocation and authentification, and for controlling and managing the terminal configuration and connection;
alternatively,
if the mode based on Layer 3 routing is adopted at the reference point V, in the TE to SP path, employing the Layer 3 routing between the broadband access edge equipment and the TE, employing an accessing manner over the 802.16-2004 Layer 2 wireless access on the IP layer between the base station and the subscriber station, and employing the 802.16 security sub-layer PKM security architecture between the base station and the subscriber station in terms of security of the mode;
alternatively,
if the mode based on Layer 3 routing is adopted at the reference point V, in the CPE to SP path, employing the Layer 3 routing between the broadband access edge equipment and the CPE, employing the accessing manner over the DOCSIS Layer 2 wired access on the IP layer between the CMTS and the cable modem, and employing the DOCSIS security sub-layer security architecture between the CMTS and the cable modem in terms of security of the mode.

60. The method for interconnecting a broadband wireless network with a wired network according to claim 53, wherein when the BWA network is 802.16e, the method further comprises:
if the mode based on Layer 2 bridging is adopted at the reference point V, in the TE to SP path, employing the Layer 2 bridging between the broadband access edge equipment and the TE, employing the 802.16e Layer 2 wireless access between an access service network (ASN) and a mobile subscriber station (MS), and employing the DOCSIS (HFC access network) security sub-layer security architecture between the ASN and the CMTS in terms of security of the mode;
alternatively,
if the mode based on Layer 2 bridging is adopted at the reference point V, in the TE to SP path, employing the Layer 2 bridging between the broadband access edge equipment and the TE, employing the 802.16e Layer 2 wireless access between the base station and the subscriber station, supporting the PPP over Ethernet between the broadband access edge equipment and the TE as a link protocol and as a mechanism for address allocation and authentification, and for controlling and managing the terminal configuration and connection, wherein the mode employs radio resource management, load balance, and security attribute of 802.16e;
alternatively,
if the mode based on Layer 2 bridging is adopted at the reference point V, in the CPE to SP path, employing the Layer 2 bridging between the broadband access edge equipment and the CPE, employing the DOCSIS Layer 2 wired access between the CMTS and the cable modem, and supporting the PPP over Ethernet between the broadband access edge equipment and the CPE as a link protocol and as a mechanism for address allocation and authentification, and for controlling and managing the terminal configuration and connection;
alternatively,
if the mode based on Layer 3 routing is adopted at the reference point V, in the TE to SP path, employing the Layer 3 routing between the broadband access edge equipment and the TE, employing the accessing manner over 802.16e Layer 2 wireless access on the IP layer between the ASN and the MS, and employing the DOCSIS security sub-layer security architecture between the ASN and the CMTS in terms of security of the mode;
alternatively,
if the mode based on Layer 3 routing is adopted at the reference point V, in an MS to SP path, employing the Layer 3 routing between the broadband access edge equipment and the MS, employing the accessing manner over 802.16e Layer 2 wireless access on the IP layer between the ASN and the MS, and employing the DOCSIS security sub-layer security architecture between the ASN and the CMTS in terms of security of the mode;
alternatively,
if the mode based on Layer 3 routing is adopted at the reference point V, in the CPE to SP path, employing the Layer 3 routing between the broadband access edge equipment and the CPE, employing the accessing manner over the DOCSIS Layer 2 wired access on the IP layer between the CMTS and the cable modem, and employing the DOCSIS security sub-layer security architecture between the CMTS and the cable modem in terms of security of the mode.

61. The method for interconnecting a broadband wireless network with a wired network according to claim 60, wherein in the mode based on Layer 2 bridging, in the CPE to SP path, the Layer 2 bridging is employed between the broadband access edge equipment and the CPE, the DOCSIS Layer 2 wired access is employed between the CMTS and the cable modem, and the DOCSIS security sub-layer security architecture is employed between the CMTS and the cable modem in terms of security of the mode.

62. The method for interconnecting a broadband wireless network with a wired network according to claim 59 or 60, wherein the 802.16e or 802.16-2004 Layer 2 wireless access supports an Ethernet Convergence Sub-layer (ETH CS) at an airlink.

63. The method for interconnecting a broadband wireless network with a wired network according to claim 59 or 60, wherein in the mode based on Layer 2 bridging, a tunneling protocol is employed between the broadband access edge equipment and the SP, and the tunneling protocol comprises Layer 2 Tunneling Protocol (L2TP) or MPLS Tunneling Protocol.
